(19) Europäisches Patentamt
European Patent Office
Office européen des brevets

(11) **EP 2 641 122 B1**

(12) **EUROPÄISCHE PATENTSCHRIFT**

(45) Veröffentlichungstag und Bekanntmachung des Hinweises auf die Patenterteilung:
**18.01.2017 Patentblatt 2017/03**

(21) Anmeldenummer: **11790559.6**

(22) Anmeldetag: **16.11.2011**

(51) Int Cl.:
**G02C 7/02** (2006.01)   **G02C 7/06** (2006.01)

(86) Internationale Anmeldenummer:
**PCT/EP2011/005779**

(87) Internationale Veröffentlichungsnummer:
**WO 2012/065735 (24.05.2012 Gazette 2012/21)**

(54) **VERFAHREN ZUR BESTIMMUNG EINES BASISSYSTEMS VON DIFFRAKTIVEN GITTERN ZUR FARBSAUMKORREKTUR VON BRILLENGLÄSERN**

METHOD FOR DETERMINING A BASE SYSTEM OF DIFFRACTION GRATINGS FOR COLOUR FRINGE CORRECTION OF SPECTACLE LENSES

PROCÉDÉ POUR DÉTERMINER UN SYSTÈME DE BASE DE RÉSEAUX DE DIFFRACTION POUR UNE CORRECTION DE FRANGE COLORÉE DE VERRES DE LUNETTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.11.2010 DE 102010051637**

(43) Veröffentlichungstag der Anmeldung:
**25.09.2013 Patentblatt 2013/39**

(73) Patentinhaber: **Rodenstock GmbH**
**80687 München (DE)**

(72) Erfinder:
• BECKEN, Wolfgang
  82061 Neuried (DE)
• ESSER, Gregor
  80686 München (DE)
• ALTHEIMER, Helmut
  87650 Baisweil-Lauchdorf (DE)
• WEHNER, Edda
  82275 Emmering (DE)
• TRUMM, Stephan
  80999 München (DE)
• MÜLLER, Werner
  75443 Ötisheim (DE)
• UTTENWEILER, Dietmar
  82057 Icking (DE)

(74) Vertreter: **Müller-Boré & Partner**
**Patentanwälte PartG mbB**
**Friedenheimer Brücke 21**
**80639 München (DE)**

(56) Entgegenhaltungen:
EP-A1- 0 382 620    EP-A1- 1 424 049
EP-A1- 2 108 993    WO-A-2009/005822
WO-A1-2005/098518   DE-A1- 19 701 312
US-A- 6 070 980     US-A1- 2004 080 710
US-B1- 6 619 799

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Ein Brillenglas, das kein Planglas ist, hat außer in der optischen Mitte neben der dioptrischen Wirkung auch immer eine prismatische Wirkung. Ist das Glas aus einem einheitlichen Material gefertigt, dann ist je nach Material und dessen Abbezahl mit dieser prismatischen Wirkung immer auch ein mehr oder weniger starker Farbsaum, also ein Farbquerfehler, verbunden. Dieser ist umso stärker, je größer die Wirkung des Glases ist, je weiter der Beobachtungspunkt von der optischen Mitte entfernt ist und je kleiner die Abbezahl ist. Insbesondere tritt der Farbsaum bei höherbrechenden optischen Materialien auf, welche zur Reduktion der Dicke der Brillengläser häufig verwendet werden. Da dieser Farbsaum die Abbildungsqualität beeinträchtigt, besteht Interesse daran, diesen zu korrigieren. Eine Korrektur des Farbsaums kann mit einem diffraktiven Gitter erzielt werden.

Die Druckschriften US 6 070 980, EP 2 108 993 A1 und D4 US 2004/0080710 A offenbaren jeweils Brillengläser mit diffraktiven Strukturen zur Korrektur des Farbsaums der Gläser. Die Druckschrift EP 1 424 049 A1 offenbart eine multifokale ophthalmische Linse mit diffraktiver Struktur, die ausgelegt ist, die chromatischen Aberrationen des Auges und der Linse zu reduzieren. Die Druckschrift WO 2005/098518 A1 offenbart eine asphärische ophthalmische Linse mit diffraktiver Struktur zur Reduktion der chromatischen Aberration und zumindest einer monochromatischen Aberration des Auges.

Die Druckschrift DE 197 01 313 A1 offenbart progressive Gläser, welche aus Halbfabrikaten mit sphärischen oder rotationssymmetrischen Vorderflächen mit wenigen unterschiedlichen Vorderflächen hergestellt werden.

Es ist eine Aufgabe der Erfindung ein effizientes, kostengünstiges und schnelles Verfahren zum Herstellen von farbsaumkorrigierten Brillengläsern sowie entsprechende Vorrichtungen bereitzustellen. Ebenfalls ist es eine Aufgabe der Erfindung eine Serie von Brillengläsern bereitzustellen, wobei möglichst wenige Gitterausführungen ausreichend sind, um das gesamte Wirkungsspektrum abzudecken.

Diese Aufgabe wird durch ein Verfahren zum Herstellen einer Serie von farbsaumkorrigierten Basisgläsern mit den im Anspruch 1 angegebenen Merkmalen, eine Vorrichtung zum Herstellen einer Serie von farbsaumkorrigierten Basisgläsern mit den im Anspruch 7 angegebenen Merkmalen, eine Serie von Basisgläsern mit den im Anspruch 8 angegebenen Merkmalen, ein Verfahren zum Herstellen eines Brillenglases mit den im Anspruch 16 angegebenen Merkmalen, eine Serie von Brillengläsern mit den im Anspruch 18 angegebenen Merkmalen, und eine Vorrichtung zum Herstellen eines Brillenglases mit den in Anspruch 17 angegebenen Merkmalen gelöst. Bevorzugte Ausführungsformen sind Gegenstand der abhängigen Ansprüche.

Gemäß einem ersten Aspekt der Erfindung wird ein Verfahren zum Herstellen einer Serie von Basisgläsern, welche einen vorgegebenen Wirkungsbereich abdecken, vorgeschlagen. Jedes Basisglas der Serie hat eine von den Basiswirkungen der anderen Basisgläser der Serie unterschiedliche Basiswirkung und weist zumindest ein diffraktives Basisgitter auf. Das Verfahren umfasst die Schritte

Festlegen der Basiswirkungen eines jeden Basisglases der Serie;
Berechnen des Basisgitters eines jeden Basisglases der Serie derart, den Farbsaum (und insbesondere den Farbquerfehler) des jeweiligen Basisglases mit der festgelegten Basiswirkung in einem vorgegebenen Bereich des Brillenglases zu minimieren.

Der Farbsaum von optischen Elementen (z.B. von Brillengläsern) entsteht insbesondere durch den Farbquerfehler und beruht darauf, dass die beiden kombinierten refraktiven Grenzflächen des optischen Elements eine wellenlängenabhängige prismatische Wirkung $Pr_{ref}$ besitzen. Die Farbsaumbreite oder die Größe des durch ein optisches Element (z.B. ein Brillenglas) verursachten Farbsaums wird als Winkel angegeben und hängt von der prismatischen Ablenkung an der Druchtrittsstelle des Lichtes und von der Abbezahl des Glasmaterials ab. Mittels eines diffraktiven Gitters, welches auf zumindest einer der refraktiven Grenzflächen des optischen Elements aufgebracht wird, ist es möglich, eine Farbsaumkorrektur zu erzielen. Wie nachfolgend gezeigt wird, kann bei geeigneter Auslegung oder Dimensionierung des diffraktiven Gitters (insbesondere der Periode $d$ des diffraktiven Gitters) im Idealfall eine nahezu vollständige Korrektur des Farbsaums bzw. des Farbquerfehlers eines Brillenglases für eine gegebene sphärozylindrische Wirkungsverteilung, für einen gegebenen Objektabstand und für eine gegebene Gebrauchssituation erzielt werden. Anders ausgedrückt kann der Farbsaum eines Brillenglases durch ein Gitter kompensiert werden, welches individuell für das Brillenglas (insbesondere die vorgegebene sphärozylindrische Wirkung), für den vorgegebenen Objektanstand und für die vorgegebene Gebrauchssituation berechnet ist. Im Allgemeinen sind die Gitterlinien dieses Gitters asymmetrische, geschlossene Kurven.

Die Erfindung basiert auf der überraschenden Erkenntnis, dass auch dann, wenn es Abweichungen von dem vorgegebenen Objektabstand, von der vorgegebenen Gebrauchssituation oder der vorgegebenen sphärozylindrischen Wirkungsverteilung gibt oder selbst in dem Fall, dass das Glas überhaupt kein Einstärkenglas sondern z.B. ein progressives Glass ist, ein und dasselbe Gitter den Farbquerfehler immerhin noch weit besser kompensieren kann, als wenn überhaupt kein Gitter vorhanden wäre. Insbesondere hat sich überraschenderweise herausgestellt, dass Abweichungen im Objektabstand oder in der Gebrauchssituation keinen allzu großen Einfluss auf die Fähigkeit eines Gitters, den Farbquerfehler gut zu kompensieren, haben. Es ist ferner erkannt worden, dass im Gegensatz dazu die Abweichungen der tatsächlichen sphärozylindrischen Wirkungsverteilung von der gegebenen Wirkungsverteilung, für die das Gitter ausgelegt ist, in bestimmten Grenzen sein müssen, um eine akzeptable Korrektur des Farbsaums zu erzielen.

Die Erfindung schlägt daher vor, analog zum Blank-Konzept bei der Herstellung von konventionellen Brillengläsern, eine beschränkte Anzahl von unterschiedlichen diffraktiven Gittern zu verwenden, um einen gesamten, vorgegebenen Wirkungsbereich abzudecken. Die Basisgitter können vorgefertigt werden, wobei bei der Herstellung eines Brillenglases ein geeignetes Basisgitter ausgewählt wird.

Mit der vorgeschlagenen Vorgehensweise kann ein System aus einigen wenigen diffraktiven Gittern bzw. aus wenigen Basisgläsern mit Gittern (z.B. ungefähr 5 bis ungefähr 20) bereitgestellt werden, so dass dessen Aufbringung auf einer der Grenzflächen eines Basisglases den Farbsaum (Farbquerfehler) für eine gegebene dioptrische Basiswirkung ideal und für benachbarte Wirkungen noch akzeptabel kompensiert. Ebenfalls ist eine Anordnung des Gitters als innenliegende Struktur, beispielsweise eines Compound-Systems, möglich. Dadurch kann der Berechungs- und/oder Fertigungsaufwand für die Herstellung von farbsaumkorrigierten Gläsern erheblich reduziert werden. Somit ist es möglich, farbsaumkorrigierte Brillengläser mit beliebiger Wirkung innerhalb eines relativ breiten Wirkungsbereichs effizient, schnell und kostengünstig herzustellen. Die Brillengläser können insbesondere Einstärkengläser oder Mehrstärkengläser bzw. Gleitsichtgläser sein. Der Wirkungsbereich kann z.B. von - 12 dpt bis +12 dpt sphärische Wirkung und/oder bis 6 dpt astigmatische Wirkung (Zylinder) und/oder eine Addition bis 3,5 dpt umfassen. Der Wirkungsbereich kann ebenfalls ein anderer Wirkungsbereich sein.

Ebenfalls ist es möglich, eine Serie von Brillengläsern bereitzustellen, wobei möglichst wenige Gitterausführungen ausreichend sind, um das gesamte Wirkungsspektrum abzudecken.

Unter dem Begriff "diffraktives Gitter" im Sinne der vorliegenden Anmeldung wird jedes phasen- und/oder amplitudenmodulierende bzw. - ändernde optische Element verstanden, bei welchem Beugungseffekte von Relevanz sind. Insbesondere ist ein phasenänderndes optisches Element (POE) ein Element, welches phasenverzögernd oder phasenmodulierend ist, und zwar so, dass die Änderung der optischen Weglänge durch Hinzufügen des Elements vom Durchtrittspunkt des Strahls abhängt. Das diffraktive Gitter kann durch ein diffraktives optisches Element (**D**iffractive **O**ptical **E**lement oder DOE) realisiert werden oder durch jede andere Art der Phasen- und/oder Amplitudenmodulation.

Das diffraktive Gitter umfasst in der Regel eine im Wesentlichen regelmäßige, vorzugsweise periodische oder quasi-periodische, linienartige Anordnung von Strukturen oder Bereichen, in denen das Licht so beeinflusst wird, dass Beugungseffekte von Relevanz sind. Das diffraktive Gitter kann sowohl ein fein strukturiertes diffraktives Gitter als auch ein grob strukturiertes diffraktives Gitter (wie z.B. MOD=<u>M</u>ulti-<u>O</u>rder-<u>D</u>iffraction Gitter) sein. Das diffraktive Gitter kann zum Beispiel ein Transmissionsgitter, ein mechanisch geteiltes Gitter, insbesondere ein Sägezahn- oder Blazegitter, ein holographisches Gitter, ein Gitter, welches durch eine dünne Folie oder Schicht mit variierendem Brechungsindex (Gradient-Index-Material) realisiert wird, sein. Die Strukturen der eingesetzten diffraktiven Gitter können statisch oder insbesondere elektrisch schaltbar sein. Verfahren zum Herstellen von statischen oder schaltbaren diffraktiven Gittern sind aus dem Stand der Technik bekannt.

Vorzugsweise werden diffraktive Gitter eingesetzt, bei welchen der Gangunterschied zwischen zwei benachbarten Gitterlinien typischerweise einer Beugungsordnung von $|m| =1$ bis $|m| = 4$ entspricht. Ebenfalls ist es möglich, ein MOD-Gitter zu verwenden, bei welchem der Gangunterschied typischerweise in der Größenordnung $|m| \approx 20$ liegt.

Das diffraktive Gitter kann in der ersten Beugungsordnung verwendet werden. Es ist jedoch möglich, das diffraktive Gitter nicht in erster Beugungsordnung, sondern in einer höheren Ordnung zu verwenden. Das diffraktive Gitter kann eine Grenzfläche aufweisen, welche gegen Luft berechnet wird. Es ist ebenfalls möglich, eine Grenzfläche des diffraktiven Gitters nicht gegen Luft, sondern gegen ein anderes Material zu berechnen.

Das Profil des diffraktiven Gitters kann geeignet festgelegt oder dimensioniert werden. Das Profil des Gitters wird vorzugsweise so festgelegt, dass die Beugungseffizienz für eine bestimmte Beugungsordnung maximal ist. Anders ausgedrückt kann das Profil des Gitters so festgelegt werden, dass sich die Intensität des gebeugten Lichts möglichst in eine Beugungsordnung konzentriert. Vorzugsweise ist das Gitterprofil sägezahnförmig. Insbesondere kann eine sägezahnförmige (engl. blazed) Grenzfläche zwischen einem dispergierenden Grundmaterial und Luft eingesetzt werden. Die laterale Skala des Gitters, d.h. die Gitterkonstante, kann in der Größenordnung der Wellenlänge liegen. Es ist jedoch auch möglich, diffraktive Gitter einzusetzen, wobei die Gitterkonstante nicht in der Größenordnung der Wellenlänge liegt, sondern um bis zu einen Faktor 100 darüber. Das diffraktive Gitter kann mit einem anderen Gitter überlagert/kombiniert werden, z.B. mit einem Fresnel-Gitter, welches eine von Null unterschiedliche dioptrische Wirkung aufweist. Die Periode des Gittes kann - wie nachfolgend beschrieben wird - geeignet bestimmt werden.

Das Gitter kann sich im Wesentlichen über den gesamten Blickwinkelbereich bzw. über den gesamten Bereich des Basisglases erstrecken. Das Gitter kann in zentrierter Weise um einen vorgegebenen Bezugspunkt, insbesondere um den Prismenbezugspunkt oder um den Zentrier- bzw. Anpaßpunkt, oder um die geometrische Mitte des rohrunden Basisglases angeordnet werden. Es ist jedoch ebenfalls möglich, das Gitter dezentriert anzuordnen.

Das Gitter kann auf eine oder auf beide refraktive Grenzflächen des Basisglases aufgebracht werden. Es ist jedoch auch möglich, ein Compound-System vorzusehen, welches aus einem Grundglas und einem Deckglas aufgebaut ist, wobei die Gitterstrukturen auf den geschützten Innenseiten des Grundglases und/oder des Deckglases (d.h. die sich gegenüber stehenden Seiten des Grund- und des Deckglases) aufgebracht sind.

Ein Basisglas im Sinne der vorliegenden Anmeldung kann jedes optische Element sein, welches zumindest ein diffraktives Gitter aufweist. Ein Basisglass kann z.B. ein sogenanntes "halbfertiges Brillenglas" oder ein Blank sein, wobei lediglich eine Fläche, vorzugsweise die Fläche, welche das Gitter trägt, fertig bearbeitet ist, und wobei die gegenüberliegende Fläche in Abhängigkeit von Rezeptdaten eines bestimmten Brillenträgers nachträglich bearbeitet wird. Insbesondere kann die gegenüberliegende Fläche derart bearbeitet werden, dass in zumindest einem vorgegebenen Bezugspunkt des Brillenglases (z.B. in einem Zentrier- oder Anpaßpunkt, in einem Fernbezugspunkt und/oder in einem Nahbezugspunkt) eine Sollwirkung des Brillenglases erzielt wird. Das Basisglas kann ebenfalls ein sogenanntes "Compound-System" sein, welches zumindest ein Grundglas und ein Deckglas aufweist.

Unter der Wirkung eines optischen Elements wird die gesamte dioptrische Wirkung des optischen Elements verstanden, welche durch den refraktiven Anteil und den diffraktiven Anteil zustande kommt (wie nachfolgend im Detail beschrieben wird), und welche die gesamte sphärische Wirkung und/oder die astigmatische Wirkung und gegebenenfalls die prismatische Wirkung umfasst. Ein Maß für den mittleren sphärischen Anteil der sphärozylindrischen Wirkung eines Brillenglases ist das sphärische Äquivalent. Ferner kann die sphärozylindrische Wirkung - wie nachfolgend im Detail beschrieben - mittels Powervektoren beschrieben werden.

Unter der refraktiven Wirkung wird die Wirkung eines optischen Elements verstanden, welche aufgrund der Flächenkrümmungen zustande kommt. Bei einem rotationssymmetrischen Brillenglas umfasst die refraktive Wirkung des Brillenglases die sphärische Wirkung des Brillenglases in einem vorgegebenen Bezugspunkt, z.B. in dem Scheitel. Bei einem astigmatischen Brillenglas kommt zu der refraktiven sphärischen Wirkung die astigmatische refraktive Wirkung des Brillenglases hinzu. Die gesamte refraktive dioptrische Wirkung des Brillenglases kann in diesem Fall die refraktive sphärozylindrische Wirkung des Brillenglases sein.

Vorzugsweise sind die Basisgläser sphärozylindrische oder sphärische Einstärkengläser. Vorzugsweise ist das diffraktive Gitter auf eine der beiden refraktiven Grenzflächen (Vorder- oder Rückfläche) des Basisglases aufgebracht. Die gegenüberliegende Fläche kann zur Anpassung an eine Rezeptwirkung dienen, d.h. eine Rezeptfläche darstellen.

Das Berechnen des Basisgitters jedes einzelnen Brillenglases kann eine Optimierung des Gitters und/oder zumindest einer der refraktiven Flächen des Basisglases umfassen. Vorzugsweise umfasst das Berechnen des Basisgitters eine simultane Optimierung zumindest einer der refraktiven Flächen des Basisglases und des Basisgitters. Vorzugsweise ist die zumindest eine refraktive Fläche die Fläche des Basisglases, welche das Gitter trägt. Die Optimierung erfolgt vorzugsweise in einer vorgegebenen Gebrauchsstellung des Basisglases. Die Gebrauchsstellung kann insbesondere durch den Fassungsscheibenwinkel, die Vorneigung, den Hornhautscheitelabstand, die Pupillendistanz, und gegebenenfalls weitere Parameter charakterisiert werden. Die Parameter der Gebrauchsstellung können durchschnittliche Parameter sein. Ebenfalls wird vorzugsweise ein vorgegebener Objektabstand, vorzugsweise als Funktion der Blickrichtung, berücksichtigt.

Vorzugsweise erfolgt die Optimierung derart, Abbildungsfehler zumindest zweiter Ordnung zu minimieren. Die Optimierung kann eine Minimierung einer polychromatischen Zielfunktion umfassen, in welcher der Farbsaum unmittelbar als Zielgröße oder mittelbar durch eine Wellenlängenabhängigkeit der in der Zielfunktion eingehenden Größen eingeht. Die Abbildungsfehler zweiter oder höherer Ordnung werden vorzugsweise mittels einer Wellenfrontdurchrechnung unter Berücksichtigung des Basisgitters und der Gebrauchsstellung des Brillenglases ermittelt.

Die polychromatische Zielfunktion kann z.B. eine Zielfunktion des Typs:

Typ 1) $F_1 = \sum_\lambda F_{\text{monochrom}}(\lambda)$ ,

Typ 2) $F_2 = F_{\text{monochrom}}(\lambda_0) + \sum_i g_{\text{FLF}}(i) \times f\left(\mathbf{S}_{\text{SK}}(i,\lambda_2) - \mathbf{S}_{\text{SK}}(i,\lambda_1)\right)^2$ ,

Typ 3) $F_3 = F_{\text{monochrom}}(\lambda_0) + \sum_i g_{\text{FQF}}(i) \times g\left(\Delta\varphi_{\text{SK}}(i,\lambda_2,\lambda_1)\right)^2$ ,

In den obigen Formeln bezeichnen

$F_{\text{monochrom}}(\lambda)$ eine monochromatische Zielfunktion für die Wellenlänge $\lambda$ ;
$g_{\text{FLF}}(i)$ die Gewichtung des Farblängsfehlers an der $i$-ten Bewertungsstelle des optischen Elements;
$g_{\text{FQF}}(i)$ die Gewichtung des Farbquerfehlers an der $i$-ten Bewertungsstelle des optischen Elements;
$\mathbf{S}_{\text{SK}}(i,\lambda_1)$ die Vergenzmatrix der Wellenfront an der Scheitelpunktkugel für Wellenlänge $\lambda_1$ und für die $i$-te Bewertungsstelle;

$S_{SK}(i,\lambda_2)$ die Vergenzmatrix der Wellenfront an der Scheitelpunktkugel für Wellenlänge $\lambda_2$ und für die $i$-te Bewertungsstelle; und

$f(S_{SK}(i,\lambda_2)\text{-}S_{SK}(i,\lambda_1))$ eine Funktion der Differenz der Vergenzmatrizen der Wellenfront an der Scheitelpunktkugel für zwei unterschiedlichen Wellenlängen $\lambda_1$ und $\lambda_2$;

$\Delta\varphi_{SK}(i,\lambda_2,\lambda_1)$ den Winkel zwischen den objektseitigen Hauptstrahlen für unterschiedlichen Wellenlängen $\lambda_1$ und $\lambda_2$ und $g(\Delta\varphi_{SK}(i,\lambda_2,\lambda_1))$ eine Funktion des Winkels zwischen den objektseitigen Hauptstrahlen für unterschiedlichen Wellenlängen $\lambda_1$ und $\lambda_2$.

Eine Zielfunktion des ersten Typs kommt insbesondere dadurch zustande, dass eine beliebige monochromatische Zielfunktion als Funktion der Wellenlänge aufgefasst wird und für zumindest zwei unterschiedliche Wellenlängen ausgewertet und über den Satz von zumindest zwei unterschiedlichen Wellenlängen summiert wird. Wie bereits oben ausgeführt, werden in diesem Fall die Farbfehler des optischen Elements mittelbar durch die Wellenlängenabhängigkeit der in die Zielfunktion eingehenden Größen berücksichtigt. Die monochromatische Zielfunktion kann z.B. eine aus dem Stand der Technik bekannte monochromatische Zielfunktion sein.

Eine Zielfunktion des zweiten Typs kommt insbesondere dadurch zustande, dass eine beliebige monochromatische Zielfunktion bei einer vorgegebenen Wellenlänge $\lambda_0$ (Arbeitswellenlänge) ausgewertet wird und zu dieser Funktion noch ein Term hinzugenommen wird, welcher von der Differenz $(S_{SK}(i,\lambda_2)\text{-}S_{SK}(i,\lambda_1))$ der Vergenzmatrizen für zumindest zwei unterschiedlichen Wellenlängen $\lambda_1$ und $\lambda_2$ abhängt. Die Art der Abhängigkeit kann verschieden ausgewählt werden. Insbesondere kann die Funktion $f$ für den dioptrischen Abstand zwischen den Vergenzmatrizen oder für die Differenz der sphärischen Äquivalente stehen. Im letzteren Fall stellt die Funktion $f$ einen Strafterm für den Farblängsfehler dar. Die Funktion $f$ kann eine beliebige Funktion sein, für die $f(\mathbf{0}) = 0$ ist. Bevorzugt ist $f$ so zu wählen, dass $f(S_{SK}(i,\lambda_2)\text{-}S_{SK}(i,\lambda_1))$ umso größer ist, je größer der dioptrische Abstand zwischen $S_{SK}(i,\lambda_2)$ und $S_{SK}(i,\lambda_1)$ ist. In einer anderen bevorzugten Ausführungsform ist $f(S_{SK}(i,\lambda_2)\text{-}S_{SK}(i,\lambda_1))$ umso größer, je größer der Abstabd zwischen den sphärischen Äquivalenten von $S_{SK}(i,\lambda_2)$ und $S_{SK}(i,\lambda_1)$ ist.

Eine Zielfunktion des dritten Typs kann insbesondere dadurch zustande kommen, dass eine beliebige monochromatische Zielfunktion bei einer vorgegebenen Wellenlänge $\lambda_0$ (Arbeitswellenlänge) ausgewertet wird und zu dieser Zielfunktion ein zusätzlicher Term aufgenommen wird, welcher von dem Farbquerfehler abhängt. So stellt die Funktion $g(\Delta\varphi_{SK}(i,\lambda_2,\lambda_1))$ einen Strafterm für den Farbquerfehler dar, welcher durch den Winkel $\Delta\varphi_{SK}(i,\lambda_2,\lambda_1)$ zwischen den objektseitigen Hauptstrahlen für unterschiedliche Wellenlängen $\lambda_1$ und $\lambda_2$ gegeben ist. Die Funktion $g$ kann z.B. die Identität, eine trigonometrische Funktion oder eine andere geeignete Funktion sein.

Beispiele von Zielfunktionen des ersten bis dritten Typs sind:

$$1a)\ F_1 = \sum_{i,\lambda} g_Z(i,\lambda)(Z_\Delta(i,\lambda) - Z_{\Delta,\text{Soll}}(i,\lambda))^2 + g_S(i,\lambda)(S_\Delta(i,\lambda) - S_{\Delta,\text{Soll}}(i,\lambda))^2$$

$$2a)\ F_2 = \sum_i \Big( g_Z(i)(Z_\Delta(i,\lambda_0) - Z_{\Delta,\text{Soll}}(i,\lambda_0))^2 + g_S(i)(S_\Delta(i,\lambda_0) - S_{\Delta,\text{Soll}}(i,\lambda_0))^2 + g_{\text{FLF}}(i) \times f(S_{SK}(i,\lambda_2) - S_{SK}(i,\lambda_1))^2 \Big)$$

$$3a)\ F_3 = \sum_i \Big( g_Z(i)(Z_\Delta(i,\lambda_0) - Z_{\Delta,\text{Soll}}(i,\lambda_0))^2 + g_S(i)(S_\Delta(i,\lambda_0) - S_{\Delta,\text{Soll}}(i,\lambda_0))^2 + g_{\text{FQF}}(i) \times g(\Delta\varphi_{SK}(i,\lambda_2,\lambda_1))^2 \Big)$$

Hier bezeichnen

$Z_\Delta(i,\lambda)$ den Ist-Wert des Betrags des astigmatischen Fehlers an der $i$-ten Bewertungsstelle des optischen Elements für die Wellenlänge $\lambda$;

$Z_{\Delta,\text{Soll}}(i,\lambda)$ den Sollwert des Betrags des astigmatischen Fehlers an der $i$-ten Bewertungsstelle des optischen Elements für die Wellenlänge $\lambda$;

$S_\Delta(i,\lambda)$ den Ist-Wert des Refraktionsfehlers an der $i$-ten Bewertungsstelle des optischen Elements für die Wellenlänge $\lambda$;

$S_{\Delta,\text{Soll}}(i,\lambda)$ den Sollwert des Refraktionsfehlers an der $i$-ten Bewertungsstelle des optischen Elements für die Wellenlänge $\lambda$;

$g_Z(i,\lambda)$ die Gewichtung des Betrags der astigmatischen Abweichung an der $i$-ten Bewertungsstelle des optischen Elements für die Wellenlänge $\lambda$;

$g_S(i,\lambda)$ die Gewichtung des Refraktionsfehlers an der $i$-ten Bewertungsstelle des optischen Elements für die Wellenlänge $\lambda$.

Es ist ebenfalls möglich, eine andere geeignete, polychromatische Zielfunktion einzusetzen, z.B. eine Zielfunktion, welche eine Kombination der zuvor beschriebenen Zielfunktionen ist. Insbesondere kann die Zielfunktion Terme erhalten, welche sowohl von dem Farblängsfehler als auch von dem Farbquerfehler abhängen. Durch die simultane Optimierung zumindest einer der refraktiven Flächen des Basisglases und des Basisgitters kann eine optimale Korrektur des Farbsaums des Brillenglases, vorzugsweise für alle Blickrichtungen, erreicht werden.

Es ist jedoch möglich, das Gitter lediglich in Abhängigkeit von der refraktiven Wirkung des Basisglases zu bestimmen.

Im Allgemeinen sind die Gitterlinien des Basisgitters, welches ausgelegt ist, den Farbsaums des jeweiligen Basisglases mit der festgelegten Basiswirkung in einem vorgegebenen Bereich des Brillenglases zu minimieren, asymmetrische, geschlossene Kurven. Vorzugsweise verlaufen die Gitterlinien des Basisgitters (im Wesentlichen) senkrecht zur lokalen Achslage (Basislage) des Prismas des jeweiligen Basisglases.

Vorzugsweise werden jedoch Basisgitter mit elliptischen Gitterlinien eingesetzt. Wie nachfolgend in Detail beschrieben wird, kann durch die Verwendung von Gittern mit elliptischen Gitterlinien mit einer minimalen Anzahl von Basisgittern eine optimale Farbsaumkorrektur auch für den Fall erzielt werden, dass der vorgegebene Wirkungsbereich ebenfalls zylindrische Wirkungen umfasst (d.h. für die Herstellung von sphärozylindrischen Brillengläsern).

Alternativ können die Gitterlinien des jeweiligen Basisgitters rotationssymmetrisch sein. Es hat sich überaschenderweise herausgestellt, dass durch die Verwendung von Basisgittern mit rotationssymmetrischen (z.B. kreisförmigen) Gitterlinien, ebenfalls eine gute Farbsaumkorrektur auch bei nicht rotationssymmetrischen Brillengläsern erzielt werden kann.

Vorzugsweise ist der Abstand $d(r)$ der Gitterlinien eines Basisgitters mit rotationssymmetrischen Gitterlinien variabel. Vorzugsweise ist der Abstand $d(r)$ eine Funktion des radialen Abstands von der optischen oder geometrischen Mitte $r$:

$$d(r) = \frac{A}{r}$$

wobei der Parameter $A$ von der refraktiven Wirkung des Basisglases und der Abbezahl des Basisglases abhängt.

Die optische Mitte des Brillenglases fällt bei nicht prismatischen Brillengläsern mit dem Prismenbezugspunkt zusammen. Bei prismatischen Brillengläsern liegt die optische Mitte in der Regel in einem Punkt, dessen Lage im Allgemeinen numerisch bestimmt werden kann, und welcher mit keinem besonderen, ausgezeichneten oder benannten Bezugspunkt im Brillenglas zusammen fallen muss. Näherungsweise ist die Position der optischen Mitte dadurch bestimmt, dass man die Gleichung für das Gesamtprisma, das sich nach der Prentice'schen Regel zu $\mathbf{Pr} := \mathbf{Pr}_0 - \mathbf{S'}_\infty \mathbf{r} = \mathbf{0}$ ergibt (wobei $\mathbf{Pr}_0$ das Verordnungsprisma und $\mathbf{S'}_\infty$ die Scheitelbrechwertmatrix ist), nach $\mathbf{r}$ auflöst zu $\mathbf{r} = (\mathbf{S'}_\infty)^{-1}\mathbf{Pr}_0$.

Vorzugsweise wird der Abstand der Gitterlinien jedes der Basisgitter als Funktion des radialen Abstands $d(r)$ von der optischen oder geometrischen Mitte nach der Formel

$$d(r) = \frac{m(\lambda_F - \lambda_C)v_d}{S_{\mathrm{ref},0}(\lambda_d)} \cdot \frac{1}{r}$$

berechnet, wobei

$S_{\mathrm{ref},0}(\lambda_d)$ den refraktiven Anteil der dioptrischen Wirkung des Basisglases bei einer vorgegebenen Wellenlänge $\lambda_d$ (Design-Wellenlänge);
$v_d$ die Abbezahl der Basisgläser;
$\lambda_F$ die F-Fraunhofer Linie, welche in die Definition der Abbezahl eingeht;
$\lambda_C$ die C-Fraunhofer Linie, welche in die Definition der Abbezahl eingeht; und $m$ eine vorgegebene Beugungsordnung

bezeichnen.

Vorzugsweise umfasst der Wirkungsbereich astigmatische (zylindrische) Wirkungen mit einem maximalen Zylinder $Zyl_{\max}$. Das Festlegen der Basiswirkungen erfolgt vorzugsweise derart, dass für den maximalen Abstand $|\Delta M_{0G}|$

der sphärischen Äquivalente der Basisgläser der Serie die Bedingung $\left|\Delta M_{0G}\right| \leq 2v_d \dfrac{FS_T}{r_T} - Zyl_{\max}$ gilt, wobei

$v_d$ die Abbezahl der Basisgläser;

$FS_T$ einen vorgegebenen Schwellwert;

$2 \cdot r_T$ den Durchmesser eines vorgegebenen Bereichs des jeweiligen Basisglases, in welchem der maximal zulässige Farbsaum kleiner oder gleich dem Schwellwert $FS_T$ ist; und

$Zyl_{max}$ den maximal vorkommenden Astigmatismus in dem abzudeckenden Wirkungsbereich

bezeichnen.

Es ist jedoch möglich, die Basiswirkungen lediglich anhand der abzudeckenden sphärischen Wirkung festzulegen. Vorzugsweise erfolgt das Festlegen der Basiswirkungen derart, dass für den maximalen Abstand $|\Delta M_{0G}|$ der sphärischen Äquivalente der Basisgläser der Serie die Bedingung

$$|\Delta M_{0G}| \leq 2 v_d \frac{FS_T}{r_T}$$

erfüllt ist, wobei

$v_d$ die Abbezahl der Basisgläser;

$FS_T$ einen vorgegebenen Schwellwert;

$2 \cdot r_T$ den Durchmesser eines vorgegebenen Bereichs des jeweiligen Basisglases, in welchem der maximal zulässige Farbsaum kleiner oder gleich dem Schwellwert $FS_T$ ist;

bezeichnen.

Der Schwellwert $FS_T$ stellt eine Wahrnehmungsschwelle dar, unterhalb welcher der Farbsaum entweder nicht wahrgenommen oder als nicht störend empfunden wird.

Jedem der Basisgläser der Serie kann jeweils einen Korrekturbereich zugeordnet werden, wobei das Basisgitter des Basisglases in dem jeweiligen Korrekturbereich den Farbsaum eines Brillenglases mit einer Wirkung innerhalb dieses Korrekturbereichs derart korrigiert, dass der Farbsaum des Brillenglases innerhalb eines vorgegeben Bereichs des Brillenglases kleiner oder gleich einem vorgegebenen Schwellwert ist. Der vorgegebene Schwellwert entspricht vorzugsweise einer Wahrnehmungsschwelle für den Farbsaum. Die Basiswirkungen können derart festgelegt werden, dass die Korrekturbereiche der einzelnen Basisgläser den vorgegebenen Wirkungsbereich abdecken.

Die Korrekturbereiche, d.h. die einzelnen Wirkungsbereiche, welche den einzelnen Basisgläsern zugeordnet werden, sind vorzugsweise um die jeweilige Basiswirkung zentriert. Besonders bevorzugt werden die Basisgitter so gewählt, dass durch Überlappung der Korrekturbereiche der einzelnen Basisgläser der ganze angestrebte Wirkungsbereich in Bezug auf die sphärische Wirkung oder das sphärische Äquivalent überdeckt wird. Anders ausgedrückt grenzen die Korrekturbereiche, welche den einzelnen Basisgläsern der Serie zugeordnet sind, vorzugsweise aneinander an, so dass innerhalb des gesamten abzudeckenden Wirkungsbereichs eine Reduktion des Farbsaums innerhalb des vorgegebenen Bereichs des Brillenglases unterhalb des vorgegeben Schwellwerts mit einer beschränkten Anzahl von Basisgittern erzielt werden kann.

Es ist jedoch insbesondere bei sphärozylindrischen oder progressiven Brillengläsern möglich, dass die einzelnen Korrekturbereiche der Basisgläser nicht miteinander überlappen oder nicht aneinander angrenzen. Dabei wird in Kauf genommen, dass für bestimmte Wirkungen, z.B. bei hohen Zylindern, welche statistisch selten vorkommen, eine sub-optimale Korrektur des Farbsaums erzielt wird. Dieser Nachteil wird jedoch durch die Vorteile bei der Fertigung der Basisgläser im Wesentlichen ausgeglichen.

Der Bereich, innerhalb dessen der maximale Farbsaum kleiner oder gleich dem vorgegebenen Schwellwert ist, ist vorzugsweise ein kreisförmiger oder elliptischer Bereich um die geometrische Mitte, um den optischen Mittelpunkt, um den Scheitel des Brillenglases oder um einen anderen geeigneten Bezugspunkt. Der optische Mittelpunkt fällt z.B. mit dem Prismenbezugspunkt oder mit dem Zentrier- oder Anpaßpunkt des Brillenglases zusammen.

Vorzugsweise weist der vorgegebene Bereich des Brillenglases, innerhalb dessen der maximale Farbsaum kleiner oder gleich dem vorgegeben Schwellwert ist, einen Durchmesser von zumindest 40 mm auf. Vorzugsweise ist der vorgegebene Schwellwert 0,5 cm/m, vorzugsweise 0,4 cm/m, und besonders bevorzugt 0,12 cm/m.

Vorzugsweise umfasst der abzudeckende Wirkungsbereich sphärische Wirkungen von -12 dpt bis +12 dpt und/oder zylindrische Wirkungen bis 4 dpt, vorzugsweise bis 6 dpt.

Das Verfahren kann ferner ein Aufbringen der so berechneten Basisgitter auf zumindest eine der refraktiven Flächen (Vorder-, Rückfläche oder eine andere Grenzfläche) des Basisglases umfassen. Das Basisglas kann z.B. ein herkömmlicher Blank oder ein Halbfabrikat sein. Ebenfalls ist es möglich, dass das Basisglas ein Compound-System umfassend zumindest ein Grundglas und ein Deckglas ist. Verfahren zum Aufbringen eines diffraktiven Gitters auf einer Fläche bzw. Herstellen eines diffraktiven Gitters sind aus dem Stand der Technik bekannt.

Ein weiterer Aspekt der Erfindung betrifft eine Vorrichtung zum Herstellen einer Serie von Basisgläsern, welche einen vorgegebenen Wirkungsbereich abdecken, wobei jedes Basisglas der Serie eine von den Basiswirkungen der anderen Basisgläser der Serie unterschiedliche Basiswirkung hat, und zumindest ein diffraktives Basisgitter aufweist, wobei die Vorrichtung derart ausgelegt ist, ein bevorzugtes Verfahren zum Herstellen einer Serie von Basisgläsern durchzuführen. Insbesondere umfasst die Vorrichtung zum Herstellen einer Serie von Basisgläsern Basisgitter-Berechnungsmittel, welche ausgelegt sind, das Basisgitter jedes der Brillengläser der Serie zu berechnen, wobei das Berechnen ein Festlegen der Basiswirkungen eines jeden Basisglases der Serie umfasst und derart erfolgt, den Farbsaums des jeweiligen Basisglases mit der festgelegten Basiswirkung in einem vorgegebenen Bereich des Brillenglases zu minimieren.

Gemäß einem dritten Aspekt der Erfindung wird eine Serie von Basisgläsern umfassend zumindest zwei Basisgläser vorgeschlagen, wobei

jedes Basisglas der Serie eine von den Basiswirkungen der anderen Basisgläser der Serie unterschiedliche, Basiswirkung hat und zumindest ein diffraktives Basisgitter aufweist, welches derart ausgelegt ist, dass der maximale Farbsaum innerhalb eines vorgegebenen Bereichs des Basisglases mit einem Durchmesser von zumindest 40 mm gleich oder kleiner als ein vorgegebener Schwellwert von 0,5 cm/m ist.

Das diffraktive Gitter kann ein zuvor beschriebenes diffraktives Gitter sein. Insbesondere kann das diffraktive Gitter auf der Vorderfläche oder auf der Rückfläche des Basisglases aufgebracht werden. Es ist auch möglich, diffraktive Gitter sowohl auf der Vorder- als auch auf der Rückfläche des Brillenglases aufzubringen. Ebenfalls ist es möglich, das diffraktive Gitter auf eine andere Grenzfläche des Basisglases aufzubringen, z.B. auf zumindest einer Grenzfläche im Inneren eines Compound-Systems.

Das diffraktive Gitter eines jeden Basisglases kann derart für die Wirkung des Basisglases ausgelegt werden, dass eine optimale Korrektur des Farbsaums des Basisglases erzielt wird. Bei einer Abweichung der Wirkung des Brillenglases innerhalb des dem halbfertigen Brillenglas zugeordneten Wirkungsbereichs ist der Farbsaum dennoch innerhalb der vorgegebenen Grenzen. Anders ausgedrückt liegt der Farbsaum innerhalb des vorgegebenen Bereichs des Brillenglases unterhalb der vorgegebenen Schwelle. Wie bereits oben ausgeführt, ist der Bereich, innerhalb dessen der maximale Farbsaum kleiner oder gleich dem vorgegebenen Schwellwert ist, vorzugsweise ein kreisförmiger oder elliptischer Bereich um die geometrische Mitte, um den optischen Mittelpunkt, um den Scheitel des Brillenglases oder um einen anderen geeigneten Bezugspunkt.

Vorzugsweise ist der maximale Farbsaum innerhalb des vorgegebenen Bereichs des Brillenglases kleiner oder gleich 0,4 cm/m, und besonders bevorzugt kleiner oder gleich 0,12 cm/m.

Vorzugsweise ist jedem der Basisgläser der Serie jeweils ein Korrekturbereich derart zugeordnet, dass für ein Brillenglas mit einer Wirkung innerhalb dieses Korrekturbereichs und mit dem gleichen Gitter, wie das Basisgitter des diesem Wirkungsbereich zugordneten Basisglases, der Farbsaum innerhalb des vorgegeben Bereichs des Brillenglases unter dem vorgegebenen Schwellwert liegt. Der Wirkungsabstand der Basisgläser der Serie ist vorzugsweise derart ausgelegt, dass die Korrekturbereiche der einzelnen Basisgläser einen vorgegebenen Wirkungsbereich abdecken.

Vorzugsweise umfasst der Wirkungsbereich, welcher durch die einzelnen Korrekturbereiche abgedeckt wird, sphärische Wirkungen von -12 dpt bis +12 dpt und/oder zylindrische Wirkungen bis 4 dpt, vorzugsweise bis zu 6 dpt.

Die Anzahl der Basisgläser ist vorzugsweise zwischen 5 und 20.

Gemäß einer bevorzugten Ausführungsform umfasst der Wirkungsbereich, welcher durch die einzelnen Basisgläser der Serie abgedeckt wird, den Bereich sphärischer Wirkungen von - 12 dpt bis +12 dpt. Wenn der maximale Farbsaum innerhalb eines zentralen Bereichs des Brillenglases mit einem Durchmesser von 40 mm beispielsweise unter 0,12 cm/m liegen soll (d.h. unterhalb der Wahrnehmungsschwelle) und die Abbezahl des Brillenglases $v_d = 42,41$ ist, reichen lediglich 5 unterschiedliche Basisgitter und entsprechend 5 unterschiedliche Basisgläser aus, um den gesamten Wirkungsbereich abzudecken, da die einzelnen Korrekturbereiche ungefähr 5 dpt (d.h. $\pm 2,5$ dpt um die jeweilige sphärische Basiswirkung) betragen.

Wenn zusätzlich zu der sphärischen Wirkung auch eine zylindrische Wirkung mit einem maximalen Astigmatismus von 4 dpt abgedeckt werden soll, können in diesem Beispiel die Korrekturbereiche eine Breite von ungefähr 1 dpt (d.h. $\pm 0,5$ dpt um die jeweilige Basiswirkung) betragen. Der gesamte Wirkungsbereich mit einem betragsmäßig stärksten Hauptschnitt zwischen -12 dpt und +12 dpt kann folglich mit 20 unterschiedlichen Basisgittern bzw. 20 unterschiedlichen Basisgläsern abgedeckt werden. Wenn im Fall von sphärozylindrischen Gläsern zugelassen wird, dass für bestimmte Wirkungskombinationen keine vollständige Farbkorrektur stattfindet, kann auch bei sphärozylindrischen Gläsern die Anzahl unterschiedlicher Basisgitter und dementsprechend Basisgläser auf bis zu 5 reduziert werden.

Die Basisgläser können Einstärkengläser, Mehrstärkengläser oder Progressivgläser sein. Vorzugsweise sind die Basisgläser rotationssymmetrische Einstärkengläser, d.h. Einstärkengläser mit rotationssymmetrischen (z.B. sphärischen) Flächen.

Wie bereits oben ausgeführt, kann das diffraktive Gitter auf der Vorderfläche und/oder auf der Rückfläche von jedem der Basisgläser aufgebracht werden. Das Basisglas kann ein sogenanntes "Compound-System" sein, welches zumindest ein Grundglas und ein Deckglas umfasst. Das diffraktive Gitter kann auf zumindest einer Grenzfläche im Inneren des Compound-Systems aufgebracht werden.

Das Basisgitter kann ein diffraktives Gitter mit elliptisch verlaufenden Gitterlinien sein. Alternativ kann das Basisgitter ein Gitter mit rotationssymmetrisch verlaufenden Gitterlinien sein. Vorzugsweise sind die Gitterlinien (im Wesentlichen) kreisförmig. Vorzugsweise ist der Abstand $d\,(r)$ der Gitterlinien eines Basisgitters mit rotationssymmetrischen Gitterlinien variabel, insbesondere eine Funktion des radialen Abstands von der optischen oder geometrischen Mitte $r$:

$$d(r) = \frac{A}{r}$$

wobei der Parameter $A$ von der refraktiven Wirkung des Basisglases und der Abbezahl des Basisglases abhängt.

Vorzugsweise gilt für den Abstand der Gitterlinien $d\,(r)$ von der optischen Mitte des jeweiligen Basisglases:

$$d(r) = \frac{m(\lambda_F - \lambda_C)v_d}{S_{\text{ref},0}(\lambda_d)} \cdot \frac{1}{r},$$

wobei

$S_{\text{ref},0}(\lambda_d)$ den refraktiven Anteil der dioptrischen Wirkung des Basisglases bei einer Wellenlänge $\lambda_d$;
$v_d$ die Abbezahl der Basisgläser;
$\lambda_F$ die F-Fraunhofer Linie, welche in die Definition der Abbezahl eingeht;
$\lambda_C$ die C-Fraunhofer Linie, welche in die Definition der Abbezahl eingeht; und
$m$, $m = \pm 1, \pm 2, \ldots$ die Beugungsordnung

bezeichnen.

Alle Basisgläser sind aus dem gleichen Material und weisen die gleiche Abbezahl auf. Die Beugungsordnung, für welche eine Korrektur stattfinden soll, wird vorgegeben. So kann z.B. ist m = -1 sein.

Das Basisgitter kann ferner ein Gitter sein, dessen Gitterlinien (im Wesentlichen) senkrecht zu der lokalen Achslage (Basislage) des Prismas des jeweiligen Basisglases verlaufen.

Vorzugsweise erfüllt der maximal vorkommende Abstand $|\Delta M_{0G}|$ der sphärischen Äquivalente der Basisgläser der Serie die Bedingung

$$\left|\Delta M_{0G}\right| \le 2v_d \frac{FS_T}{r_T} - Zyl_{\max}$$

oder

$$\left|\Delta M_{0G}\right| \le 2v_d \frac{FS_T}{r_T},$$

wobei

$v_d$ die Abbezahl der Basisgläser;
$FS_T$ den vorgegebenen Schwellwert;
$2 \cdot r_T$ den Durchmesser des vorgegebenen Bereichs;
$Zyl_{\max}$ den maximal vorkommenden Astigmatismus

bezeichnen.

Die Gitterstrukturen der einzelnen Basisgitter können statisch sein. Es ist jedoch ebenfalls möglich, dass die Gitterstrukturen der einzelnen Basisgitter durch schaltbare Strukturen zu verwirklichen. Anders ausgedrückt können die einzelnen Basisgitter schaltbare, z.B. elektrisch schaltbare diffraktive Gitter sein. Schaltbare Gitter und insbesondere elektrisch schaltbare Gitter sind aus dem Stand der Technik bekannt.

Ein beispielhaftes Verfahren zum Herstellen eines Brillenglases kann die folgenden Schritte umfassen:

Erfassen von Rezeptdaten des Brillenglases;
Bestimmen der Sollwirkung des Brillenglases in zumindest einem vorgegebenen Bezugspunkt des Brillenglases in Abhängigkeit von den erfassten Rezeptdaten;
Auswahl eines diffraktiven Gitters aus einem Satz von Basisgittern umfassend zumindest zwei unterschiedliche Basisgitter, wobei die Auswahl in Abhängigkeit von der Sollwirkung des Brillenglases in dem zumindest einen Bezugspunkt oder in Abhängigkeit von den erfassten Rezeptdaten erfolgt;
Fertigstellen eines Brillenglases mit dem ausgewählten Gitter derart, dass die Wirkung des fertiggestellten Brillenglases in dem zumindest einen Bezugspunkt im Wesentlichen (d.h. im Rahmen der üblichen Toleranzen, insbesondere der üblichen fertigungstechnischen Toleranzen) gleich der zuvor bestimmten Sollwirkung in diesem Bezugspunkt ist,

wobei

die einzelnen Basisgitter des Satzes für jeweils unterschiedliche Basiswirkungen derart ausgelegt sind, dass der maximale Farbsaum eines Brillenglases mit der jeweiligen Basiswirkung innerhalb eines vorgegebenen Bereichs des Brillenglases unter einer vorgegebenen Schwelle liegt.

Gemäß einem Aspekt der Erfindung umfasst ein Verfahren zum Herstellen eines Brillenglases die Schritte

Erfassen von Rezeptdaten eines Brillenträgers, wobei die Rezeptdaten zumindest eine sphärische Rezeptwirkung umfassen;
Bestimmen der Sollwirkung des Brillenglases in zumindest einem vorgegebenen Bezugspunkt des Brillenglases in Abhängigkeit von den erfassten Rezeptdaten;
Auswahl eines Basisglases aus einer Serie von Basisgläsern mit den Merkmalen gemäß einem bevorzugten Beispiel der Erfindung in Abhängigkeit von den erfassten Rezeptdaten oder von der Sollwirkung des Brillenglases;
Bearbeiten des Basisglases derart, dass die Wirkung des fertigbearbeiteten Brillenglas in dem zumindest einen Bezugspunkt im Wesentlichen gleich der zuvor bestimmten Sollwirkung in diesem Bezugspunkt ist.

Insbesondere werden in Analogie zu einem herkömmlichen Basiskurvensystem den einzelnen Basisgläsern Teilwirkungsbereiche zugeordnet, wobei die einzelnen Teilwirkungsbereiche den vorgegebenen Wirkungsbereich abdecken. In Abhängigkeit von den erfassten Rezeptdaten oder von der Sollwirkung des Brillenglases wird dann ein Basisglas ausgewählt, dessen Teilwirkungsbereich den erfassten Rezeptdaten (insbesondere der sphärischen Rezeptwirkung) oder der Sollwirkung des Brillenglases in dem zumindest einen vorgegebenen Punkt entspricht.

Insbesondere erfolgt die Auswahl in Analogie zu der Auswahl eines Halbfabrikats oder eines Blanks aus einem herkömmlichen Basiskurvensystem in Abhängigkeit von der sphärischen und gegebenenfalls der astigmatischen Rezeptwirkung oder in Abhängigkeit von der sphärischen Sollwirkung und gegebenenfalls der astigmatischen Sollwirkung, welches das fertige Brillenglas in zumindest einem vorgegebenen Bezugspunkt aufweisen soll. Die Sollwirkung kann sich von der Rezeptwirkung unterscheiden.

So kann die Auswahl anhand des Soll-sphärischen Äquivalents in dem zumindest einem Bezugspunkt des Brillenglases oder anhand des sphärischen Äquivalents der Rezeptwirkung erfolgen. Der zumindest eine Bezugspunkt kann z.B. ein Zentrier- bzw. Anpaßpunkt, ein Fernbezugspunkt, ein Prismenbezugspunkt oder ein Nahbezugspunkt des Brillenglases sein.

Das zumindest eine diffraktive Basisgitter kann auf einer ersten Fläche des Basisglases aufgebracht oder angeordnet sein. Die zweite Fläche des Brillenglases kann in an sich bekannter Weise in Abhängigkeit von den erfassten Rezeptdaten ermittelt bzw. berechnet werden. Das Bearbeiten des Basisglases umfasst dann das Bearbeiten der so ermittelten zweiten, gegenüber liegenden Fläche des Basisglases. Das Bearbeiten kann wie bei einem herkömmlichen Brillenglas, z.B. mittels NC-Maschinen, erfolgen.

Die zweite Fläche des Brillenglases kann mittels eines Optimierungsverfahrens ermittelt bzw. berechnet werden. Dementsprechend kann das Verfahren ferner ein Optimieren der zweiten Fläche des Brillenglases umfassen, wobei das Optimieren derart erfolgt, Abbildungsfehler zumindest zweiter Ordnung in Gebrauchsstellung des Brillenglases zu minimieren. Das Optimieren kann in Gebrauchsstellung des Brillenglases erfolgen, wobei die Abbildungsfehler zweiter Ordnung mittels einer Wellenfrontdurchrechnung unter Berücksichtigung des Basisgitters und der Gebrauchsstellung des Brillenglases ermittelt werden. Vorzugsweise erfolgt die Optimierung mittels einer Minimierung einer monochromatischen Zielfunktion oder einer polychromatischen Zielfunktion, in welcher der Farbsaum unmittelbar oder mittelbar durch die Berücksichtigung einer Wellenlängenabhängigkeit eingeht. Es hat sich herausgestellt, dass es möglich ist, durch eine nachträgliche Optimierung einer der refraktiven Flächen des Brillenglases die Abbildungsfehler zweiter oder gegebenenfalls höherer Ordnung zu reduzieren, ohne dass dabei die Farbsaumkorrektur wesentlich beeinträchtigt wird.

Nach dem obigen Verfahren kann eine Serie von (farbsaumkorrigierten) Brillengläsern mit unterschiedlichen Wirkungen hergestellt werden, welche einen gesamten Wirkungsbereich abdecken, wobei der maximale Farbsaum jedes der Brillengläser der Serie innerhalb eines vorgegebenen Bereichs mit einem vorgegebenen Bereich kleiner oder gleich einem vorgegebenen Schwellwert von 0,5 cm/m, vorzugsweise kleiner oder gleich 0,4 cm/m ist, und besonders bevorzugt kleiner oder gleich 0,12 cm/m ist.

Der Wirkungsbereich kann sphärische Wirkungen von zumindest -12 dpt bis +12 dpt und/oder zylindrische Wirkungen bis 4 dpt, vorzugsweise bis zu 6 dpt umfassen. Der vorgegebene Bereich kann z.B. ein Bereich mit einem Durchmesser von mindestens 40 mm sein.

Gemäß einem weiteren Aspekt der Erfindung wird eine Vorrichtung zum Herstellen eines Brillenglases vorgeschlagen, welche ausgelegt ist, das Verfahren zum Herstellen eines Brillenglases auszuführen. Die Vorrichtung kann insbesondere aufweisen:

Erfassungsmittel zum Erfassen von Rezeptdaten eines Brillenträgers, wobei die Rezeptdaten zumindest eine sphärische Rezeptwirkung umfassen;

Sollwirkungs-Berechnungsmittel zum Bestimmen der Sollwirkung des Brillenglases in zumindest einem vorgegebenen Bezugspunkt des Brillenglases in Abhängigkeit von den erfassten Rezeptdaten;

Auswahlmittel zur Auswahl eines Basisglases aus einer Serie von Basisgläsern gemäß einem bevorzugten Beispiel der Erfindung in Abhängigkeit von den erfassten Rezeptdaten oder von der Sollwirkung des Brillenglases;

Bearbeitungsmittel zum Bearbeiten des Basisglases derart, dass die Wirkung des fertigbearbeiteten Brillenglas in dem zumindest einen Bezugspunkt im Wesentlichen gleich der zuvor bestimmten Sollwirkung in diesem Bezugspunkt ist.

Gemäß einem weiteren Aspekt der Erfindung wird eine Serie von Brillengläsern mit unterschiedlichen Wirkungen, welche einen Wirkungsbereich von zumindest -12 dpt bis +12 dpt der sphärischen Wirkung abdecken, vorgeschlagen. Die Serie ist jedoch nicht auf den Wirkungsbereich von -12 dpt bis +12 dpt beschränkt, sondern kann einen kleineren oder einen größeren Wirkungsbereich abdecken. Jedes Brillenglas der Serie weist zumindest ein diffraktives Gitter auf. Die Anzahl der unterschiedlichen Gitter aller Brillengläser der Serie ist kleiner als die Anzahl der Brillengläser. Der maximale Farbsaum jedes der Brillengläser der Serie innerhalb eines vorgegebenen Bereichs mit einem Durchmesser von zumindest 40 mm kleiner oder gleich einem vorgegebenen Schwellwert von 0,5 cm/m ist. Vorzugsweise ist der maximale Farbsaum innerhalb des vorgegebenen Bereichs des Brillenglases kleiner oder gleich 0,4 cm/m, und besonders bevorzugt kleiner oder gleich 0,12 cm/m.

Der Wirkungsabstand zwischen zwei benachbarten Wirkungen bzw. die Abstufung der Wirkungen der Brillengläser der Serie kann z.B. 0,5 dpt sein, vorzugsweise 0,25 dpt. Der Abstand kann auch kleiner als 0,25 dpt sein, z.B. 0,125 dpt.

Der vorgegebene Wirkungsbereich kann ferner zylindrische Wirkungen bis 4 dpt, vorzugsweise bis zum 6 dpt, umfassen. Der Abstand zwischen zwei benachbarten sphärozylindrischen Wirkungen kann z.B. 0,5 dpt sein. Vorzugsweise ist der Abstand zwischen zwei benachbarten sphärozylindrischen Wirkungen 0,25 dpt. Der Abstand kann auch kleiner als 0,25 dpt sein, z.B. 0,125 dpt.

Vorzugsweise ist die Anzahl der unterschiedlichen Gitter in der Serie zwischen 5 und 20.

Die Brillengläser können Einstärkengläser, Mehrstärkengläser oder Progressivgläser sein.

Das zumindest eine diffraktive Gitter jedes Brillenglases der Serie kann auf der Vorderfläche und/oder auf der Rückfläche und/oder auf einer anderen Grenzfläche des Brillenglases aufgebracht werden. Die Grenzfläche kann - wie oben beschrieben - eine Grenzfläche im Inneren eines Compound-Systems umfassend ein Grundglas und ein Deckglas sein.

Die beschränkte Anzahl von unterschiedlichen Gittern, welche die Brillengläser der Serie aufweisen, werden für eine beschränkte Anzahl von Brillengläsern (Basisgläsern) mit vorgegebenen, unterschiedlichen Basiswirkungen berechnet oder optimiert. Vorzugsweise werden die einzelnen Gitter derart berechnet oder optimiert, den Farbsaum des jeweiligen Basisglases mit der vorgegebenen Basiswirkung zu minimieren. Im Allgemeinen sind die Gitterlinien der einzelnen Gitter asphärische Kurven.

Vorzugsweise verlaufen die Gitterlinien der einzelnen Gitter elliptisch. Alternativ können die Gitterlinien rotationssymmetrisch, z.B. (im Wesentlichen) kreisförmig verlaufen. Vorzugsweise ist der Abstand $d(r)$ der Gitterlinien eines Basisgitters mit rotationssymmetrischen Gitterlinien variabel, insbesondere eine Funktion des radialen Abstands von der optischen oder geometrischen Mitte *r* :

$$d(r) = \frac{A}{r}$$

wobei der Parameter *A* von der refraktiven Wirkung des entsprechenden Basisglases und der Abbezahl des Basisglases abhängt.

Für den Gitterabstand als Funktion des radialen Abstands *d(r)* von der optischen Mitte des Brillenglases gilt vorzugsweise:

$$d(r) = \frac{m(\lambda_F - \lambda_C)v_d}{S_{ref,0}(\lambda_d)} \cdot \frac{1}{r},$$

wobei

$S_{ref,0}(\lambda_d)$ den refraktiven Anteil der dioptrischen Wirkung des entsprechenden Basisglases bei einer Wellenlänge $\lambda_d$ ;
$v_d$ die Abbezahl der Basisgläser;
$\lambda_F$ die F-Fraunhofer Linie, welche in die Definition der Abbezahl eingeht;
$\lambda_C$ die C-Fraunhofer Linie, welche in die Definition der Abbezahl eingeht; und
$m$, $m = \pm1,\pm2,...$ die Beugungsordnung

bezeichnen.

Die Gitterstrukturen der einzelnen Gitter können statisch sein. Alternativ können die Gitterstrukturen der einzelnen Gitter durch insbesondere elektrisch schaltbare Strukturen verwirklicht werden.

Ein weiterer Aspekt der Erfindung betrifft ein progressives Brillenglas mit zumindest einem rotationssymmetrischen oder elliptischen diffraktiven Gitter, wobei der maximale Farbsaum des progressiven Brillenglases innerhalb eines (im Wesentlichen) kreisförmigen Bereichs des progressiven Brillenglases mit einem Durchmesser von $d \leq 40$ mm kleiner oder gleich 0,5 cm/m ist, vorzugsweise kleiner oder gleich 0,4 cm/m ist, und besonders bevorzugt kleiner oder gleich 0,12 cm/m ist. Ferner betrifft ein weiterer Aspekt der Erfindung ein astigmatisches Brillenglas mit zumindest einem rotationssymmetrischen oder elliptischen Gitter, wobei der maximale Farbsaum des progressiven Brillenglases innerhalb eines (im Wesentlichen) kreisförmigen Bereichs des progressiven Brillenglases mit einem Durchmesser von $d \leq 40$ mm kleiner oder gleich 0,5 cm/m ist, vorzugsweise kleiner oder gleich 0,4 ist, und besonders bevorzugt kleiner oder gleich 0,12 cm/m ist.

Vorzugsweise ist in beiden Fällen das Gitter rotationssymmetrisch, wobei der Abstand der Gitterlinien variabel ist. Vorzugsweise ist der variable Abstand der Gitterlinien eine Funktion des radialen Abstands von der optischen oder geometrischen Mitte *r* :

$$d(r) = \frac{A}{r}$$

wobei der Parameter *A* von der refraktiven Wirkung des Basisglases und der Abbezahl des Basisglases abhängt.

Vorzugsweise gilt für den Abstand der Gitterlinien *d(r)* von der optischen Mitte

$$d(r) = \frac{m(\lambda_F - \lambda_C)v_d}{S_{ref,0}(\lambda_d)} \cdot \frac{1}{r},$$

wobei

$S_{ref,0}(\lambda_d)$ den refraktiven Anteil der dioptrischen Wirkung eines vorgegebenen Basisglases mit einer vorgegebenen Basiswirkung bei einer Wellenlänge $\lambda_d$ ;

$v_d$ die Abbezahl des Brillenglases;

$\lambda_F$ die F-Fraunhofer Linie, welche in die Definition der Abbezahl eingeht;

$\lambda_C$ die C-Fraunhofer Linie, welche in die Definition der Abbezahl eingeht; und

$m, m = \pm 1, \pm 2,...$ eine vorgegebene Beugungsordnung

bezeichnen.

Weitere Aufgaben, Merkmale und Vorteile der vorliegenden Erfindung werden aus der nachfolgenden Beschreibung beispielhafter Ausführungsformen mit Bezug auf die Zeichnungen ersichtlich. Es zeigen:

Fig. 1      die Beugung einer ebenen Wellenfront beim Einfall auf eine Grenzfläche mit einer periodischen Struktur;

Fig. 2      die Winkelverteilung der Intensität bei einem Sägezahngitter, welches auf einer der Flächen eines Prismas aufgebracht ist;

Fig. 3      das Prinzip der Farbsaumkorrektur durch ein diffraktives Gitter;

Fig. 4      den Farbsaum eines Einstärkenglases ohne diffraktives Gitter als Funktion der Wirkung des Brillenglases für verschiedene Radien $r$;

Fig. 5      den Farbsaum eines Einstärkenglases mit einem diffraktiven Gitter in Abhängigkeit von der dioptrischen Wirkung des Brillenglases für verschiedene Radien $r$ ;

Fig. 6      eine beispielhafte Abdeckung eines vorgegebenen Wirkungsbereichs sphärischer Gläser durch 5 einzelne Basisgläser mit unterschiedlichen Basisgittern;

Fig. 7      ein beispielhaftes doppelkegelförmiges Gebiet von Power-Vektoren **P** von Gläsern, die durch ein diffraktives Gitter, welches an ein Glas mit dem Power-Vektor $\mathbf{P}_0$ angepasst ist, farbsaumkorrigiert werden können;

Fig. 8      die Korrekturbereichen zweier Basisgläser mit benachbarten Basiswirkungen;

Fig. 9      eine beispielhafte Abdeckung eines vorgegebenen Wirkungsbereichs sphärozylindrischer Gläser durch 20 Basisgläser mit unterschiedlichen rotationssymmetrischen Basisgittern;

Fig. 10      eine beispielhafte Abdeckung des rein sphärischen Wirkungsbereichs mit 5 Gittern;

Fig. 11      die Beugungseffizienz als Funktion der Wellenlänge;

Fig. 12      Schemazeichnung des Strahlverlaufs für eine Strahldurchrechnung und Wellenfrontdurchrechnung bei einem optischen System;

Fig. 13      Schemazeichnung des Strahlverlaufs für eine Strahldurchrechnung und Wellenfrontdurchrechnung bei einem Brillenglas;

Fig. 14      Strahlverlauf im Fall einer ebenen Grenzfläche mit einem diffraktiven Gitter;

Fig. 14A      die gegenseitige Lage des Koordinatensystems der einfallenden Wellenfront und des Koordinatensystems der Grundfläche;

Fig. 15      zeigt Gitterlinien eines einfach periodischen, diffraktiven Gitters auf einer ebenen Grenzfläche;

Fig. 16      zeigt Gitterlinien eines diffraktiven Gitters auf einer ebenen Grenzfläche;

Fig. 17      zeigt Gitterlinien eines diffraktiven Gitters auf einer gekrümmten Grenzfläche;

Fig. 18      ein Ablaufschema, welches den Übergang zwischen dem Vektorfeld $\mathbf{d}(\bar{x}^0, \bar{y}^0)$ und der Phasenfunktion $\psi^0(\bar{x}^0, \bar{y}^0)$ illustriert

zeigen.

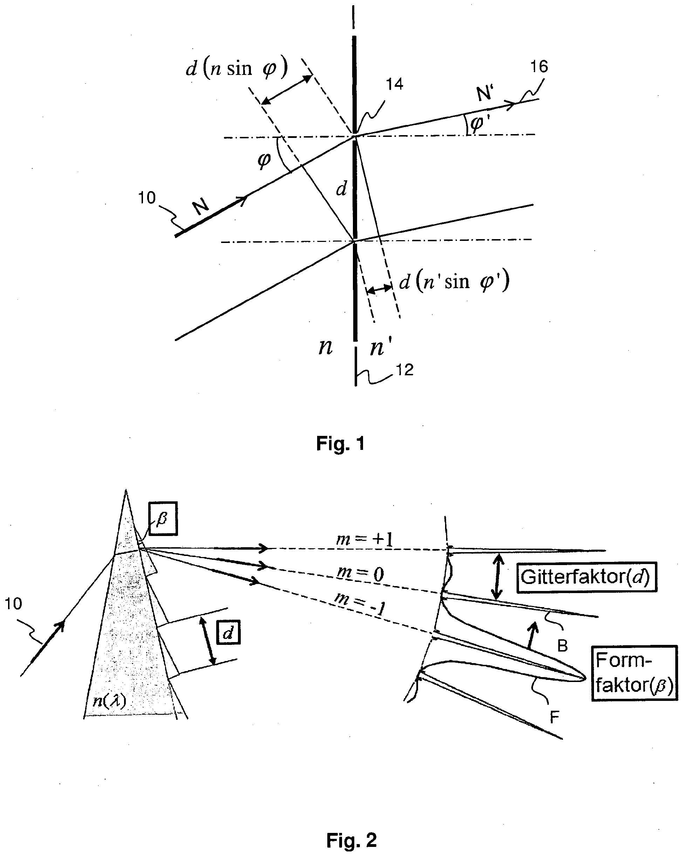

**Fig. 1** zeigt schematisch die Lichtbeugung bei Einfall einer ebenen Wellenfront 10 auf eine Grenzfläche 12 mit einer periodischen Struktur 14 (diffraktives Gitter). Aufgrund der Interferenz entsteht eine winkelabhängige Verteilung der Intensität der ausfallenden Wellenfront 16, welche mehrere Beugungsmaxima aufweist. Die Interferenzbedingung ist $d(n'\sin\varphi')-d(n\sin\varphi)=m\lambda$. Hierbei ist $\lambda$ die Wellenlänge, $\varphi, \varphi'$ die Ein- und Ausfallswinkel, $n, n'$ die beiden Brechungsindizes (vor und nach der Grenzfläche mit dem Gitter) und $d$ die Gitterkonstante. Die Winkelverteilung der Intensität kann als Produkt aus zwei Faktoren, nämlich dem Beugungsfaktor und dem Formfaktor, geschrieben werden. Die Positionen der Maxima des Beugungsfaktors hängen nur von der Gitterkonstanten $d$ und der Anzahl der Gitterlinien ab, die Maximumsposition des Formfaktors dagegen nur von der Elementarstruktur des Gitters (z.B. bei Sägezahnform vom Blazing-Winkel $\beta$).

Ein Hauptmerkmal eines diffraktiven Gitters ist dabei der Beugungsfaktor, der beschreibt, dass die Intensitätsverteilung mehrere Maxima enthält, die sich nach den Beugungsordnungen $m$ durchzählen lassen. Diese folgen einem modifizierten Brechungsgesetz $n'\sin\varphi'-n\sin\varphi=m\lambda/d$. Lediglich das Maximum der 0-ten Beugungsordnung ($m=0$) genügt dem klassischen Brechungsgesetz. Alle anderen Richtungen kämen refraktiv nicht vor. Im Strahlenbild bedeutet dies, dass ein Strahl in mehrere Teilstrahlen aufgespalten wird. Wie sich die Intensität auf die einzelnen Beugungsordnungen aufteilt, wird durch den Formfaktor bestimmt. **Fig. 2** zeigt schematisch die Winkelverteilung der Intensität bei einem Sägezahngitter 14, welches auf einer der Flächen eines Prismas 20 aufgebracht ist. Die Linie F entspricht dem Formfaktor, die Linie B dem Beugungsfaktor.

Bei der Übertragung dieser Grundsachverhalte auf optische Elemente (z.B. Prismen, Linsen, Brillengläser, etc.) muss berücksichtigt werden, dass ein optisches Element zumindest zwei Grenzflächen besitzt. Dabei ist es üblich

1) Polarisationseffekte zu vernachlässigen, d.h. mit der skalaren Beugungstherorie weiterhin auszukommen,
2) das Rayleigh-Sommerfeldsche Beugungsintegral mit Fraunhofer- oder höchstens Fresnel-Beugung zu betrachten,
3) nur Fernfeldinterferenzen zu betrachten und
4) Streuungseffekte zu vernachlässigen.

Die dritte Annahme wird oft stillschweigend getroffen. Diese ist jedoch gültig, solange die beiden Glasflächen weiter voneinander entfernt sind als die Kohärenzlänge von Tageslicht oder Glühlampenlicht von $3 \mu m$. Dies ist in der Regel bei Brillengläsern der Fall.

Der Farbsaum von optischen Elementen im Allgemeinen beruht darauf, dass diese zumindest zwei refraktive Grenzflächen aufweisen, wobei die beiden kombinierten refraktiven Grenzflächen eines optischen Elements eine wellenlängenabhängige prismatische Wirkung $Pr_{ref}$ besitzen. Die Anwendung von diffraktiver Optik zur Farbsaumkorrektur basiert darauf, auf zumindest einer der refraktiven Grenzflächen des optischen Elements ein diffraktives Gitter aufzubringen, für das aufgrund des diffraktiv modifizierten Brechungsgesetzes für $m \neq 0$ eine zusätzliche prismatische Wirkung $Pr_{diff}$ eingeführt wird.

Bei geeigneter Auslegung oder Dimensionierung des diffraktiven Gitters (insbesondere der Periode $d$ des diffraktiven Gitters) gibt es dann eine Ordnung $m = m_0$, für welche die Wellenlängenabhängigkeit von $Pr_{diff}$ der gewöhnlichen Dispersion des refraktiven Prismas $Pr_{ref}$ entgegengesetzt ist und ein derartige Größe hat, dass das Gesamtprisma $Pr=Pr_{ref}+Pr_{diff}$ nahezu wellenlängenunabhängig ist. Um genau für diese Ordnung $m_0$ eine möglichst hohe Intensität zu erreichen, d.h. um die Beugungseffizienz zu maximieren, kann die Gitterform geeignet gestaltet werden. Bei einem Sägezahngitter erfolgt dies durch eine geeignete Wahl des Blazing-Winkels.

### Farbsaum und optimale Farbsaumkompensation durch ein diffraktives Gitter bei einem refraktiven Prisma

Wie bereits oben ausgeführt entsteht bei einem optischen Element (wie z.B. einer Linse, einem Prisma, einem Brillenglas, etc.), welches durch rein refraktive Flächen begrenzt ist, ein Farbsaum als Folge von zwei aufeinanderfolgenden Brechungen, bei denen jeweils kurzwelliges Licht stärker gebrochen wird als langwelliges. Der Farbsaum ist ein lokales Phänomen, das sich durch die kombinierte lokale prismatische Wirkung beider Einzelflächen gut beschreiben lässt, d.h. durch das Gesamtprisma, das durch die lokale Verkippung der beiden Flächen zueinander um einen Prismenkeilwinkel $\alpha$ entsteht.

Anhand eines solchen Prismas kann auch die Auswirkung zusätzlicher diffraktiver Gitter beschrieben werden, die auf der Prismenvorderfläche (Fläche 1) oder der Prismenrückfläche (Fläche 2) oder auf beiden Flächen (nachfolgend auch Grenzflächen genannt) aufgebracht werden können.

Für jedes Gitter, welches auf zumindest einer der Flächen 1 oder 2 aufgebracht ist, kann eine entsprechende Phasenfunktion $\Psi_{1,2}$ eingeführt werden. Die Phasenfunktion $\Psi(\bar{x},\bar{y})$ stellt die optische Pfadlängendifferenz (Optical Path Difference oder OPD), welche durch das diffraktive Gitter eingeführt wird, als Funktion der Koordinaten $\bar{x},\bar{y}$ senkrecht zur Strahlrichtung dar. Das Koordinatensystem $\bar{x},\bar{y},\bar{z}$ ist ein lokales Koordinatensystem, welches dazu dient, den Durchtritt eines Strahls durch eine Grenzfläche zu beschreiben, wobei am Durchstoßpunkt des Hauptstrahls mit der Grenzfläche $(\bar{x},\bar{y},\bar{z}) = (0,0,0)$ gilt, und wobei die $\bar{z}$-Achse dort senkrecht zur Grundfläche steht. Eine spezielle mögliche Wahl eines solchen lokalen Systems besteht darin zu fordern, dass der einfallende Strahl beispielsweise in der $\bar{x}$-$\bar{z}$-Ebene oder in der $\bar{y}$-$\bar{z}$-Ebene liegt. Im Allgemeinen muss jedoch diese Bedingung nicht notwendigerweise erfüllt sein. Die Verwendung von lokalen Koordinatensystemen ist z.B. aus WO 2008/089999 A1 bekannt und wird z.B. bei der Wellenfrontdurchrechnung 2.Ordnung durch Flächen ohne diffraktives Gitter verwendet. Typischerweise werden so viele lokale Systeme, wie Hauptstrahlen gerechnet werden sollen, verwendet. Darüber hinaus kann ein globales Koordinatensystem verwendet werden.

Der an einer der Grenzflächen einfallenden Wellenfront 14 kann der Richtungsvektor

$$\mathbf{N} = \begin{pmatrix} \sin \varphi_x \\ \sin \varphi_y \\ \sqrt{1 - \sin^2 \varphi_x - \sin^2 \varphi_y} \end{pmatrix}$$

zugeordnet werden (siehe Fig. 1). Der Richtungsvektor

$$\mathbf{N'} = \begin{pmatrix} \sin\varphi'_x \\ \sin\varphi'_y \\ \sqrt{1 - \sin^2\varphi'_x - \sin^2\varphi'_y} \end{pmatrix}$$

kann der ausfallenden Wellenfront 16 zugeordnet werden (siehe Fig. 1).

Eine Wellenfrontdurchrechnung für die Durchrechnung von Strahlen, welche in einem lokalen Koordinatensystem $(\bar{x},\bar{y},\bar{z})$ durch die Richtungsvektoren $\mathbf{N},\mathbf{N'}$ beschrieben werden, ergibt für die allgemeinen Gesetze für die Strahlablenkung:

$$n'_1 \sin\varphi'_1 - n_1 \sin\varphi_1 = \frac{\partial}{\partial r}\Psi_1(\bar{x},\bar{y};\lambda,m_1)$$

$$n'_2 \sin\varphi'_2 - n_2 \sin\varphi_2 = \frac{\partial}{\partial r}\Psi_2(\bar{x},\bar{y};\lambda,m_2)$$

wobei:

$n'_1$ den Brechungsindex des Materials nach der Grenzfläche 1;
$n_1$ den Brechungsindex des Materials vor der Grenzfläche 1;
$n'_2$ den Brechungsindex des Materials nach der Grenzfläche 2;
$n_2$ den Brechungsindex des Materials vor der Grenzfläche 2;
$\varphi_1$ den Einfallswinkel des Strahls auf die Grenzfläche 1;
$\varphi'_1$ den Austrittswinkels des Strahls nach der Brechung an der Grenzfläche 1;
$\varphi_2$ den Einfallswinkel des Strahls auf die Grenzfläche 2;
$\varphi'_2$ den Austrittswinkels des Strahls nach der Brechung an der Grenzfläche 2;
$m_1$ und $m_2$ die Beugungsordnungen

bezeichnen.

In einer ersten Annäherung eines optischen Elements mit einem diffraktiven Gitter kann die obige allgemeine Formel statt auf die Raumdimensionen $x,y$ nur auf eine Raumdimension $x$ angewendet werden (eindimensionaler Fall). Werden ferner nur diejenige Strahlen betrachtet, welche in der Ebene senkrecht zur Prismenkante verlaufen, dann ist es ausreichend, statt den Winkeln $\varphi_x$ und $\varphi_y$ einen Winkel $\varphi$ zu verwenden.

An den (Grenz)Flächen 1 und 2 gilt dann entsprechend:

$$n'_1 \sin\varphi'_1 - n_1 \sin\varphi_1 = \frac{\partial}{\partial r}\Psi_1(x;\lambda,m_1)$$

$$n'_2 \sin\varphi'_2 - n_2 \sin\varphi_2 = \frac{\partial}{\partial r}\Psi_2(x;\lambda,m_2)$$

$$(1)$$

In einer paraxialen Näherung gilt $\sin\varphi'_1 \approx \varphi'_1$, $\sin\varphi'_2 \approx \varphi'_2$ etc.. Sind ferner die Grenzflächen 1 und 2 (z.B. die Grenzflächen eines Brillenglases) von Luft umgeben, dann gilt $n_1 = 1$, $n'_1 = n$, $n_2 = n$, $n'_2 = 1$, wobei $n$ der Brechungsindex des optischen Materials zwischen den Grenzflächen ist.

$$n\varphi'_1 - \varphi_1 = \frac{\partial}{\partial r}\Psi_1(x;\lambda,m_1)$$

$$\varphi'_2 - n\varphi_2 = \frac{\partial}{\partial r}\Psi_2(x;\lambda,m_2)$$

$$(1a)$$

In diesem einfachen Fall kann Gleichung (1) auf den Lichtdurchgang durch ein Prisma mit einem lokalen

Prismenkeilwinkel $\alpha(x)$ angewendet werden. Für die lokale wellenlängenabhängige Winkelablenkung gilt dann:

$$\Delta\varphi(x;\lambda) := \varphi'_2 - \varphi_1 + \alpha(x) = -(n(\lambda)-1)\alpha(x) + \frac{\partial}{\partial x}\Psi(x;\lambda) \qquad (2)$$

wobei

$$\Psi(x;\lambda) := \Psi_1(x;\lambda,m_1) + \Psi_2(x;\lambda,m_2) \qquad (3)$$

Das bedeutet, dass die totale Winkeländerung additiv aus zwei Beiträgen zusammen setzt, nämlich aus einem refraktiven und einem diffraktiven Anteil:

$$\Delta\varphi(x;\lambda) = \Delta\varphi_{\text{ref}}(x;\lambda) + \Delta\varphi_{\text{diff}}(x;\lambda) \qquad (4)$$

wobei

$$\Delta\varphi_{\text{ref}}(x;\lambda) = -(n(\lambda)-1)\alpha(x)$$

$$\Delta\varphi_{\text{diff}}(x;\lambda) = \frac{\partial}{\partial x}\Psi(x;\lambda) \qquad (5)$$

Dabei können $\Delta\varphi_{\text{ref}}(x;\lambda)$ als das refraktive Prisma oder das Grundprisma, $\Delta\varphi_{\text{diff}}(x;\lambda)$ als das diffraktive Prisma und $\Delta\varphi(x;\lambda)$ als das Gesamtprisma bezeichnet werden.

Ein Maß für den Farbsaum FS eines optischen Elements (z.B. eines refraktiven Prismas, einer refraktiven Linse, eines Brillenglases, etc.) ist die absolute Winkelbreite des Farbsaums

$$FS = \left| \Delta\varphi(x;\lambda_{F'}) - \Delta\varphi(x;\lambda_{C'}) \right|,$$

wobei die Indizes e, F', C' für die bestimmten Wellenlängen stehen, durch welche die Abbezahl $v_e = (n_e-1)/(n_{F'}-n_{C'})$ definiert ist. Hier sind $n_e$, $n_{F'}$, $n_{C'}$ die Brechzahlen des optischen Materials bei den Wellenlängen $\lambda_e$ = 546,073 nm, $\lambda_{F'}$ = 479,99 nm, $\lambda_{C'}$ = 643,85 nm.

Alternativ kann als Maß für den Farbsaum die absolute Winkelbreite

$$FS = \left| \Delta\varphi(x;\lambda_F) - \Delta\varphi(x;\lambda_C) \right|$$

entsprechend der alternativen Abbezahl $v_d=(n_d-1)/(n_F-n_C)$ verwendet werden. In diesem Fall stehen die Indizes d, F, C für die bestimmten Wellenlängen, durch die die alternative Abbezahl $v_d=(n_d-1)/(n_F-n_C)$ definiert ist. Hier sind $n_d$, $n_F$ und $n_C$ die Brechzahlen des optischen Materials bei den Wellenlängen $\lambda_d$ = 587,562 nm, $\lambda_F$ = 486,134 nm und $\lambda_C$ = 656,281 nm.

Nachfolgend wird als Maß für den Farbsaum die absolute Winkelbreite $FS = |\Delta\varphi(x;\lambda_F) - \Delta\varphi(x;\lambda_C)|$ entsprechend der alternativen Abbezahl $v_d =(n_d-1)/(n_F-n_C)$ verwendet. Selbstverständlich können die nachfolgenden Formeln auch für den Fall entsprechend angewendet werden, dass der Farbsaum durch $FS = |\Delta\varphi(x; \lambda_{F'}) - \Delta\varphi(x; \lambda_{C'})|$ oder z.B. durch andere Wellenlängen definiert wird. In diesem Fall tritt an Stelle des Index d der Index e, anstelle des Index F der Index F', und anstelle des Index C der Index C'.

Es ist zweckmäßig, eine vorzeichenabhängige Definition des Farbsaums zu verwenden, z.B.

$$FS(x) = \Delta\varphi(x;\lambda_F) - \Delta\varphi(x;\lambda_C) \qquad (6)$$

wobei ein negativer Winkel für eine Strahlablenkung nach unten steht (also zu kleineren Werten von x), ein positiver nach oben (also zu größeren Werten von x). Wegen der Additivität des refraktiven und des diffraktiven Anteils in Gleichung (4) kann der Farbsaum als Summe eines refraktiven Farbsaums $FS_{ref}$ und eines diffraktiven Farbsaums $FS_{diff}$ dargestellt werden:

$$FS = FS_{ref} + FS_{diff}. \tag{7}$$

Der refraktive Farbsaum ist durch das Prisma, geteilt durch die Abbezahl gegeben:

$$
\begin{aligned}
FS_{ref} = FS_{ref}(x) &= \Delta\varphi_{ref}(x;\lambda_F) - \Delta\varphi_{ref}(x;\lambda_C) \\
&= \frac{\Delta\varphi_{ref}(x;\lambda_F) - \Delta\varphi_{ref}(x;\lambda_C)}{\Delta\varphi_{ref}(x;\lambda_d)} \Delta\varphi_{ref}(x;\lambda_d) \\
&= \frac{-(n_F-1)\alpha - (-(n_C-1)\alpha)}{-(n_d-1)\alpha} \Delta\varphi_{ref}(x;\lambda_d) \\
&= \frac{\Delta\varphi_{ref}(x;\lambda_d)}{v_d},
\end{aligned} \tag{8}
$$

Der diffraktive Farbsaumbeitrag ist durch

$$
\begin{aligned}
FS_{diff} = FS_{diff}(x) &= \Delta\varphi_{diff}(x;\lambda_F) - \Delta\varphi_{diff}(x;\lambda_C) \\
&= \frac{\partial}{\partial x}\Psi(x;\lambda_F) - \frac{\partial}{\partial x}\Psi(x;\lambda_C)
\end{aligned} \tag{9}
$$

gegeben.

Damit eine "ideale" Farbsaumkompensation des refraktiven Farbsaums durch den diffraktiven Beitrag stattfinden kann, muss gelten

$$FS_{ref} + FS_{diff} = 0 \tag{10}$$

Soll der Farbsaum für ein Prisma mit refraktiver prismatischer Wirkung $\Delta\varphi_{ref} = \Delta\varphi_{ref,0}$ vollständig korrigiert werden, dann muss das diffraktive Gitter so gewählt werden, dass

$$
\begin{aligned}
FS_{diff}(x) &= -\frac{\Delta\varphi_{ref,0}(x;\lambda_d)}{v_d} \\
\Delta\varphi_{diff}(x;\lambda_F) - \Delta\varphi_{diff}(x;\lambda_C) &= -\frac{\Delta\varphi_{ref,0}(x;\lambda_d)}{v_d}
\end{aligned} \tag{11}
$$

erfüllt ist. Dies kann z.B. durch ein Gitter mit

$$\Delta\varphi_{diff}(x;\lambda) = -\frac{\Delta\varphi_{ref,0}(x;\lambda_d)}{v_d} \cdot \frac{\lambda}{\lambda_F - \lambda_C} \tag{12}$$

erreicht werden.

Im Fall eines Prismas mit Planflächen und einer von $x$ unabhängigen refraktiven Ablenkung $\Delta\varphi_{ref,0}(\lambda_d)$ eignet

sich eine Phasenfunktion der Form $\Psi(x;\lambda) = a_1 x + a_0$. Aus Gleichung (12) kann der Parameter $a_1$ wie folgt bestimmt werden:

$$a_1 = -\frac{\Delta\varphi_{\text{ref},0}(\lambda_d)}{v_d} \cdot \frac{\lambda}{\lambda_F - \lambda_C}.$$

Da in diesem Fall die Bedingung $\dfrac{\partial\Psi(x;\lambda)}{\partial x} = a_1 = \dfrac{m\lambda}{d(x)}$ erfüllt ist, gilt dann für den Gitterabstand

$d(x) = \dfrac{m\lambda}{a_1} = -\dfrac{m}{\Delta\varphi_{\text{ref},0}(\lambda_d)} v_d (\lambda_F - \lambda_C) = const.$ Die Beugungsordnung kann geeignet festgelegt werden. So kann z.B. $m = -1$ sein.

Wird eine Farbsaumkorrektur passend zum Grundprisma $\Delta\varphi_{\text{ref},0}$ vorgenommen und ist das tatsächliche Grundprisma durch $\Delta\varphi_{\text{ref},0}$ gegeben, dann kompensiert das Gitter den Farbsaum nur teilweise und der restliche Farbsaum ist gegeben durch

$$FS(x) = \frac{\Delta\varphi_{\text{ref}}(x;\lambda_d)}{v_d} - \frac{\Delta\varphi_{\text{ref},0}(x;\lambda_d)}{v_d} = \frac{\Delta\varphi_{\text{ref}}(x;\lambda_d) - \Delta\varphi_{\text{ref},0}(x;\lambda_d)}{v_d} \qquad (13)$$

Das gesamte Prisma bei Wellenlänge $\lambda_d$ im Fall einer teilweisen Farbsaumkompensation ist durch

$$\Delta\varphi(x;\lambda_d) = \Delta\varphi_{\text{ref}}(x;\lambda_d) - \frac{\Delta\varphi_{\text{ref},0}(x;\lambda_d)}{v_d} \cdot \frac{\lambda_d}{\lambda_F - \lambda_C} \qquad (14)$$

gegeben.

Bei einer vollständigen Farbsaumkompensation ist die Bedingung $\Delta\varphi_{\text{ref}}(x;\lambda_d) = \Delta\varphi_{\text{ref},0}(x;\lambda_d)$ erfüllt. In diesem Fall ist $FS(x) = 0$. Das gesamte Prisma bei Wellenlänge $\lambda_d$ ist nach Gleichung (14) gegeben durch

$$\Delta\varphi(x;\lambda_d) = \Delta\varphi_{\text{ref},0}(x;\lambda_d)\left(1 - \frac{1}{v_d} \cdot \frac{\lambda_d}{\lambda_F - \lambda_C}\right) \qquad (15)$$

Da $\lambda_F - \lambda_C < 0$ ist, ist die Klammer größer als 1, so dass das Gesamtprisma $\Delta\varphi$ gegenüber dem Grundprisma $\Delta\varphi_{\text{ref},0}$ immer leicht verstärkt ist.

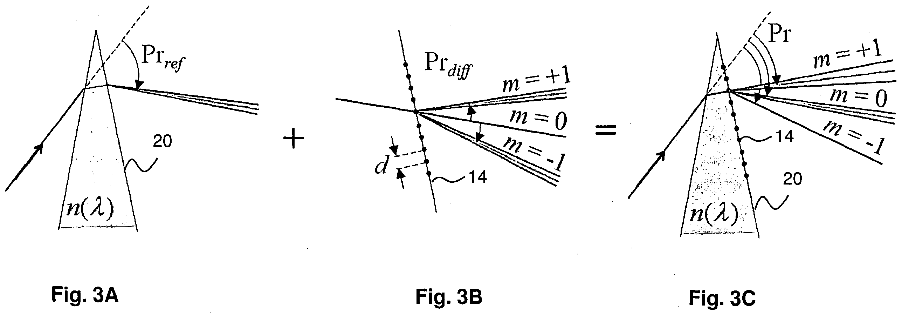

**Fig. 3** zeigt das Prinzip der Farbsaumkorrektur durch ein diffraktives Gitter bei einem refraktiven Prisma. **Fig. 3A** zeigt den Farbsaum eines Prismas 20 mit einem Prismenwikel $\alpha$, welcher durch die wellenlängenabhängige prismatische Wirkung $Pr_{ref}$ des Prismas 20 bedingt ist. **Fig. 3B** zeigt die wellenlängenabhängige Beugung durch das diffraktive Gitter 14. **Fig. 3C** zeigt die kombinierte Wirkung des Prismas 20 und des diffraktiven Gitters 14. Für die gegebene Gitterkonstante $d$ findet eine Farbsaumkorrektur in der Ordnung $m = -1$ statt. Die wellenlängenabhängige prismatische Wirkung des Prismas 20 ist $Pr_{ref} = -(n(\lambda)-1)\alpha$. Das diffraktive Gitter 14 mit der Gitterkonstante $d$ hat eine prismatische

Wirkung $Pr_{diff} = \dfrac{m\lambda}{d}$. Die kombinierte Wirkung des Prismas 20 mit dem Gitter 14 ist $Pr = Pr_{ref} + Pr_{diff}$. Für eine Farbsaumkorrektur wird verlangt, dass $\left.\dfrac{\partial Pr}{\partial\lambda}\right|_{\lambda=\lambda_D} = 0$ für eine vorgegebene Designwellenlänge $\lambda_D$ ist. Für die Gitterkonstante ergibt sich dann $d \approx \dfrac{m}{\alpha \cdot \partial n / \partial \lambda}$.

**Farbsaum und (optimale) Farbsaumkompensation durch ein diffraktives Gitter bei einem rotationssymmetrischen Einstärkenglas**

Rotationssymmetrische Brillengläser können statt durch zwei unabhängige Koordinaten $x$ und $y$ durch einen einzigen Freiheitsgrad beschrieben werden. Wird dieser Freiheitsgrad mit $r$ bezeichnet, dann können für die Meridionalstrahlen Gleichungen (1) bis (15) angewendet werden, indem dort $x$ durch $r$ ersetzt wird. Die Prentice'sche Regel besagt, dass $\Delta\varphi_{ref}(r;\lambda_d) = -S_{ref}(\lambda_d)r$ ist. Hierbei steht $S_{ref}$ für die refraktive dioptrische Wirkung des Glases, die aufgrund der Flächenkrümmungen zustandekommt und $r$ für den Abstand von der optischen Mitte oder dem Scheitel des Brillenglases. Unter "Wirkung" des Glases kann auch der Scheitelbrechwert des Glases, der Brechwert, die Brechkraft oder ein sonstiges Maß für die Wirkung verstanden werden.

Der refraktive Farbsaum nach Gleichung (8) ist in diesem Fall

$$FS_{ref}(x) = \frac{-S_{ref}(\lambda_d)r}{v_d} \qquad (16)$$

Der diffraktive Farbsaum eines passend zur refraktiven Wirkung $S_{ref,0}$ gewählten Gitters ist nach Gleichung (11)

$$FS_{diff}(r) = -\frac{-S_{ref,0}(\lambda_d)r}{v_d} \qquad (17)$$

Der gesamte Farbsaum ergibt sich nach Gleichung (13) zu

$$FS(r) = -\frac{(S_{ref} - S_{ref,0})r}{v_d} \qquad (18)$$

Der Farbsaum eines rotationssymmetrischen Einstärkenglases ist nach Gleichung (16) proportional zur Wirkung und zum Abstand $r$.

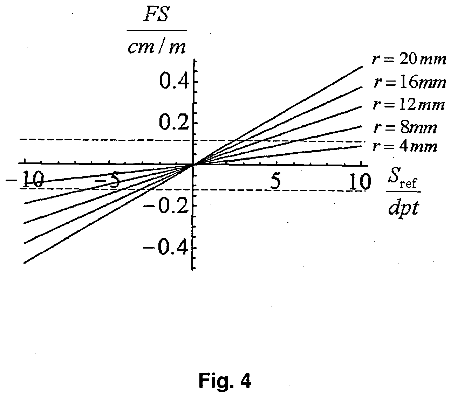

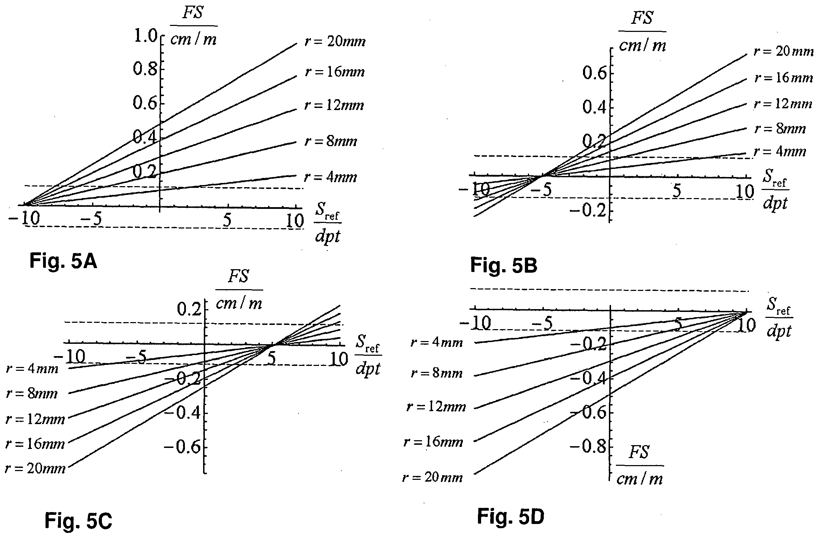

**Fig. 4** zeigt den Farbsaum eines Einstärkenglases ohne diffraktives Gitter als Funktion der Wirkung des Brillenglases für verschiedene Radien $r$. Das Brillenglas hat eine Abbezahl $v_d$ = 42.41. **Fig. 5A bis 5D** zeigen jeweils den Farbsaum eines Einstärkenglases mit einem diffraktiven Gitter in Abhängigkeit von der dioptrischen Wirkung des Brillenglases für verschiedene Radien $r$. Das Brillenglas hat eine Abbezahl $v_d$ = 42.41. Das diffraktive Gitter wird passend für verschiedene Grundwirkungen $S_{ref,0}$ ausgewählt.; In **Fig. 5A** ist $S_{ref,0}$ = -10$dpt$, in **Fig. 5B** $S_{ref,0}$ = -5$dpt$, in **Fig. 5C** $S_{ref,0}$ = +5$dpt$ und in **Fig. 5D** $S_{ref,0}$ = +10$dpt$.

Eingezeichnet in Fig. 4 und 5A bis 5D ist ferner eine typische Wahrnehmungsschwelle für den Farbsaum von $|FS| \leq 0{,}12 cm/m$ für den Farbsaum (vgl. gestrichelte Linie). Die angenommene Wahrnehmungsschwelle kann jedoch eine andere sein, beispielsweise kann die Wahrnehmungsschwelle zwischen $FS \approx 0{,}04 cm/m$, und $FS \approx 0{,}5 cm/m$ sein, vorzugsweise zwischen $FS \approx 0{,}04 cm/m$, und $FS \approx 0{,}2 cm/m$.

Wie aus der Fig. 4 ersichtlich, darf ein rotationssymmetrisches Einstärkenglas eine Wirkung von bis zu $|S_{ref}| \approx$ 2,5$dpt$ haben, damit der Farbsaum im Abstand von bis zu $r$ = 20$mm$ von der optischen Mitte noch unter der Wahrnehmungsschwelle $|FS| \leq 0{,}12 cm/m$ liegt. Je höher die Wirkung $S_{ref}$ ist, desto kleiner ist der Radius $r$ auf dem Brillenglas, innerhalb dessen der Farbsaum noch akzeptabel ist. Für ein Glas mit einer höheren Wirkung $S_{ref}$ ist es daher vorteilhaft, von der Farbsaumkompensation durch ein rotationssymmetrisches diffraktives Gitter Gebrauch zu machen.

Gleichung (18) bedeutet, dass der Farbsaum eines rotationssymmetrischen Glases mit einem diffraktiven Gitter von der Differenz $(S_{ref} - S_{ref,0})$ so abhängt, wie der Farbsaum eines unkorrigierten Glases von $S_{ref}$ allein. Eine Farbsaumkorrektur, welche passend zur Wirkung $S_{ref,0}$ vorgenommen wird, bewirkt folglich lediglich eine Verschiebung des gemeinsamen Schnittpunktes aller Geraden, die sich in Fig. 4 bei $S_{ref}$ = 0 schneiden, derart, dass sie sich bei $S_{ref}$ = $S_{ref,0}$ schneiden (siehe Fig. 5A bis 5D).

Soll der Farbsaum für das Glas mit refraktiver Wirkung $S_{ref}(\lambda_d) = S_{ref,0}(\lambda_d)$ vollständig korrigiert werden, dann muss das diffraktive Gitter so gewählt werden, dass Gleichung (17) erfüllt ist, d.h. dass die Bedingung

$$\Delta\varphi_{\text{diff}}(r;\lambda_F) - \Delta\varphi_{\text{diff}}(r;\lambda_C) = \frac{S_{\text{ref},0}(\lambda_d)r}{v_d} \qquad (11a)$$

erfüllt ist.

Dies kann z.B. durch ein Gitter mit einer Phasenfunktion $\Psi(r;\lambda) = \dfrac{a_2}{2} r^2 + a_0$ mit

$$a_2 = \frac{S_{\text{ref},0}(\lambda_d)}{v_d} \cdot \frac{\lambda}{\lambda_F - \lambda_C}$$ erzielt werden.

Wegen der Bedingung $\dfrac{\partial\Psi(r;\lambda)}{\partial r} = a_2 r = \dfrac{m\lambda}{d(r)}$ gilt dann für den Gitterabstand

$$d(r) = \frac{m\lambda}{a_2 r} = \frac{m(\lambda_F - \lambda_C)v_d}{S_{\text{ref},0}(\lambda_d)\cdot r} \propto \frac{1}{r}.$$

Der diffraktive Beitrag zur Wirkung eines Gitters, das passend zur refraktiven Wirkung $S_{\text{ref},0}(\lambda_d)$ gewählt ist, ergibt sich dann nach Gleichung (12) zu

$$S_{\text{diff}}(\lambda_d) = -\frac{S_{\text{ref},0}(\lambda_d)}{v_d} \cdot \frac{\lambda}{\lambda_F - \lambda_C}, \qquad (19)$$

Die gesamte Wirkung eines teilweise farbsaumkompensierten Glases ist gemäß Gleichung (14) gegeben durch

$$S(\lambda_d) = S_{\text{ref}}(\lambda_d) - \frac{S_{\text{ref},0}(\lambda_d)}{v_d} \cdot \frac{\lambda_d}{\lambda_F - \lambda_C} \qquad (20)$$

Die gesamte Wirkung bei vollständiger Farbsaumkompensation ist gemäß Gleichung (15) gegeben durch

$$S(\lambda_d) = S_0(\lambda_d) \qquad (21)$$

mit

$$S_0(\lambda_d) = S_{\text{ref},0}(\lambda_d)\left(1 - \frac{1}{v_d} \cdot \frac{\lambda_d}{\lambda_F - \lambda_C}\right) \qquad (22)$$

Da bei unvollständiger Farbsaumkompensation

$$S(\lambda_d) - S_0(\lambda_d) = S_{\text{ref}}(\lambda_d) - S_{\text{ref},0}(\lambda_d) \qquad (22)$$

gilt, kann Gleichung (18) auch als

$$FS(r) = -\frac{(S - S_0)r}{v_d} \tag{23}$$

geschrieben werden.

Der Farbsaum kann folglich als Funktion von S durch Abbildungen, die aus den Figuren 4 und 5A bis 5D durch Ersetzen der Achsenbeschriftung $S_{ref}$ durch die Achsenbeschriftung S hervorgehen, beschrieben werden.

Maßgeblich dafür, inwieweit der Farbsaum in der Peripherie von rotationssymmetrischen Einstärkengläsern nicht vollständig korrigiert wird, ist folglich die Abweichung zwischen der verordneten sphärischen Gesamtwirkung und der Gesamtwirkung, an die das Gitter angepasst ist.

**Farbsaum und (optimale) Farbsaumkompensation durch ein diffraktives Gitter bei einem sphärozylindrischen Einstärkenglas**

Hat ein Einstärkenglas zusätzlich zu der Wirkung ebenfalls einen Zylinder, fehlt die Rotationssymmetrie. In diesem Fall werden zwei Freiheitsgrade $x$ und $y$ benötigt, die sich zu einem Vektor **r** zusammenfassen lassen. Wie aus der Gleichung (1) ersichtlich, gibt es in diesem Fall statt eines Winkels $\varphi$ zwei Komponenten $\varphi_x$ und $\varphi_y$, welche sich zu einem Vektor $\varphi$ zusammenfassen lassen. Die entsprechende vektorielle Erweiterung der Gleichungen (4, 5) im Fall einer paraxialen Näherung kann wie folgt dargestellt werden:

$$\Delta\varphi(\mathbf{r};\lambda) = \Delta\varphi_{ref}(\mathbf{r};\lambda) + \Delta\varphi_{diff}(\mathbf{r};\lambda) \tag{4a}$$

wobei

$$\Delta\varphi_{ref}(r;\lambda) = -(n(\lambda) - 1)\boldsymbol{\alpha}(r)$$
$$\Delta\varphi_{diff}(r;\lambda) = \nabla_{\mathbf{r}}\Psi(\mathbf{r};\lambda) \tag{5a}$$

Zur Definition des Farbsaums eines nicht rotationssymmetrischen Brillenglases kann die Gleichung (6) wie folgt modifiziert werden:

$$FS(\mathbf{r}) = \left|\Delta\varphi(\mathbf{r};\lambda_F) - \Delta\varphi(\mathbf{r};\lambda_C)\right| \tag{6a}$$

Falls ein Gitter passend zu einer anderen sphärozylindrischen Wirkung ist als zu der aktuell vorliegenden, kann eine Modifikation von Gleichung (18) zur Abschätzung des Farbsaums verwendet werden, bei welcher die Größen $S_{ref}$, $S_{ref,0}$ durch die Brechwertmatrizen $\mathbf{S}_{ref} = \begin{pmatrix} S_{xx} & S_{xy} \\ S_{xy} & S_{yy} \end{pmatrix}$, $\mathbf{S}_{ref,0} = \begin{pmatrix} S_{0xx} & S_{0xy} \\ S_{0xy} & S_{0yy} \end{pmatrix}$ ersetzt werden, wobei bevorzugt $\mathbf{S}_{ref,0} = S_{ref,0}\mathbf{1}$ ist.

Die Brechwertmatrizen hängen wie folgt von den sphärozylindrischen (SZA-) Werten (Sphäre S, Zylinder Z, Achse A) der Wellenfront bzw. der Refraktion ab:

$$\mathbf{S} = \begin{pmatrix} S_{xx} & S_{xy} \\ S_{xy} & S_{yy} \end{pmatrix} = \begin{pmatrix} (S + \frac{Z}{2}) - \frac{Z}{2}\cos 2\alpha & -\frac{Z}{2}\sin 2\alpha \\ -\frac{Z}{2}\sin 2\alpha & (S + \frac{Z}{2}) + \frac{Z}{2}\cos 2\alpha \end{pmatrix}$$

$$Z = \sqrt{(S_{xx} - S_{yy})^2 + 4S_{xy}^2}$$

$$S = \frac{1}{2}(S_{xx} + S_{yy} - Z)$$

$$\tan\alpha = \frac{S - S_{xx}}{S_{xy}}$$

In diesem Fall ergibt sich für den Farbsaum:

$$FS(\mathbf{r}) = \frac{\left|(\mathbf{S}_{\mathrm{ref}} - \mathbf{S}_{\mathrm{ref},0})\mathbf{r}\right|}{\nu_d} \qquad (18a)$$

oder entsprechend Gleichung (23)

$$FS(\mathbf{r}) = \frac{\left|(\mathbf{S} - \mathbf{S}_0)\mathbf{r}\right|}{\nu_d} \qquad (23a)$$

Maßgeblich dafür, inwieweit der Farbsaum in der Peripherie von sphärozylindrischen Einstärkengläsern nicht vollständig korrigiert wird, ist folglich die durch eine Matrixdifferenz beschriebene Abweichung zwischen der verordneten sphärozylindrischen Gesamtwirkung und der sphärozylindrischen Gesamtwirkung, an die das Gitter angepasst ist. Diese Abweichung kommt durch

- die Abweichung zwischen der verordneten sphärischen Gesamtwirkung und der sphärischen Gesamtwirkung, an die das Gitter angepasst ist; und
- die Abweichung zwischen der verordneten zylindrischen Gesamtwirkung und der zylindrischen Gesamtwirkung, an die das Gitter angepasst ist zustande.

**Farbsaum und (optimale) Farbsaumkompensation durch ein diffraktives Gitter bei einem Progressivglas**

Um den Farbsaum eines Progressivglases durch ein diffraktives Gitter ideal zu kompensieren, ist es erforderlich, das Gitter individuell an den Wirkungsverlauf anzupassen. Dies kann beispielsweise durch eine simultane Optimierung von Brillenglasflächen und einem diffraktiven Gitter erfolgen. Alternativ kann dies durch die Wahl eines Gitters, dessen Gitterlinien (im Wesentlichen) senkrecht zur lokalen Achslage (Basislage) des Prismas des jeweiligen Brillenglases verlaufen, durchgeführt werden.

Die Optimierung erfolgt vorzugsweise in einer vorgegebenen Gebrauchsstellung des Basisglases. Die Gebrauchsstellung kann insbesondere durch den Fassungsscheibenwinkel, die Vorneigung, den Hornhautscheitelabstand, die Pupillendistanz, und gegebenenfalls weitere Parameter charakterisiert werden. Die Parameter der Gebrauchsstellung können durchschnittliche Parameter sein. Ebenfalls wird vorzugsweise ein vorgegebener Objektabstand (vorzugsweise als Funktion der Blickrichtung) berücksichtigt.

Vorzugsweise erfolgt die Optimierung derart, Abbildungsfehler zumindest zweiter Ordnung zu minimieren. Die Optimierung kann eine Minimierung einer polychromatischen Zielfunktion umfassen, in welcher der Farbsaum unmittelbar oder mittelbar durch eine Wellenlängenabhängigkeit als Zielgröße eingeht. Die Abbildungsfehler zweiter oder höherer Ordnung werden vorzugsweise mittels einer Wellenfrontdurchrechnung unter Berücksichtigung des Basisgitters und der Gebrauchsstellung des Brillenglases ermittelt.

Für jedes Gitter, das nicht ideal angepasst ist, verbleibt ein restlicher Farbsaum, dessen Verteilung jedoch außer vom Gitter auch vom speziellen Brillenglasdesign des Progressivglases abhängt und daher nicht so pauschal wie für Einstärkengläser durch die Gleichungen (23) und (23a) beschrieben werden kann.

**Auswahl eines Basisgittersystems**

Die obigen Angaben über die ideale Anpassung eines diffraktiven Gitters an ein Brillenglas legen die Vorstellung nahe, dass für jeden gegebenen Wirkungsverlauf ein individuell darauf abgestimmtes diffraktives Gitter auch tatsächlich benötigt wird. Eine solche Vorstellung wird insbesondere durch die Gleichungen (23) und (23a) nahegelegt, da laut diesen Gleichungen bereits der Farbsaum eines Einstärkenglases mit Wirkung $S$ bzw. **S** nur dann für alle Werte von $r$ bzw. **r** verschwindet, wenn das Gitter genau zur Wirkung $S_0$ bzw. **S**$_0$ passt. Im allgemeinen Fall (z.B. bei asphärischen und insbesondere bei progressiven Gläsern) ist es erforderlich, eine individuelle, simultane Optimierung des Brillenglases und des Gitters durchzuführen, um eine Farbsaumkorrektur zu erzielen.

Überaschenderweise hat sich jedoch herausgestellt, dass dies zur Erreichung einer als optimal empfundenen Farbsaumkorrektur nicht erforderlich ist. Stattdessen ist es ausreichend, nur für einige Basiswirkungen ein farbsaumkorrigierendes Gitter zu verwenden und dieses Gitter aber auch noch für benachbarte Wirkungen zuzulassen, solange diese so eng benachbart sind, dass der Farbsaum unter einer vorgegebenen Schwelle bleibt.

Rotationssymmetrische Einstärkengläser

Ein beispielhaftes Verfahren zur Aufstellung eines Basisgittersystems für rotationssymmetrische Einstärkengläser lässt sich anhand von Fig. 4 und 5A bis 5D erläutern. In einem ersten Schritt wird ein Schwellwert $FS_T$ für den Farbsaum (Farbsaum-Wahrnehmungsschwelle) vorgegeben. Bevorzugt ist dies eine physiologische Wahrnehmungsschwelle. Vorzugsweise liegt der Schwellwert im Bereich von ungefähr 0,04 cm/m bis ungefähr 0,02 cm/m, besonders bevorzugt beträgt der Wert $FS_T \leq 0,12$cm/$m$. Es ist jedoch möglich auch jede andere Farbsaum-Wahrnehmungsschwelle zu verwenden.

Ferner wird der Radius $r_T$ eines Sehfeldes auf dem Brillenglas, vorzugsweise um die optische oder die geometrische Mitte (oder um einen anderen vorgegebenen Bezugspunkt) vorgegeben, innerhalb dessen ($r \leq r_T$) der Farbsaum unter der vorgegebenen Schwelle $FS_T$ bleiben soll (d.h. innerhalb dessen $|FS| \leq FS_T$ gefordert wird). Bevorzugt ist der Wert $r_T = 20$mm. Jeder andere Wert $r_T$ kann jedoch gefordert werden.

Gleichung (23) kann dann Auskunft darüber geben, wie hoch der Wert ($S - S_0$) gerade noch sein darf, damit die Vorgaben $|FS| \leq FS_T$ innerhalb des Sehfeldes mit einem Radius $r_T$ nicht verletzt werden. Hierzu kann in der Gleichung (23) der Schwellwert $FS_T$ eingesetzt und die Gleichung dann nach $|S - S_0|$ aufgelöst werden:

$$\left| FS(r_T) \right| = \left| \frac{-(S - S_0)r}{v_d} \right| \leq FS_T$$

$$\Rightarrow \left| S - S_0 \right| \leq v_d \frac{FS_T}{r_T} \tag{24}$$

Für die bevorzugten Zahlenwerte ($FS_T \leq 0,12$cm/m, $r_T = 20$mm) ergibt sich

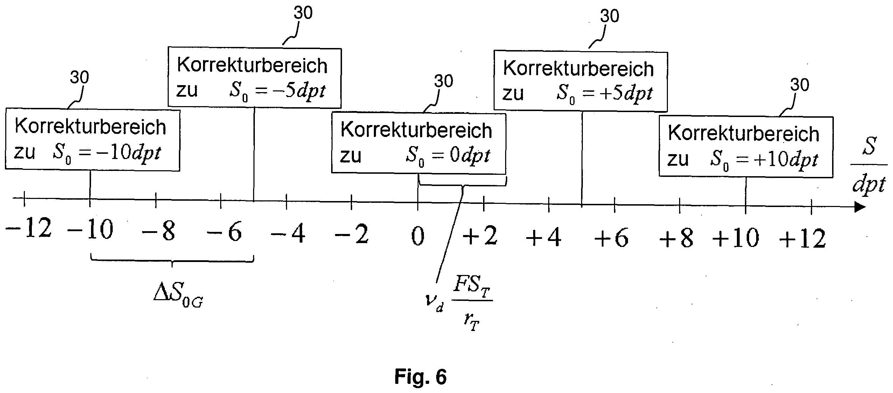

$$\left| S - S_0 \right| \leq 42,41 \times \frac{0.12cm/m}{20mm} = 2,54dpt$$ . Dies bedeutet, dass ein Gitter (Basisgitter), welches ein Glas mit der Grundwirkung $S_0 = 0$ ideal farbsaumkorrigiert, auch noch für Gläser mit Grundwirkungen von bis zu $|S| \leq 2,54dpt$ verwendet werden kann. Ein beispielhafter Satz von Basisgittern umfasst in diesem Fall nur diejenigen Gitter, welche passend zu den Basiswirkungen (Grundwirkungen) $S_0 = -10dpt$, $S_0 = -5dpt$, $S_0 = 0$, $S_0 = +5dpt$, $S_0 = +10dpt$ gewählt sind. Die Bereiche 30 um jede dieser Basiswirkungen, deren Breite $2 \times 2,54dpt = 5,08dpt$ (d.h. die Korrekturbereiche) beträgt, überlappen sich dann derart, dass die Anforderungen an eine Farbsaumkorrektur unter der Farbsaum-Wahrnehmungsschwelle durchgehend im Wirkungsbereich $-12,54dpt \leq S \leq 12,54dpt$ mit Hilfe der 5 Basisgitter erfüllt werden können. **Fig. 6** zeigt schematisch die Überdeckung des gesamten Wirkungsbereichs durch Überlappung der Korrekturbereiche von 5 einzelnen Basisgittern.

Für rotationssymmetrische Einstärkengläser kann daher ein Basisgittersystem

$$B_G = \{ S_{0G}^1, S_{0G}^2, ..., S_{0G}^K \}$$ allgemein als Satz von Werten oder Wirkungen $S_0$, zu denen Gitter zur Verfügung stehen, definiert werden. Bevorzugt wird ein System so gewählt, dass durch Überlapp der Korrekturbereiche der ganze angestrebte Wirkungsbereich überdeckt wird. In dem obigen Fall eines Wirkungsbereichs von $-12,54dpt \leq S \leq 12,54dpt$ ist $K = 5$ und die Basisgittersystem wie folgt definiert:

$$B_G = \{-10dpt, -5dpt, 0, +5dpt, 10dpt\} \tag{25}$$

Wie in **Fig. 6** gezeigt, kann in Übereinstimmung mit Gleichung (16) der maximale Abstand $\Delta S_{0G} := S_{0G}^{k+1} - S_{0G}^{k}$ zwischen zwei Basiswirkungen durch die Forderung

$$\left|\Delta S_{0G}\right| \le 2v_d \frac{FS_T}{r_T} \tag{26}$$

bestimmt werden. In dem obigem Zahlenbeispiel bedeutet dies

$$\left|\Delta S_{0G}\right| \le 5{,}08 dpt \tag{27}$$

Sphärozylindrische Einstärkengläser

Fehlt wie bei Einstärkengläsern mit einer zylindrischen Verordnung die Rotationssymmetrie, so müssten die exakt farbsaumkorrigierenden Gitter ebenfalls ohne Rotationssymmetrie sein.

Es ist jedoch erkannt worden, dass eine als optimal empfundene Korrektur des Farbsaums ebenfalls anhand eines Satzes von rotationssymmetrischen Gittern erzielt werden kann. Gemäß einem bevorzugten Beispiel der Erfindung wird daher vorgeschlagen, statt einen Satz von asymmetrischen Basisgittern, einen Basisgittersatz $B_G$ von rotationssymmetrischen Basisgittern zu verwenden. Dabei wird in Kauf genommen, dass diese rotationssymmetrischen Gitter den Farbsaum in der Peripherie von sphärozylinderischen Einstärkengläsern nicht vollkommen korrigieren, sondern nur zu einem bestimmten Anteil. Der verbleibende Farbsaum kann durch die Anwendung der Gleichung (23a) bestimmt werden. Es ist jedoch ebenfalls möglich, einen Satz von nicht-sphärischen Gittern zu verwenden.

In Analogie zu der Aufstellung eines Basisgittersystems für rotationssymmetrische Einstärkengläser kann zur Aufstellung eines Basisgittersystems für sphärozylindrische Einstärkengläser allgemein verlangt werden, dass

$$\left|FS(\mathbf{r})\right| \le FS_T \tag{28}$$

für alle **r** mit $|\mathbf{r}| \le r_T$ erfüllt ist.

Im Falle von Gleichung (23a) bedeutet dies, dass die Bedingung

$$\left|\frac{\left\|(\mathbf{S} - \mathbf{S}_0)\mathbf{r}\right\|}{v_d}\right| \le FS_T \tag{28a}$$

erfüllt werden muss, wobei

**S** die Brechwertmatrix der Verordnung für das aktuelle Glas bezeichnet; und
**S**$_0$ die Brechwertmatrix des Basisglases bezeichnet.

Dies ist sichergestellt, wenn für die beiden Eigenwerte von ($\mathbf{S}$-$\mathbf{S}_0$), d.h. für die beiden Hauptschnitte $HS_1(\mathbf{S}\text{-}\mathbf{S}_0)$ und $HS_2(\mathbf{S}\text{-}\mathbf{S_0})$ von ($\mathbf{S}$-$\mathbf{S}_0$) die Bedingungen:

$$\left\| \frac{HS_1(\mathbf{S}-\mathbf{S}_0)r_T}{v_d} \right\| \le FS_T \quad \wedge \quad \left\| \frac{HS_2(\mathbf{S}-\mathbf{S}_0)r_T}{v_d} \right\| \le FS_T$$

$$\Rightarrow |HS_1(\mathbf{S}-\mathbf{S}_0)| \le v_d \frac{FS_T}{r_T} \quad \wedge \quad |HS_2(\mathbf{S}-\mathbf{S}_0)| \le v_d \frac{FS_T}{r_T} \tag{29}$$

erfüllt sind.

Die Matrizen $\mathbf{S}$ und $\mathbf{S}_0$ können wie folgt bestimmt werden:

$$\mathbf{S} = \begin{pmatrix} M+J_0 & J_{45} \\ J_{45} & M-J_0 \end{pmatrix}, \mathbf{S}_0 = \begin{pmatrix} M_0+J_{0,0} & J_{0,45} \\ J_{0,45} & M_0-J_{0,0} \end{pmatrix}$$

$M, J_0, J_{45}$ sind die Komponenten des Powervektors $\mathbf{P} = \begin{pmatrix} M \\ J_0 \\ J_{45} \end{pmatrix} = \begin{pmatrix} Sph + Zyl/2 \\ -(Zyl/2)\cos 2\alpha \\ -(Zyl/2)\sin 2\alpha \end{pmatrix}$ des Glases

mit dem Gitter (d.h. des farbsaumkorrigierten Glases).

$M_0\, J_{0,0}, J_{0,45}$ sind die Komponenten des Powervektors $\mathbf{P}_0 = \begin{pmatrix} M_0 \\ J_{0,0} \\ J_{0,45} \end{pmatrix} = \begin{pmatrix} Sph_0 + Zyl_0/2 \\ -(Zyl_0/2)\cos 2\alpha_0 \\ -(Zyl_0/2)\sin 2\alpha_0 \end{pmatrix}$ des

Glases mit sphärozylindrischen (SZA) Werten $(Sph_0, Zyl_0, \alpha_0)$, zu welchem das Gitter optimiert wird.

Der jeweilige Powervektor enthält die Summe aus dem refraktiven und dem diffraktiven Anteil der Wirkungen des Glases.

Es gilt:

$$HS_1(\mathbf{S}-\mathbf{S}_0) = (M-M_0) - \sqrt{(J_0-J_{0,0})^2 + (J_{45}-J_{0,45})^2}$$

$$HS_2(\mathbf{S}-\mathbf{S}_0) = (M-M_0) + \sqrt{(J_0-J_{0,0})^2 + (J_{45}-J_{0,45})^2} \tag{30}$$

Das Gebiet eines Power-Vektors $\mathbf{P} = \begin{pmatrix} M \\ J_0 \\ J_{45} \end{pmatrix}$, welches Gleichung (29) erfüllt, liegt in einem Doppelkegel, dessen Achse parallel zur $M$-Achse verläuft. Die Kegelhöhe und der Grundflächenradius betragen jeweils $v_d \dfrac{FS_T}{r_T}$.

Der Grundflächenmittelpunkt ist durch den Powervektor $\mathbf{P}_0 = \begin{pmatrix} M_0 \\ J_{0,0} \\ J_{0,45} \end{pmatrix}$ des Glases gegeben, zu dem das Gitter optimiert wird.

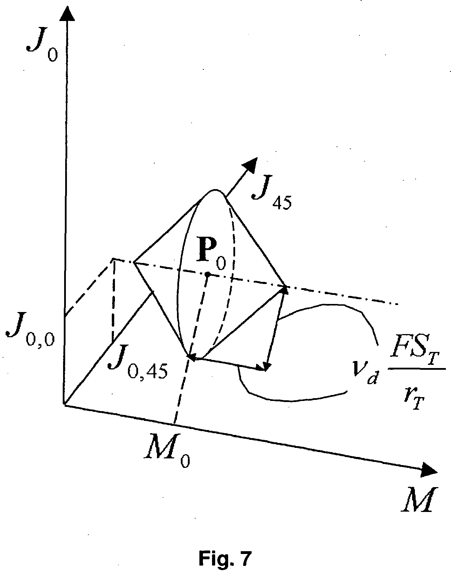

**Fig. 7** zeigt schematisch das doppelkegelförmiges Gebiet von Power-Vektoren $\mathbf{P}$ von Gläsern, die noch im Einklang mit der Gleichung (20) durch ein diffraktives Gitter, welches an ein Glas mit dem Power-Vektor $\mathbf{P}_0$ angepasst

ist, farbsaumkorrigiert werden können.

Für sphärozylindrische Einstärkengläser kann folglich ein Basisgittersystem

$B_G = \{\mathbf{P}_{0G}^1, \mathbf{P}_{0G}^2, ..., \mathbf{P}_{0G}^K\}$ allgemein als denjeniger Satz von Powervektoren $\mathbf{P}_0$, definiert werden, zu denen Gitter zur Verfügung stehen. Bevorzugt wird ein System so gewählt, dass die Power-Vektoren rein sphärisch sind, d.h.

$J_{0,0G}^k = 0,$ $1 \leq k \leq K$ und $J_{45,0G}^k = 0, \quad 1 \leq k \leq K$. Besonders bevorzugt wird ein Basisgittersystem so gewählt, dass durch Überlapp der Korrekturbereiche der ganze angestrebte Wirkungsbereich in Bezug auf das sphärische Äquivalent überdeckt wird.

Sind die Basisgitter rein sphärisch, wie in einem bevorzugten Beispiel, dann stellt sich ferner die Frage, wie stark diese überlappen müssen, damit ein bestimmter maximal vorkommender Zylinder $Zyl_{max}$ noch für alle relevant vorkommenden Werte des sphärischen Äquivalents abgedeckt werden können.

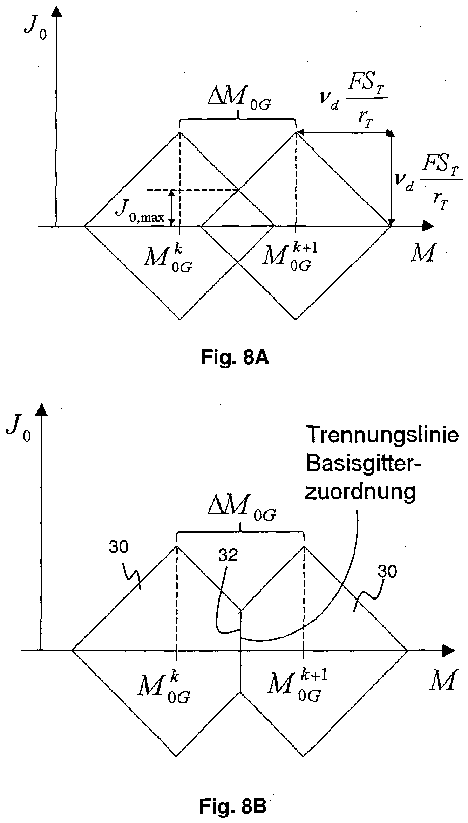

In **Fig. 8** sind zwei (quadratische) Gebiete eingezeichnet, in denen die Bedingung aus Gleichung (19) für die Farbsaumkorrektur erfüllt ist, wenn $\mathbf{S}_0 = S_{0G}^k \mathbf{1} = M_{0G}^k \mathbf{1}$ bzw. $\mathbf{S}_0 = S_{0G}^{k+1} \mathbf{1} = M_{0G}^{k+1} \mathbf{1}$ ist, wobei

**Fig. 8A** die Überlappung von zwei Kegeln (d.h. von den doppelkegelförmigen Gebieten von zwei Power-Vektoren) in der Ebene zu $J_{45} = 0$; und
**Fig. 8B** die Trennungslinie für Basisgitterzuordnung

zeigen.

Im Überlappungsbereich kommen für eine Farbsaumkorrektur beide Basisgitter in Frage. Eine bevorzugte Basisgitterzuordnung kann so getroffen werden, dass die Trennungslinie 32 zwischen beiden Gebieten durch das sphärische Äquivalent $(M_{0G}^k + M_{0G}^{k+1})/2$ verläuft (siehe Fig. 8B).

Wie in **Fig. 8** gezeigt, steht der Abstand $\Delta M_{0G}$ zwischen den sphärischen Äquivalenten zweier Basiswirkungen durch $|\Delta M_{0G}| = 2v_d FS_T / r_T - Zyl_{max}$ in Zusammenhang mit dem maximalen, zulässigen Zylinder $Zyl_{max}$. Dies bedeutet, dass $\Delta M_{0G}$ die Bedingung

$$|\Delta M_{0G}| \leq 2v_d \frac{FS_T}{r_T} - 2J_{0,max}$$

$$= 2v_d \frac{FS_T}{r_T} - Zyl_{max} \tag{31}$$

erfüllen muss, damit das Basisgittersystem für alle vorkommenden Wirkungen und Zylinder eine Farbsaumkorrektur innerhalb der vorgegebenen Schwelle ermöglicht.

Bei einem Vergleich der Gleichung (30) mit der Gleichung (26) kann festgestellt werden, dass eine dichtere Überdeckung erforderlich ist, wenn zylindrische Wirkungen mit abgedeckt werden sollen. Ist der maximale Zylinder durch $Zyl_{max} = 4,0dpt$ gegeben, dann gilt statt Gleichung (27), dass

$$|\Delta S_{0G}| \leq 5,08dpt - 4,0dpt$$

$$= 1,08dpt \tag{32a}$$

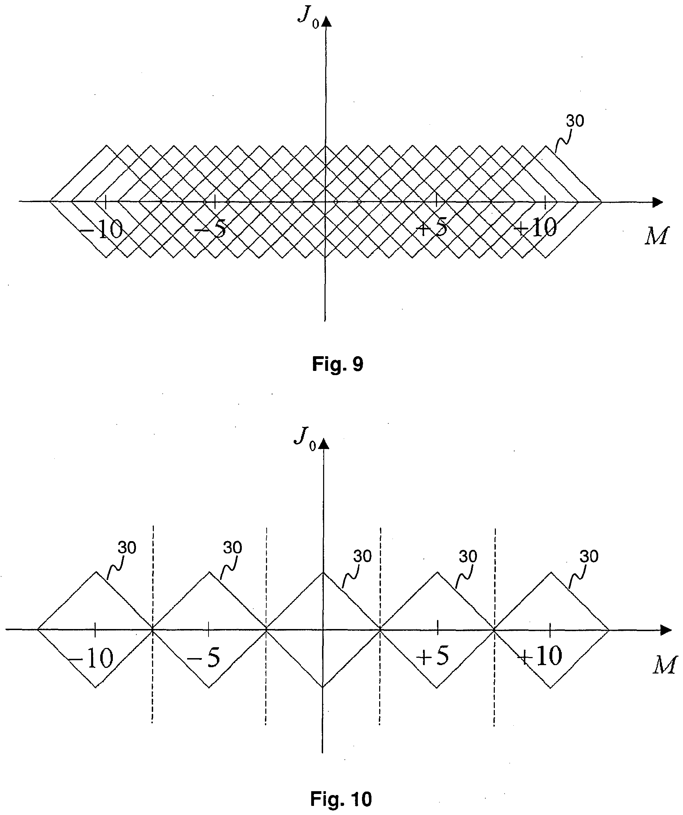

zu fordern ist. Um einen Wirkungsbereich mit einem betragsmäßig stärksten Hauptschnitt zwischen - 12,0$dpt$ und + 12,0$dpt$ und einem maximalen Zylinder von 4,0 dpt abzudecken, werden folglich ungefähr 20 Basisgitter benötigt. **Fig. 9** zeigt schematisch die Abdeckung des kompletten Wirkungsbereichs sphärozylindrischer Gläser durch 20 rotationssymmetrische Gitter. Gezeigt wird ein Querschnitt durch 20 Doppelkegel in der Ebene $J_{45} = 0$. Im Vergleich dazu sind im Fall von Einstärkenbrillengläser ohne Zylinder lediglich 5 Basisgitter ausreichend (siehe **Fig. 6**).

Die Abdeckung des gleichen Wirkungsbereichs mit wenigen Basisgittern kann dadurch erzielt werden, dass die Basisgitter selbst auch schon an zylindrische Basiswirkungen angepasst sind und somit nicht mehr rotationssymmetrisch sind. Die erforderlichen nicht rotationssymmetrischen Gitter können anhand der Überlappung durch Doppelkegel im Raum in Analogie zu dem obigen Fall von rotationssymmetrischen Gittern ermittelt werden.

Vorzugsweise erfolgt jedoch die Überdeckung des Wirkungsbereichs durch rein rotationssymmetrische Gitter wie in Fig. 8 und 9 gezeigt. Die bevorzugte Basisgitterzuordnung erfolgt analog zu Fig. 8B.

Eine andere Möglichkeit, ein Basisgittersystem mit noch weniger Basisgittern aufzustellen, besteht darin, Gleichung (19) nicht für alle sphärozylindrischen Gläser des Wirkungsbereichs eine Farbsaumkorrektur zu fordern, sondern nur für die rein sphärischen. In diesem Fall kann für vorhandene hohe Zylinder (z.B. Zylinder über 2 dpt) zugelassen werden, dass der Farbsaum auch innerhalb des Kreises mit Radius $r_T$ um die optische Mitte über der Schwelle $FS_T$ liegen kann. Stattdessen kann sich das Basisgittersystem auf die statistisch überwiegenden niedrigen Zylinder konzentrieren.

**Fig. 10** zeigt eine beispielhafte Abdeckung des rein sphärischen Wirkungsbereichs mit 5 Gittern, wobei in Kauf genommen wird, dass es sphärozylindrische Wirkungen gibt, die nicht in der Überdeckung liegen. Gestrichelt sind die Trennungslinien für die Basisgitterzuordnung eingezeichnet.

Progressivgläser

Bei Progressivgläsern fehlt normalerweise jegliche Symmetrie. Überaschenderweise hat sich jedoch herausgestellt, dass wenn ein progressives Glas in seiner optischen Mitte ein bestimmtes sphärisches Äquivalent aufweist, ein zu diesem Wert passendes, um die optische Mitte rotationssymmetrisches diffraktives Gitter bewirkt, dass auch der Farbsaum außerhalb der optischen Mitte mehr oder weniger stark korrigiert wird.

Maßgeblich dafür, inwieweit der Farbsaum in der Peripherie von Progressivgläsern nicht vollständig korrigiert wird, ist dabei die durch eine Matrixdifferenz beschriebene Abweichung zwischen der verordneten sphärozylindrischen Gesamtwirkung und der sphärozylindrischen Gesamtwirkung, an die das Gitter angepasst ist. Diese kommt zustande durch

- die Abweichung zwischen der verordneten sphärischen Gesamtwirkung und der sphärischen Gesamtwirkung, an die das Gitter angepasst ist und
- die Abweichung zwischen der verordneten zylindrischen Gesamtwirkung und der zylindrischen Gesamtwirkung, an die das Gitter angepasst ist, sowie
- die Abweichung des lokalen Prismas von demjenigen, das das dem Gitter zugrundeliegende Glas hätte, aufgrund des Wirkungshubs und aufgrund des peripheren Astigmatismus des Progressivglases.

Anders als bei sphärozylindrischen Einstärkengläsern hängt eine allgemeine Vorschrift für die Aufstellung eines minimalen Basisgittersystems, welches verträglich mit einer Forderung wie in Gleichung (19) ist, von den Einzelheiten des Brillenglasdesigns ab. Gemäß einem bevorzugten Beispiel der Erfindung wird jedoch ein Basisgittersystem vorgeschlagen, welches wie in Fig. 6 oder Fig. 10 den rein sphärischen Anteil des Wirkungsbereichs hinreichend gut überdeckt. Bevorzugte Bezugsgröße zur Auswahl der Basiskurve ist das sphärische Äquivalent des Glases in der optischen Mitte (das ist z.B. der Prismenbezugspunkt $B_P$ bei Verordnungsprisma Null und sonst ein anderer geeignet festgelegter Bezugspunkt im Glas, welcher numerisch bestimmt werden kann). Die Lage dieses sphärischen Äquivalents in Fig. 7 bestimmt demzufolge die Basisgitterzuordnung.

Eine andere mögliche Basisgitterzuordnung kann sich nach dem sphärischen Äquivalent der Rezeptwirkung richten, das nicht notwendig gleich dem sphärischen Äquivalent des Glases in der optischen Mitte ist, außer in dem Fall, dass die optische Mitte zufällig in dem Zentrierpunkt $B_Z$ liegt.

Die so ermittelten Basisgitter können jeweils auf eine der Flächen (Vorder-, Rückfläche oder sonstige Grenzfläche) von Basisgläsern mit den Basiswirkungen $S_0$ aufgebracht werden. Der Satz von Basisgläsern mit den Basisgittern kann als vorgefertigter Satz von halbfertigen Basisgläsern vorliegen. Bei der Herstellung von Brillengläsern, welche an die Rezeptdaten eines Brillenträgers angepasst werden sollen, kann ein geeignetes halbfertiges Basisglas ausgewählt werden und die der Fläche mit dem Basisgitter gegenüberliegende Fläche in Abhängigkeit von den Rezeptdaten des Brillenträgers bearbeitet werden.

Nachfolgend wird das Berechnen eines optimalen Basisgitters für ein bestimmtes Basisglas mit einer vorgegebenen Basiswirkung mittels einer Optimierung beschrieben:

Das Ermitteln eines diffraktiven Gitters, welches zur Korrektur des Farbsaums eines vorgegebenen Brillenglases dient, kann z.B. in folgenden Schritten erfolgen:

1) Modellbildung im wellenoptischen Bild;

2) Aus der wellenoptischen Intensitätsverteilung wird eine bestimmte Ordnung selektiert. Die Gitterkonstante wird so gewählt, dass der "Peak" dieser Ordnung wellenlängenunabhängig ist. Dadurch wird eine Farbsaumkorrektur ermöglicht. Die Form des Gitters (z.B. der Blazing-Winkel bei einem Sägezahngitter) wird so eingestellt, dass die Beugungseffizienz für diese Ordnung maximal ist. Schließlich wird die Ausfallsrichtung für diesen Peak durch einen Strahl beschrieben (geometrisches Strahlenbild, ray-tracing)

**3)** Simultane Optimierung des Gitters und der refraktiven Fläche, wobei die Abbildungseigenschaften zweier und höherer Ordnung des Brillenglases mit dem Gitter berücksichtigt werden. Gemäß einem Aspekt der Erfindung wird ein Übergang zu geometrischen Wellenfronten und wave-tracing vorgeschlagen, um die Abbildungseigenschaften des Brillenglases (vorzugsweise in Gebrauchsstellung) zu berechnen und gegebenenfalls zu optimieren.

Die ersten zwei Schritte sind nicht auf ein Optimierungsverfahren beschränkt und können auch unabhängig von dem dritten Schritt erfolgen.

**Modellbildung im wellenoptischen Bild.**

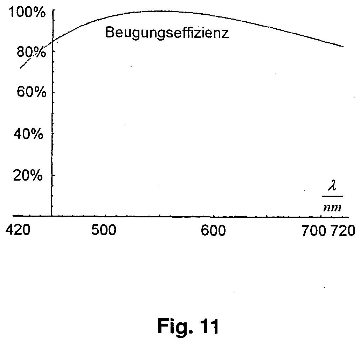

Eine zentrale Größe der Wellenoptik ist die Verteilung von Amplitude und Phase. Durch die Berechnung des Beugungsintegrals kann die Aufspaltung in Form- und Beugungsfaktor reproduziert werden. Unabhängig davon, wie sich die Beugungsordnungen später zur Farbsaumkorrektur nutzen lassen, ist es vorteilhaft, dass die Intensität möglichst nur in einer einzigen Ordnung gesammelt wird. So kann z.B. mit Hilfe eines Sägezahngitters mit einem bestimmten Blazing-Winkel erreicht werden, dass zumindest bei einer definierten bzw. vorgegebenen Designwellenlänge praktisch eine Beugungseffizienz von ungefähr 100% für die gewählte Beugungsordnung erreicht werden kann. **Fig. 11** zeigt die Beugungseffizienz als eine Funktion der Wellenlänge. Wie aus Fig. 11 ersichtlich, kann ebenfalls erreicht werden, dass am Rande des sichtbaren Wellenlängenbereichs die Beugungseffizienz noch typischerweise Werte zwischen 70% und 90% annimmt.

Der Formfaktor ist eine relativ breite Glockenfunktion, die genau entlang derjenigen Richtung zentriert ist, die aufgrund der Steigung der Flächenabschnitte im Gitter auch schon nach dem klassischen Brechungsgesetz die Ausfallsrichtung wäre. Je nach Profil des Gitters (z.B. je nach Blazing-Winkel) kann diese Richtung nun auf ein Beugungsmaximum einer gewünschten Beugungsordnung verschoben werden (siehe **Fig. 2**). Alle anderen Beugungsmaxima werden dann gleichzeitig unterdrückt. Die Richtungsabhängigkeit des Formfaktors gilt unabhängig von der Gitterkonstanten und bedeutet, dass sich über den kompletten Übergang hinweg, welcher sich von DOEs über MODs hin zu Fresnel-Gittern vollziehen lässt, Licht immer in der Nähe des klassischen Brechungsgesetzes ausfällt.

**Farbsaumkorrektur**

Wenn kein diffraktives Gitter vorhanden ist, wird die Intensitätsverteilung durch eine Kurve gegeben, deren Maximum durch die Kurve "F" des Formfaktors in **Fig. 2** gegeben wäre. Der Peak aber wäre viel schmaler und wäre durch die Breite des Einfachspalts bestimmt, den die komplette Linse darstellt. Die Wellenlängenabhängigkeit der Maximumposition wäre dann durch die gewöhnliche Dispersion gegeben.

Bei Anwesenheit eines diffraktiven Sägezahngitters ändert sich daran nichts, außer dass die Breite des Formfaktor-Peaks nun um Größenordnungen zunimmt und durch den Einfachspalt bestimmt wird, der nun durch eine Gitterperiode gegeben ist (siehe Kurve "F" in **Fig. 2**). Das Dispersionsverhalten dieses Peaks ist dasselbe wie ohne Gitter, aber der Peak bestimmt nicht mehr alleine die Intensitätsverteilung, weil diese nun zusätzlich durch die scharfen Peaks des Beugungsfaktors eingeschränkt wird. Derjenige dieser Peaks, der bei einer Arbeitswellenlänge zentral auf dem Formfaktor liegt, enthält die ganze Intensität und bestimmt *de facto* die Ausfallsrichtung des Lichts. Die Beugungseffizienz liegt dann bei annähernd 100%). Ziel ist es, die Position dieses Peaks wellenlängenunabhängig zu machen, so dass eine Farbsaumkorrektur erreicht wird (wie es in Fig. 3C für die Ordnung $m$=-1 der Fall ist).

Variiert nun die Wellenlänge, dann wandert der Formfaktor langsam über diesen konstanten Peak, mit nur geringen Verlusten an Beugungseffizienz, hinweg (siehe Fig. 11).

**Geometrisches Strahlenbild und Farbsaumkorrektur.**

Wir bereits oben ausgeführt können durch eine geeignete Wahl des Profils des diffraktiven Gitters alle Beugungsmaxima zugunsten eines einzigen außer Acht gelassen werden. Die Ausfallsrichtung des verbliebenen Beugungsmaximus kann im geometrischen Strahlenbild durch das modifizierte Brechungsgesetz $n'\sin\varphi'-n\sin\varphi = m\lambda/d$ beschrieben werden.

Für eine Farbsaumkorrektur eines (lokalen) Prismas wird verlangt, dass die prismatische Ablenkung eines Strahls, welcher durch beide Grenzflächen des Prismas fällt und durch das Prisma abgelenkt wird, für eine vorgegebene Wellenlänge (Designwellenlänge) wellenlängenunabhängig ist. Die Wellenlängenunabhängigkeit ist im Sinne einer verschwindenden Ableitung nach der Wellenlänge zu verstehen.

Anhand dieser Bedingung kann dann die Gitterkonstante $d$ ermittelt werden, welche proportional zur Abbezahl und der Beugungsordnung und umgekehrt proportional zum Prisma ist. Überaschenderweise hat sich herausgestellt, dass der so ermittelte Wert der Gitterkonstante nicht, wie erwartet, in der Größenordnung der Wellenlänge, sondern z.B. für ein Prisma von $4 cm/m$ und bei einer Abbezahl $v_d \approx 40$ bei einem Wert von über $d \approx 100 \mu m$ liegt. Dies kann damit erklärt werden, dass nicht eine Brechkraft, sondern nur der geringere Effekt der Farbsaumkorrektur erreicht werden soll.

Wie oben gezeigt wurde, ist diejenige Beugungsordnung, für welche Farbsaumkorrektur eintritt, immer so gerichtet, dass eine Verstärkung des ursprünglichen Prismas eintritt. Das Gesamtprisma $Pr = Pr_{ref} + Pr_{diff}$ liegt dabei im Betrag immer um ca. 5% bis 10% über dem Betrag $|Pr_{ref}|$ des rein refraktiven Anteils.

Soll statt an einem Prisma der Farbsaum an einer Linse (z.B. an einem Brillenglas) korrigiert werden, können die Ergebnisse der Farbsaumkorrektur mittels eines Prismas auf die Farbsaumkorrektur einer Linse übertragen werden, indem der Wert von $d$ lokal so eingestellt wird, dass er das lokale Prisma korrigiert. Im Allgemeinen ist das so ermittelte Gitter jedoch nicht mehr äquidistant (d.h. weist keine äquidistanten Gitterlinien auf). Für Linsen (z.B. Brillengläser) variiert jedoch die nun variable Funktion $d(r)$ so langsam, dass die Modellvorstellung der Periodizität, die zur Herleitung der wellenoptischen Gleichungen verwendet wurde, näherungsweise gültig bleibt.

Da das lokale Prisma nach der Prentice'schen Regel proportional zu $r$ ist, kann die Periode $d(r)$ eines Gitters, welches den Farbsaum eines Brillenglases korrigieren soll, umgekehrt proportional zu $r$ gewählt werden, d.h. $d(r) = A/r$. Die Konstante A ist dabei proportional zur Abbezahl und der Beugungsordnung und umgekehrt proportional zum Scheitelbrechwert. Analog zum Prisma wird wegen der Prentice'schen Regel auch der Betrag des Scheitelbrechwerts durch den diffraktiven Beitrag um 5% bis 10% erhöht.

Bei der obigen Betrachtung wird jedoch die tatsächliche Gebrauchsstellung der Linse nicht berücksichtigt. Insbesondere wird nicht berücksichtigt, dass das Prisma in Gebrauchsstellung der Linse von dem nach der Prentice'schen Regel ermittelten Prisma abweichen kann. Im Allgemeinen ist daher die Abhängigkeit der Periode von $r$ komplexer. Die Periode $d(r)$ kann daher in Form eines Potenzreihenansatzes mit Termen proportional zu $r^2$, $r$, 1, $1/r$, $1/r^2$, ... dargestellt werden. Vorzugsweise werden die Koeffizienten der einzelnen Terme durch eine simultane Optimierung von Gitter und refraktiver Fläche ermittelt. Es hat sich jedoch herausgestellt, dass in vielen Fällen, auch bei einer vollständigen Durchrechnung, der $1/r$-Term die anderen Termen so stark dominiert, dass diese Terme praktisch vernachlässigt werden können.

Diese Gesetzmäßigkeiten gelten sowohl für Plus- als auch für Minusgläser.

## Geometrische Wellenfronten und wave-tracing

Um zu Gesetzen zweiter Ordnung mittels Wave-tracing zu gelangen, wird zu dem o.g. geometrischen Strahlenbild ein Bild mit geometrischen Wellenfronten eingeführt. Diese Wellenfronten entsprechen nicht den Wellenfronten, welche im wellenoptischen Bild die Flächen gleicher Phase beschreiben, sondern sie kommen zustande, nachdem eine Beugungsordnung selektiert wurde und indem sie als Flächen eingeführt werden, zu denen die Strahlen *dieser einen* Beugungsordnung senkrecht stehen.

In diesem Bild spielt das diffraktive Gitter (auch diffraktives optisches Element oder DOE genannt) die Rolle eines Phasengitters, das abhängig von $r$, allgemeiner abhängig von den Koordinaten $x$, $y$, eine Phasenfunktion $\psi(x, y)$ einführt, die zur optischen Weglänge von durchlaufenden Strahlen addiert wird. Die Funktion $\psi(x, y)$ wird so eingeführt, dass die Strahlen, die dann senkrecht auf den Flächen konstanter optischer Weglänge stehen, automatisch das diffraktive Brechungsgesetz $n'\sin\varphi'-n\sin\varphi=m\lambda/d$ erfüllen bzw. dessen vektorieller Erweiterung. Wie sich herausstellt, muss dann der Gradient von $\psi(x, y)$ die Bedingung $|\nabla \psi| = m\lambda/d$ erfüllen.

Ebenfalls hat sich überaschenderweise gezeigt, dass es eine diffraktive Verallgemeinerung der Coddington-Gleichungen gibt, gemäß welcher der Power-Vektor des Flächenbrechwerts (bis auf einen Vorfaktor) additiv um einen Vektor erweitert wird, welcher aus den drei zweiten Ableitungen $\psi_{xx}$, $\psi_{xy}$, $\psi_{yy}$ besteht.

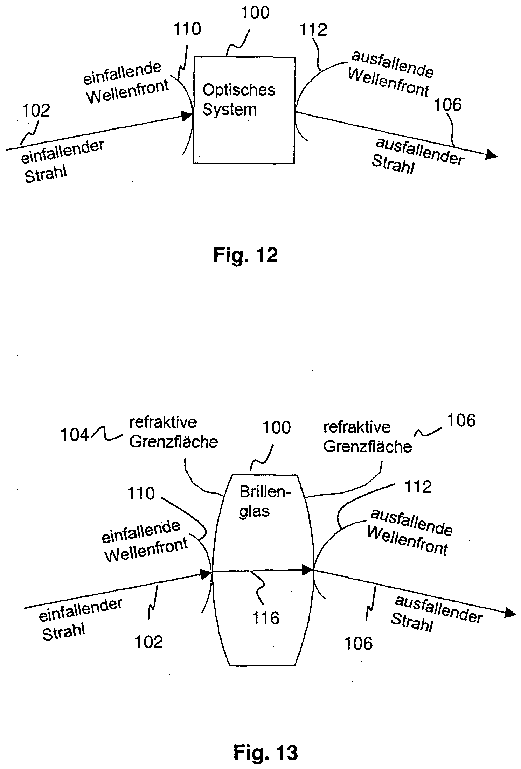

Der Durchgang des Lichts durch ein beliebiges optisches Element, welches auch mehrere optische Komponenten umfassen kann, bzw. durch ein beliebiges optisches System 100 kann anhand von Strahldurchrechnung und Wellenfrontdurchrechnung beschrieben werden, wie in **Fig. 12** und **Fig. 13** schematisch gezeigt. Dabei hat eine Strahldurchrechnung die Aufgabe, zu einem gegebenen optischen Element/System 100 aus einem einfallenden Strahl 102, welcher bis zur Eintrittsfläche 104 des optischen Elements/Systems gegeben ist, den ausfallenden Strahl 108 auszurechnen, der an der Austrittsfläche 106 aus dem Element/System ausfällt. Eine Wellenfrontdurchrechnung hat die Aufgabe, zu einem gegebenen optischen Element/System 100 aus einer einfallenden Wellenfront 110, die an der Eintrittsfläche 104 eines optischen Elements/Systems 100 gegeben ist, die ausfallende Wellenfront 112 an der Austrittsfläche 106 aus dem Element/System 100 zu berechnen. Eine lokale Wellenfrontdurchrechnung hat die Aufgabe, zu einem gegebenen optischen Element/System 100 aus den lokalen Eigenschaften einer einfallenden Wellenfront 112, die an der Eintrittsfläche 104 des optischen Elements 100 gegeben ist, die lokalen Eigenschaften der ausfallende Wellenfront 112 an der Austrittsfläche 112 des Elements/Systems 100 zu berechnen.

Ein optisches Element bzw. ein optisches System kann aus einer beliebigen Abfolge von dünnen Grenzflächen, homogenen Materialien oder inhomogenen Materialien bestehen. Insbesondere kann ein optisches Element (z.B. ein Brillenglas, wie in Fig. 13 gezeigt) aus der Abfolge aus einer gekrümmten refraktiven Grenzfläche 104 von Luft in ein dichteres homogenes Material 114, dem Durchgang 116 durch das Material und einer zweiten gekrümmten refraktiven Grenzfläche 106 zurück in Luft bestehen. **Fig. 13** zeigt schematisch die Strahldurchrechnung und Wellenfrontdurchrechnung durch ein solches optisches Element.

Zur Verbesserung von optischen Elementen bzw. von optischen Systemen, insbesondere von Brillengläsern, kann es jedoch von Vorteil sein, zusätzlich optische Komponenten in den Strahlengang zu bringen, die auf anderen physikalischen Effekten beruhen als auf reiner Refraktion an einer gekrümmten Grenzfläche. So ist vorgeschlagen worden, diffraktive optische Elemente, für welche Beugungseffekte von Bedeutung sind, einzusetzen. Insbesondere kann ein solches Element phasenverzögernd oder phasenmodulierend sein und zwar derart, dass die Änderung der optischen Weglänge durch Hinzufügen des Elements vom Durchtrittspunkt des Strahls abhängt.

Bisher sind jedoch keine Verfahren bekannt, welche es ermöglichen, eine genaue Durchrechnung der Eigenschaften (insbesondere der Abbildungseigenschaften) von optischen Elementen, welche ebenfalls diffraktive optische Komponenten umfassen, insbesondere unter Berücksichtigung einer vorgegebenen Gebrauchsstellung des optischen Elements, durchzuführen.

Nachfolgend wird eine erweiterte Wellenfrontdurchrechnung für den Fall von komplexen optischen Elementen, welche zumindest ein diffraktives Gitter aufweisen, im Detail beschrieben. Das Verfahren kann auch als eine Erweiterung der, z.B. aus der Druckschrift WO 2008/089999A1 bekannten, Wellenfrontdurchrechnung durch rein refraktive Grenzflächen auf den Fall von komplexen optischen Systemen mit zumindest einem diffraktiven Gitter betrachtet werden.

Die elementarste Beschreibung einer Wellenfrontdurchrechnung zweiter Ordnung durch eine rein refraktive Grenzfläche ist im Stand der Technik (siehe z.B. der Lehrbuch "Optik und Technik der Brille" von H. Diepes und R. Blendowske, 2002 Optische Fachveröffentlichung GmbH, Heidelberg, Seite 485 ff.) als sogenannte BAD-Gleichung oder anders genannt Vergenzgleichung bekannt. Im Fall einer rotationssymmetrischen, refraktiven Fläche und unter einem senkrechten Strahleinfall lautet die BAD Gleichung (die Vergenzgleichung)

$$B = A + D. \qquad (101)$$

Dabei ist A die Vergenz (also ein Maß für die lokale Wellenfrontkrümmung) der einfallenden Wellenfront, $B$ die Vergenz der ausfallenden Wellenfront und D der Flächenbrechwert der brechenden Fläche.

Wenn die Voraussetzungen für Rotationssymmetrie nicht erfüllt sind, dann wird für rein refraktive Flächen nach dem Stand der Technik (siehe z.B. das oben zitierte Lehrbuch "Optik und Technik der Brille") die BAD-Gleichung vektoriell geschrieben, also

$$\mathbf{B} = \mathbf{A} + \mathbf{D}. \qquad (102)$$

Dabei ist **A** die Powervektorform der Vergenzmatrix der einfallenden Wellenfront, **B** die Powervektorform der Vergenzmatrix der ausfallenden Wellenfront und **D** die Powervektorform der Flächenbrechwertmatrix der brechenden Fläche. Statt eines Powervektors können auch Linearkombinationen von Powervektorkomponenten, die zu einem neuen Vektor zusammengefasst werden, verwendet werden. Insbesondere können dabei die Normalkrümmungen und die Torsion, also die zweiten Ableitungen nach den Querkoordinaten und die gemischte Ableitung, verwendet werden.

Statt der Symbole $A$ bzw. **A** , $B$ bzw. **B** und $D$ bzw. **D** werden häufig die folgenden Symbole verwendet:

$A$ bzw. $\mathbf{A} \rightarrow S$ bzw. $\mathbf{S}$
$B$ bzw. $\mathbf{B} \rightarrow S'$ bzw. $\mathbf{S'}$
$D$ bzw. $\mathbf{D} \rightarrow F$ bzw. $\mathbf{F}$.

Die Gleichungen (101) und (102) lauten dann entsprechend $S' = S + F$ und $\mathbf{S'} = \mathbf{S} + \mathbf{F}$.

Falls der Strahleinfall nicht senkrecht erfolgt, lassen sich nach dem Stand der Technik für rein refraktive Grenzflächen weitere Modifikationen der BAD-Gleichung einführen, mit denen sich der Wellenfrontdurchgang dann wieder exakt beschreiben lässt (siehe z.B. G. Esser, W. Becken, W. Müller, P. Baumbach, J. Arasa, and D. Uttenweiler, "Derivation of the refraction equations for higher-order aberrations of local wavefronts at oblique incidence", JOSA. A, Vol. 27, Nr. 2, Februar 2010, Seiten 218 - 237). Diese Modifikationen stellen die Coddington-Gleichung und die verallgemeinerte Coddington-Gleichung für Abbildungsfehler zweiter und höherer Ordnung dar. Insbesondere wird in der Publikation von G. Esser et al. die Powervektorform der verallgemeinerten Coddington-Gleichung für Abbildungsfehler zweiter und höherer Ordnung beschrieben.

Die aus dem Stand der Technik bekannten Gleichungen (in Powervektorform) für die Wellenfrontdurchrechnungen zweiter und höherer Ordnung bei einem Durchgang durch eine rein refraktive Grenzfläche sind in Tabelle 1 zusammengefasst:

**Tabelle 1**

|  | senkrechter Einfall + Rotationssymmetrie | senkrechter Einfall ohne Rot. symmetrie | keine Symmetrie |
|---|---|---|---|
| 2.Ordnung | $S'^{(2)} = S^{(2)} + F^{(2)}$<br>alternative Schreibweise:<br>$S'=S+F$<br>$B=A+D$ | $\mathbf{S'}^{(2)} = \mathbf{S}^{(2)} + \mathbf{F}^{(2)}$<br>alternative Schreibweise:<br>$\mathbf{S'=S+F}$<br>$\mathbf{B=A+D}$ | $\mathbf{T'}_2\,\mathbf{S'}^{(2)} = \mathbf{T}_2\mathbf{S}^{(2)} + v\mathbf{F}^{(2)}$ |
| 3.Ordnung | $S'^{(3)} = \mathbf{S}^{(3)} + F^{(3)} + R_3(S^{(2)}, \mathbf{F}^{(2)})$ | $\mathbf{S'}^{(3)} = \mathbf{S}^{(3)} + \mathbf{F}^{(3)} + \mathbf{R}_3(\mathbf{S}^{(2)}, \mathbf{F}^{(2)})$ | $\mathbf{T'}_3\mathbf{S'}^{(3)} = \mathbf{T}_3\mathbf{S}^{(3)} + v\mathbf{F}^{(3)} + \mathbf{Q}_3(\mathbf{S}^{(2)}, \mathbf{F}^{(2)})$ |
| 4.Ordnung | $S'^{(4)} = S^{(4)} + F^{(4)} + R_4(S^{(3)}, F^{(3)}, S^{(2)}, F^{(2)})$ | $\mathbf{S'}^{(4)} = \mathbf{S}^{(4)} + \mathbf{F}^{(4)} + \mathbf{R}_4(\mathbf{S}^{(3)}, \mathbf{F}^{(3)}, \mathbf{S}^{(2)}, \mathbf{F}^{(2)})$ | $\mathbf{T'}_4\mathbf{S'}^{(4)} = \mathbf{T}_4\mathbf{S}^{(4)} + v\mathbf{F}^{(4)} + \mathbf{Q}_4(\mathbf{S}^{(3)}, \mathbf{F}^{(3)}, \mathbf{S}^{(2)}, \mathbf{F}^{(2)})$ |
| etc. |  |  |  |

Tabellen 1A bis 1C enthalten Erläuterungen zu den in der Tabelle 1 enthaltenen Gleichungen für die 2. Ordnung (Tabelle 1 A), für die dritte Ordnung (Tabelle 1B) und für die vierte Ordnung (Tabelle 1 C).

**Tabelle 1 A**

| | |
|---|---|
| $S^{(2)} = nW_{\text{In}}^{(2)}(0)$ | Vergenz der einfallenden Wellenfront : Brechungsindex auf der Einfallsseite multipliziert mit der zweiten Ableitung der Pfeilhöhe der einfallenden Wellenfront |
| $S'^{(2)} = n'W'^{(2)}_{\text{Out}}(0)$ | Vergenz der ausfallenden Wellenfront : Brechungsindex auf der Ausfallsseite multipliziert mit der zweiten Ableitung der Pfeilhöhe der ausfallenden Wellenfront |
| $F^{(2)} = (n'-n)\overline{S}^{(2)}(0)$ | Flächenbrechwert der brechenden Fläche: Brechungsindexdifferenz multipliziert mit der zweiten Ableitung der Pfeilhöhe der brechenden Fläche |
| $S$ bzw. $A$ | Vergenz der einfallenden Wellenfront |
| $S'$ bzw. $B$ | Vergenz der ausfallenden Wellenfront |
| $F$ bzw. D | Flächenbrechwert der brechenden Fläche |
| $\mathbf{S}^{(2)} = n\begin{pmatrix} W_{\text{In}}^{(2,0)}(0,0) \\ W_{\text{In}}^{(1,1)}(0,0) \\ W_{\text{In}}^{(0,2)}(0,0) \end{pmatrix}$ | Brechungsindex auf der Einfallsseite multipliziert mit dem Powervektor der zweiten Ableitung der Pfeilhöhe einfallenden |
| | Wellenfront |
| $\mathbf{S'}^{(2)} = n\begin{pmatrix} W'^{(2,0)}_{\text{Out}}(0,0) \\ W'^{(1,1)}_{\text{Out}}(0,0) \\ W'^{(0,2)}_{\text{Out}}(0,0) \end{pmatrix}$ | Brechungsindex auf der Ausfallsseite multipliziert mit dem Powervektor der zweiten Ableitung der Pfeilhöhe ausfallenden Wellenfront |
| $\mathbf{F}^{(2)} = (n'-n)\begin{pmatrix} \overline{S}^{(2,0)}(0,0) \\ \overline{S}^{(1,1)}(0,0) \\ \overline{S}^{(0,2)}(0,0) \end{pmatrix}$ | Brechungsindexdifferenz multipliziert mit dem Powervektor der zweiten Ableitungen der Pfeilhöhe der brechenden Fläche |
| $\mathbf{S}$ bzw. $\mathbf{A}$ | Powervektor der Vergenz der einfallenden Wellenfront |
| $\mathbf{S'}$ bzw. $\mathbf{B}$ | Powervektor der Vergenz der ausfallenden Wellenfront |
| $\mathbf{F}$ bzw. $\mathbf{D}$ | Powervektor des Flächenbrechwerts der brechenden Fläche |

(fortgesetzt)

| | |
|---|---|
| $\mathbf{T}_2$ | vom Einfallswinkel abhängige Matrix zur Korrektur des schiefen Einfalls |
| $\mathbf{T'}_2$ | vom Ausfallswinkel abhängige Matrix zur Korrektur des schiefen Einfalls |
| $\mathbf{v} = n'\cos\varphi' - n\cos\varphi$ | Faktor zur Korrektur des schiefen Einfalls |

**Tabelle 1B:**

| | |
|---|---|
| $S^{(3)} = nW_{In}^{(3)}(0)$ | Brechungsindex auf der Einfallsseite multipliziert mit der dritten Ableitung der Pfeilhöhe einfallenden Wellenfront |
| $S'^{(3)} = n'W'^{(3)}_{Out}(0)$ | Brechungsindex auf der Ausfallsseite multipliziert mit der dritten Ableitung der Pfeilhöhe der ausfallenden Wellenfront |
| $F^{(3)} = (n'-n)\overline{S^{(3)}}(0)$ | Brechungsindexdifferenz multipliziert mit der dritten Ableitung der Pfeilhöhe der brechenden Fläche |
| $\mathbf{S}^{(3)} = n\begin{pmatrix} W_{In}^{(3,0)}(0,0) \\ W_{In}^{(2,1)}(0,0) \\ W_{In}^{(1,2)}(0,0) \\ W_{In}^{(0,3)}(0,0) \end{pmatrix}$ | Brechungsindex auf der Einfallsseite multipliziert mit dem Powervektor der dritten Ableitung der Pfeilhöhe der einfallenden Wellenfront |
| $\mathbf{S'}^{(3)} = n\begin{pmatrix} W'^{(3,0)}_{Out}(0,0) \\ W'^{(2,1)}_{Out}(0,0) \\ W'^{(1,2)}_{Out}(0,0) \\ W'^{(0,3)}_{Out}(0,0) \end{pmatrix}$ | Brechungsindex auf der Ausfallsseite multipliziert mit dem Powervektor der dritten Ableitung der Pfeilhöhe der ausfallenden Wellenfront |
| $\mathbf{F}^{(3)} = (n'-n)\begin{pmatrix} \overline{S}^{(3,0)}(0,0) \\ \overline{S}^{(2,1)}(0,0) \\ \overline{S}^{(1,2)}(0,0) \\ \overline{S}^{(0,3)}(0,0) \end{pmatrix}$ | Brechungsindexdifferenz multipliziert mit dem Powervektor der dritten Ableitung der Pfeilhöhe der brechenden Fläche |
| $\mathbf{T}_3$ | vom Einfallswinkel abhängige Matrix zur Korrektur des schiefen Einfalls |
| $\mathbf{T'}_3$ | vom Ausfallswinkel abhängige Matrix zur Korrektur des schiefen Einfalls |
| $\mathbf{v} = n'\cos\varphi' - n\cos\varphi$ | Faktor zur Korrektur des schiefen Einfalls |
| $R_3(S^{(2)}, F^{(2)})$ | Zusatzterm, der nur von den Größen niedrigerer Ordnung (hier 2. Ordnung) abhängt |
| $R_3(\mathbf{S}^{(2)}, \mathbf{F}^{(2)})$ | vektorieller Zusatzterm, der nur von den Größen niedrigerer Ordnung (hier 2. Ordnung) abhängt |
| $\mathbf{Q}_3(\mathbf{S}^{(2)}, \mathbf{F}^{(2)})$ | vektorieller Zusatzterm, der den schiefen Einfall berücksichtigt, und der nur von den Größen niedrigerer Ordnung (hier 2. Ordnung) abhängt |

**Tabelle 1C**

| | |
|---|---|
| $R_4(S^{(3)}, F^{(0)}, S^{(2)}, F^{(2)})$ | Zusatzterm, der nur von den Größen niedrigerer Ordnung (hier 2. und 3. Ordnung) abhängt |
| $R_4(\mathbf{S}^{(3)}, \mathbf{F}^{(3)}, \mathbf{S}^{(2)}, \mathbf{F}^{(2)})$ | vektorieller Zusatzterm, der nur von den Größen niedrigerer Ordnung (hier 2. und 3. Ordnung) abhängt |

| $Q_4(S^{(3)}, \mathbf{F}^{(3)}, \mathbf{S}^{(2)}, \mathbf{F}^{(2)})$ | vektorieller Zusatzterm, der den schiefen Einfall berücksichtigt, und der nur von den Größen niedrigerer Ordnung (hier 2. und 3. Ordnung) abhängt |
|---|---|

Die Form der Zusatzterme $R_3(S^{(2)}, F^{(2)})$, $\mathbf{R}_3(\mathbf{S}^{(2)}, \mathbf{F}^{(2)})$, $\mathbf{Q}_3(\mathbf{S}^{(2)}, \mathbf{F}^{(2)})$ ist ferner in der Veröffentlichung [G. Esser, W. Becken, W. Müller, P. Baumbach, J. Arasa, und D. Uttenweiler, "Derivation of the refraction equations for higher-order aberrations of local wavefronts at oblique incidence", JOSA. A, Vol. 27, Nr. 2, Februar 2010, Seiten 218 - 237] beschrieben. Diese Terme verschwinden, sobald die Terme niedrigerer Ordnung $S^{(2)}$, $F^{(2)}$ bzw. $\mathbf{S}^{(2)}$, $\mathbf{F}^{(2)}$ verschwinden bzw. gleich Null sind.

Die weiteren Erläuterungen für die 4. Ordnung, etc. sind analog zu den Erläuterungen für die 2. und 3. Ordnung.

Es hat sich überraschenderweise herausgestellt, dass die Gleichungen, welche die Wellenfrontdurchrechnung zweiter und höherer Ordnung durch gewöhnliche refraktive Grenzflächen beschreiben, sich in vergleichsweise einfacher Weise modifizieren lassen, so dass ebenfalls diffraktive optische Elemente bzw. diffraktive Gitter mit einbezogen werden können. Dabei kann entweder der Durchgang von Licht durch ein isoliertes diffraktives Gitter beschrieben werden oder der Durchgang durch eine unmittelbar aufeinanderfolgende Kombination aus einem diffraktiven Gitter und einer refraktiven Grenzfläche.

Ferner hat sich herausgestellt, dass sich jedem beliebigen, auch nicht-rotationssymmetrischen, diffraktiven Gitter auch bei beliebigen schiefwinkligen Strahleinfallbedingungen eine im Allgemeinen vektorielle Größe $\mathbf{PK}^{(k)}$, $k = 2$, $3$, $4$,..., nachfolgend auch Phasenkrümmung (für $k = 2$) bzw. Phasenableitungen (für $k > 2$) genannt, zuordnen lässt, so dass die entsprechende BAD Gleichung und die Gleichungen höherer Ordnung für refraktive Flächen im Wesentlichen nur additiv um den Zusatzterm $\mathbf{PK}^{(k)}$, $k = 2, 3, 4,...$ erweitert werden müssen, um die Vergenzen beim Wellenfrontdurchgang bei Anwesenheit eines nicht-rotationssymmetrischen diffraktiven Gitters korrekt zu beschreiben.

Mit anderen Worten ist es auch in jeder noch so asymmetrischen Situation, für die sich für rein refraktive Flächen die Wellenfrontdurchrechnung exakt beschreiben ließe, ausreichend, die entsprechende Gleichung im Wesentlichen nur durch einen additiven Zusatzterm $\mathbf{PK}$ zu erweitern, um auch das diffraktive Gitter korrekt zu beschreiben.

Ferner ist erkannt worden, dass die Vergenz der ausfallenden Wellenfront unabhängig von der Reihenfolge ist, in der die brechende Fläche und das diffraktive Gitter aufeinander folgen.

Im Falle einer Wellenfrontdurchrechnung zweiter Ordnung (d.h. für $k = 2$) für ein rotationssymmetrisches, diffraktives Gitter und unter senkrechtem Strahleinfall wird Gleichung (101) somit additiv um den Zusatzterm $PK^{(2)}$ erweitert, um die Vergenzen beim Wellenfrontdurchgang auch bei Anwesenheit eines diffraktiven Gitters korrekt zu beschreiben:

$$B = A + D + PK^{(2)}. \qquad (103)$$

Die Gleichung (101) ist allerdings nur exakt gültig für den Fall, dass der Strahl senkrecht auf die brechende Fläche trifft und die einfallende Wellenfront und die brechende Fläche rotationssymmetrisch sind. Aber auch für Abweichungen von diesen Voraussetzungen ist Gleichung (101) eine gute Näherung. Entsprechend ist dann Gleichung (103) eine gute Näherung bei Anwesenheit eines diffraktiven Gitters. Im Fall einer Wellenfrontdurchrechnung zweiter Ordnung (d.h. für $k = 2$) für ein nicht-rotationssymmetrisches diffraktives Gitter und bei einem senkrechten Strahleinfall kann dem diffraktiven Gitter eine vektorielle Größe $\mathbf{PK}^{(2)}$ zugeordnet werden, so dass die entsprechende vektorielle BAD-Gleichung nur additiv um den vektoriellen Zusatzterm $\mathbf{PK}^{(2)}$ erweitert werden muss, um die Vergenzen beim Wellenfrontdurchgang bei Anwesenheit eines nicht-rotationssymmetrischen diffraktiven Gitters korrekt zu beschreiben. In diesem Fall gilt

$$\mathbf{B} = \mathbf{A} + \mathbf{D} + \mathbf{PK}^{(2)}. \qquad (104)$$

Wie nachfolgend im Detail dargelegt wird, kann jedem beliebigen, auch nicht-rotationssymmetrischen, diffraktiven Gitter auch unter beliebigen schiefwinkligen Strahleinfallbedingungen ebenfalls eine im Allgemeinen vektorielle Größe $\mathbf{PK}^{(k)}$ zugeordnet werden, so dass die entsprechende allgemeine BAD-Gleichung und die Gleichungen höherer Ordnung für die Wellfrontdurchrechnung durch refraktive Flächen im Wesentlichen nur additiv um den Zusatzterm $\mathbf{PK}^{(k)}$ ($\mathbf{PK}^{(2)}$, $\mathbf{PK}^{(3)}$ $\mathbf{PK}^{(4)}$, ...) erweitert werden müssen, um die Vergenzen beim Wellenfrontdurchgang bei Anwesenheit eines nicht-rotationssymmetrischen diffraktiven Gitter korrekt zu beschreiben.

Es ist ferner erkannt worden, dass die Komponenten des additiven Zusatzterms $\mathbf{PK}^{(k)}$ durch den Vektor der Ableitungen zweiter oder höherer Ordnung einer Phasenfunktion $\Psi(\bar{x}, \bar{y})$ nach den Koordinaten $\bar{x}$, $\bar{y}$ tangential zur brechenden Fläche (Grundfläche) beschrieben werden können. Für den additiven Zusatzterm zweiter Ordnung gilt z.B.:

$$\mathbf{PK}^{(2)} = -\begin{pmatrix} \Psi^{(2,0)}(0,0) \\ \Psi^{(1,1)}(0,0) \\ \Psi^{(0,2)}(0,0) \end{pmatrix} = -\begin{pmatrix} \partial^2\Psi(\overline{x},\overline{y})/\partial\overline{x}^2 \\ \partial^2\Psi(\overline{x},\overline{y})/\partial\overline{x}\partial\overline{y} \\ \partial^2\Psi(\overline{x},\overline{y})/\partial\overline{y}^2 \end{pmatrix}\Bigg|_{(\overline{x},\overline{y})=(0,0)} \qquad (105)$$

Aus diesem Grunde wird der additive Zusatzterm zweiter Ordnung $\mathbf{PK}^{(2)}$ auch "Phasenkrümmung" genannt.

Die Phasenfunktion $\Psi(\overline{x}, \overline{y})$ stellt die optische Pfadlängendifferenz (Optical Path Difference oder OPD), welche durch das diffraktive Gitter eingeführt wird, als Funktion der Koordinaten $\overline{x}, y$ tangential zur brechenden Fläche dar. Die Beschreibung eines diffraktiven Gitters durch die Phasenfunktion $\Psi(\overline{x}, \overline{y})$ ermöglicht, den additiven Zusatzterm $\mathbf{PK}^{(k)}$ ($\mathbf{PK}^{(2)}$, $\mathbf{PK}^{(3)}$, $\mathbf{PK}(4)$,... ) konstruktiv zu bestimmen. Anders ausgedrückt wird vorgeschlagen, zur Beschreibung eines beliebigen diffraktiven Gitters eine Phasenfunktion $\Psi(\overline{x}, \overline{y})$ zu verwenden, wobei der additive Zusatzterm $\mathbf{PK}^{(k)}$ ($\mathbf{PK}^{(2)}$, $\mathbf{PK}^{(3)}$, $\mathbf{PK}^{(4)}$,... ) durch den Vektor der Ableitungen zweiter oder höheren Ordnung der Phasenfunktion nach den Koordinaten $\overline{x}, \overline{y}$ tangential zur brechenden Fläche gegeben ist (vgl. Gleichung (105) für $k=2$).

Tabelle 2 fasst die Gleichungen bzw. Wellenfrontgleichungen (in Powervektorform) für die Wellenfrontdurchrechnung bei dem Durchgang durch eine refraktive Grenzfläche (Grundfläche) zusammen, auf welcher zusätzlich ein phasenänderndes optisches Element aufgebracht ist. Tabellen 2A und 2B enthalten Erläuterungen zu den in der Tabelle 2 enthaltenen Gleichungen für die 2. Ordnung (Tabelle 2A) und für die dritte Ordnung (Tabelle 2B).

**Tabelle 2**

| | senkrechter Einfall + Rotationssymmetrie | senkrechter Einfall ohne Rot.-Symmetrie | keine Symmetrie |
|---|---|---|---|
| 2.Ord. | $S'^{(2)} = S^{(2)} + F^{(2)} - \Psi^{(2)}$ alternative | $\mathbf{S}'^{(2)} = \mathbf{S}^{(2)} + \mathbf{F}^{(2)} - \Psi^{(2)}$ alternative | $\mathbf{T'}_2\mathbf{S}'^{(2)} = \mathbf{T}_2\mathbf{S}^{(2)} + v\mathbf{F}^{(2)} - \Psi^{(2)}$ alternative Schreibweise: |
| | Schreibweise: $S' = S + F + PK^{(2)}$ $B = A + D + PK^{(2)}$ | Schreibweise: $\mathbf{S}' = \mathbf{S} + \mathbf{F} + \mathbf{PK}^{(2)}$ $\mathbf{B} = \mathbf{A} + \mathbf{D} + \mathbf{PK}^{(2)}$ | $\mathbf{T'}_2\,\mathbf{S}'^{(2)} = \mathbf{T}_2\mathbf{S}^{(2)} + v\mathbf{F}^{(2)} + \mathbf{PK}^{(2)}$ |
| 3.Ord. | $S'^{(3)} = S^{(3)} + F^{(3)} - \Psi^{(3)} + R_3(S^{(2)}, F^{(2)})$ alternative Schreibweise: $PK^{(3)} = -\Psi^{(3)}$ | $\mathbf{S}'^{(3)} = \mathbf{S}^{(3)} + \mathbf{F}^{(3)} - \Psi^{(3)} + \mathbf{R}_3(\mathbf{S}^{(2)}, \mathbf{F}^{(2)})$ alternative Schreibweise: $\mathbf{PK}^{(3)} = -\Psi^{(3)}$ | $\mathbf{T'}_3\mathbf{S}'^{(3)} = \mathbf{T}_3\mathbf{S}^{(3)} + v\mathbf{F}^{(3)} - \Psi^{(3)} + \mathbf{Q}_3(\mathbf{S}^{(2)}, \mathbf{F}^{(2)})$ alternative Schreibweise: $\mathbf{PK}^{(3)} = -\Psi^{(3)}$ |
| 4.Ord. | $S'^{(4)} = S^{(4)} + F^{(4)} - \Psi^{(4)} + R^4(S^{(3)}, F^{(3)}, S^{(2)}, F^{(2)})$ alternative Schreibweise: $PK^{(4)} = -\Psi^{(4)}$ | $\mathbf{S}'^{(4)} = \mathbf{S}^{(4)} + \mathbf{F}^{(4)} - \Psi^{(3)} + \mathbf{R}_4(\mathbf{S}^{(3)}, \mathbf{F}^{(3)}, \mathbf{S}^{(2)}, \mathbf{F}^{(2)})$ alternative Schreibweise: $\mathbf{PK}^{(4)} = -\Psi^{(4)}$ | $\mathbf{T'}_4\mathbf{S}'^{(4)} = \mathbf{T}_4\mathbf{S}^{(4)} + v\mathbf{F}^{(4)} - \Psi^{(4)} + \mathbf{Q}_4(\mathbf{S}^{(3)}, \mathbf{F}^{(3)}, \mathbf{S}^{(2)}, \mathbf{F}^{(2)})$ alternative Schreibweise $\mathbf{PK}^{(4)} = -\Psi^{(4)}$ |
| etc. | | | |

**Tabelle 2A**

| | |
|---|---|
| $\Psi^{(2)} = \Psi^{(2)}(0)$ | zweite Ableitung der Phasenfunktion |
| $PK^{(2)} = -\Psi^{(2)}(0)$ | Phasenkrümmung, d.h. negative zweite Ableitung der Phasenfunktion |
| $\mathbf{\Psi}^{(2)} = \begin{pmatrix} \Psi^{(2,0)}(0,0) \\ \Psi^{(1,1)}(0,0) \\ \Psi^{(0,2)}(0,0) \end{pmatrix}$ | Powervektor der zweiten Ableitungen der Phasenfunktion |
| $\mathbf{PK}^{(2)} = -\Psi^{(2)}(0,0)$ | Powervektor der Phasenkrümmung, d.h. der negativen zweiten Ableitungen der Phasenfunktion |

**Tabelle 2B**

| $\Psi^{(3)} = \Psi^{(3)}(0)$ | dritte Ableitung der Phasenfunktion |
|---|---|
| $PK^{(3)} = -\Psi^{(3)}(0)$ | Zusatzterm im Sinne der Erfindung, gegeben durch negative dritte Ableitung der Phasenfunktion |
| $\mathbf{\Psi}^{(3)} = \begin{pmatrix} \mathbf{\Psi}^{(3,0)}(0,0) \\ \mathbf{\Psi}^{(2,1)}(0,0) \\ \mathbf{\Psi}^{(1,2)}(0,0) \\ \mathbf{\Psi}^{(0,3)}(0,0) \end{pmatrix}$ | Powervektor der dritten Ableitungen der Phasenfunktion |
| $\mathbf{PK}^{(3)} = -\Psi^{(3)}(0,0)$ | Vektorieller Zusatzterm im Sinne der Erfindung, gegeben durch den Powervektor der negativen dritten Ableitungen der Phasenfunktion |

Die Gleichungen für die 4. Ordnung und für alle höheren Ordnungen sind analog aufgebaut.

Das Koordinatensystem $\bar{x}, \bar{y}, \bar{z}$ ist ein lokales Koordinatensystem, welches dazu dient, den Durchtritt eines Strahls durch eine Grenzfläche zu beschreiben, wobei am Durchstoßpunkt des Hauptstrahls mit der Grenzfläche $(\bar{x}, \bar{y}, \bar{z}) = (0,0,0)$ gilt, und wobei die $\bar{z}$-Achse dort senkrecht zur Grundfläche steht. Eine spezielle mögliche Wahl eines solchen lokalen Systems besteht darin, zu fordern, dass der einfallende Strahl beispielsweise in der $\bar{x}$-$\bar{z}$-Ebene oder in der $\bar{y}$-$\bar{z}$-Ebene liegt. Im Allgemeinen muss jedoch diese Bedingung nicht notwendigerweise erfüllt sein. Die Verwendung von lokalen Koordinatensystemen ist z.B. aus WO 2008/089999 A1 bekannt und wird z.B. bei der Wellenfrontdurchrechnung 2.Ordnung durch Flächen ohne diffraktive Gitter verwendet. Typischerweise werden so viele lokale Systeme wie Hauptstrahlen gerechnet werden sollen verwendet. Darüber hinaus kann ein globales Koordinatensystem verwendet werden.

Ebenfalls ist erkannt worden, dass sich ein Zusammenhang herstellen lässt zwischen den Gitterlinien des diffraktiven optischen Elements bzw. des diffraktiven Gitters und der Phasenfunktion $\Psi(\bar{x}, \bar{y})$, welche darauf beruht, dass die Gitterlinien auf Kurven mit $\Psi(\bar{x}, \bar{y}) = const.$ liegen. Die Bestimmung der Phasenfunktion $\Psi(\bar{x}, \bar{y})$ anhand von Parametern des diffraktiven Gitters wird nachfolgend im Detail beschrieben.

Ferner ist erkannt worden, dass anders als bei der Brechung an einer rein refraktiven Grenzfläche (wie z.B. in WO 2008 089999 A1 beschrieben), der einfallende Hauptstrahl, der ausfallende Hauptstrahl und der Normalenvektor der brechenden Fläche bei Vorhandensein eines diffraktiven Gitters im Allgemeinen nicht mehr in ein- und derselben Ebene liegen müssen.

Im einfachsten Fall einer refraktiven, homogenen Grenzfläche zwischen zwei Medien mit den Brechungsindizes $n$ und $n'$ ohne diffraktive optische Elemente bzw. diffraktive Gitter wird die Strahlablenkung durch das Brechungsgesetz $n'\sin\varphi'-n\sin\varphi=0$, wobei $\varphi$ der Einfallswinkel und $\varphi'$ der Ausfallswinkel ist, beschrieben.

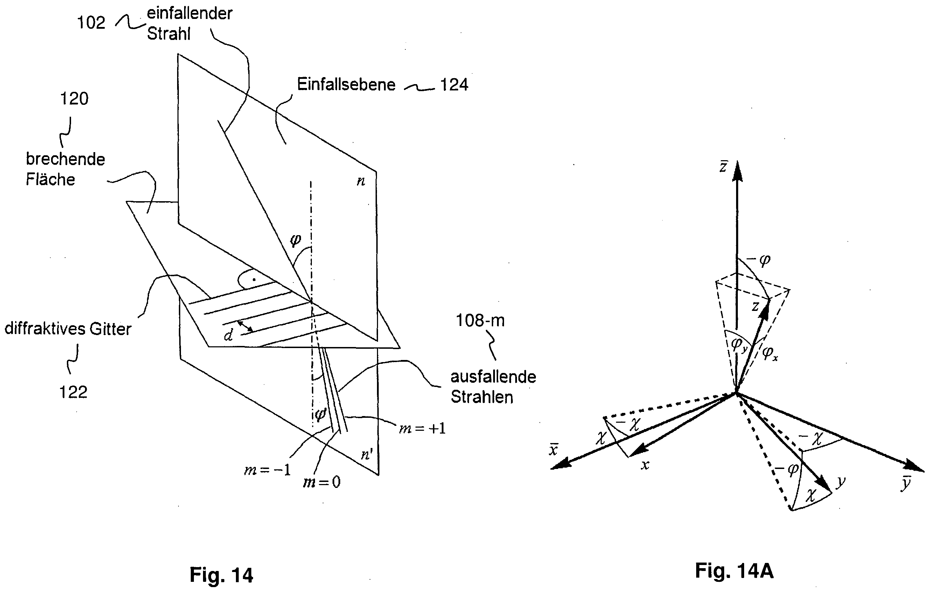

**Fig. 14** illustriert schematisch den Strahlengang bei Beugung an einer Grenzfläche 120 mit einem diffraktiven Gitter 122 in einem speziellen einfachen Fall, in welchem es möglich ist, die Strahlablenkung durch ein geschlossenes Gesetz zu beschreiben. Dieses Gesetz lässt sich als eine Modifikation dieses Brechungsgesetzes auffassen. Dieser Fall ist dadurch gekennzeichnet, dass die brechende Fläche 120 eine Ebene ist und das diffraktive Gitter 122 eine Unregelmäßigkeit dieser Fläche 120 ist, welche senkrecht zur Einfallsebene 124 translationsinvariant ist und in Richtung der Brechungsebene (die Ebene der brechenden Fläche 120) äquidistant mit Periode $d$ ist (siehe **Fig. 14**). Die Unregelmäßigkeit kann z.B. ein Sägezahngitter sein, ein Rechteckgitter, ein Wechsel von lichtdurchlässigen und lichtundurchlässigen Zonen oder jede andere periodische Abweichung von der homogenen, ebenen, lichtdurchlässigen, brechenden Fläche. In diesem einfachen Fall wird ein einfallender monochromatischer Strahl 102, welcher zu Licht mit der Wellenlänge $\lambda$, gehört, durch Beugung in viele Einzelstrahlen 108-m, welche zu den verschiedenen Beugungsordnungen $m$, $m = ...,-2,-1,0,1,2,...$ gehören, aufgespalten. Die Beugungsordnung $m$ kann beliebig aber fest gewählt werden und nachfolgend kann die Situation für den einen Strahl zur Beugungsordnung $m$ isoliert, d.h. ungeachtet der möglichen anderen Beugungsordnungen, beschrieben werden. Für einen Strahl zur Beugungsordnung $m$ gilt dann das modifizierte Brechungsgesetz $n'\sin\varphi'-n\sin\varphi=m\lambda/d$, wobei $n$ und $n'$ jeweils den Brechungsindex des Materials vor und nach der Grenzfläche 120 bezeichnen und $\varphi$ der Einfallswinkel und $\varphi'$ der Ausfallswinkel ist.

Für jeden allgemeineren Fall, z.B. bei schräg zu den Gitterlinien einfallenden Strahlen, bei einem nicht äquidistanten Gitter und/oder bei einem Gitter mit gekrümmten Gitterlinien und/oder bei einer gekrümmten Fläche sind bisher keine umfassenden Gesetze für die Strahlablenkung und Wellenfrontrechnung bekannt. Um ein optisches Element mit beliebigen, insbesondere asphärischen Flächen und zumindest einem diffraktiven Gitter in Gebrauchsstellung unter Berücksichtigung der Abbildungsfehler 2.Ordnung (z.B. Brechkraft und Astigmatismus) und gegebenenfalls der Abbildungsfehler höherer Ordnung (z.B. Koma oder sphärische Aberration) berechnen oder optimieren zu können, ist es jedoch vorteilhaft, eine genaue Wellenfrontdurchrechnung auch für den allgemeinen Fall durchführen zu können.

Nachfolgend werden die Grundsätze der Strahl- und Wellenfrontdurchrechnung in dem allgemeinen Fall eines optischen Elements bzw. eines optischen Systems (z.B. eines Brillenglases) mit einem diffraktiven Gitter näher beschrieben.

### Koordinatensysteme

Zunächst werden Größen eingeführt, welche eine Grenzfläche einschließlich zumindest eines diffraktiven Gitters möglichst allgemein beschreiben können. Hierzu werden - in Analogie zum Fall rein refraktiver Flächen - grundsätzlich zwei Arten von Koordinaten bzw. Koordinatensystemen verwendet.

Die eine Art sind globale Koordinaten $\bar{x}^0, \bar{y}^0, \bar{z}^0$, welche dazu dienen, die Grundfläche (d.h. die rein refraktive Fläche ohne das diffraktive Gitter durch ihre Pfeilhöhe $\bar{z}^0(\bar{x}^0, \bar{y}^0)$ zu beschreiben. Hierbei wird die gegebenenfalls vorhandene Pfeilhöhe des diffraktiven Gitters nicht zur Pfeilhöhe der Grundfläche hinzugerechnet. Stattdessen wird das diffraktive Gitter selbst durch eine separate Eigenschaft $h(\bar{x}^0, \bar{y}^0)$ beschrieben. Hierbei kann $h(\bar{x}^0, \bar{y}^0)$ die Rolle einer zusätzlichen Pfeilhöhe spielen, so dass die wahre (mikroskopische) physikalische Pfeilhöhe der Grenzfläche durch

$$\bar{z}_m^0(\bar{x}^0, \bar{y}^0) = \bar{z}^0(\bar{x}^0, \bar{y}^0) + h(\bar{x}^0, \bar{y}^0)$$ gegeben ist. Es ist jedoch möglich, dass $h(\bar{x}^0, \bar{y}^0)$ die Rolle einer Transmissionseigenschaft oder einer sonstigen Eigenschaft des POE spielt.

Die andere Art von Koordinaten sind - wie oben beschrieben - lokale Koordinaten $\bar{x}, \bar{y}, \bar{z}$, welche dazu dienen, den Hindurchtritt eines Strahls durch die Grenzfläche so zu beschreiben, dass am Durchstoßpunkt $(\bar{x}, \bar{y}, \bar{z}) = (0,0,0)$ gilt, und dass die $\bar{z}$-Achse dort senkrecht zur Grundfläche steht. Eine spezielle mögliche Wahl eines solchen lokalen Systems besteht darin zu fordern, dass der einfallende Strahl in beispielsweise der $\bar{x}$-$\bar{z}$-Ebene oder der $\bar{y}$-$\bar{z}$-Ebene liegt. Im Allgemeinen muss jedoch diese Bedingung nicht notwendigerweise erfüllt sein. Die Verwendung von lokalen Systemen ist z.B. aus WO 2008/089999 A1 bekannt und wird z.B. bei der Wellenfrontdurchrechnung 2.Ordnung durch Flächen ohne diffraktives Gitter verwendet. Typischerweise wird nur ein globales Koordinatensystem, aber so viele lokale Systeme wie Strahlen gerechnet werden sollen, verwendet.

**Fig. 14A** stellt die Lage des Koordinatensystems $x,y,z$ der einfallenden Wellenfront bezüglich des Koordinatensystems $\bar{x}, \bar{y}, \bar{z}$ der brechenden Fläche (Grundfläche) dar, ausgedrückt durch die Winkel $\varphi_x$, $\varphi_y$, $\varphi$ und $\chi$.

In Fig. 14A sind der Einfachheit halber lediglich das Koordinatensystem der einfallenden Wellenfront und das Koordinatensystem der brechenden Fläche gezeigt. Das Koordinatensystem $x',y',z'$ der ausfallenden Wellenfront kann analog zu dem Koordinatensystem der einfallenden Wellenfront vorgegeben werden. Des Weiteren wird auf Fig. 1 in der Publikation [G. Esser, W. Becken, W. Müller, P. Baumbach, J. Arasa, und D. Uttenweiler, "Derivation of the refraction equations for higher-order aberrations of local wavefronts at oblique incidence", JOSA. A, Vol. 27, Nr. 2, Februar 2010, Seiten 218 - 237] verweisen, welche eine zweidimensionale Darstellung der entsprechenden gegenseitigen Lage für alle drei Koordinatensysteme zeigt.

### Beschreibung eines diffraktiven Gitters durch die Phasenfunktion $\Psi(\bar{x}, \bar{y})$

Die Phasenfunktion $\Psi(\bar{x}, \bar{y})$ stellt die optische Pfadlängendifferenz (Optical Path Difference oder OPD), welche durch das diffraktive Gitter eingeführt wird, als Funktion der Koordinaten $\bar{x}, y$ tangential zur brechenden Fläche (Grundfläche) dar. Die Phasenfunktion $\Psi(\bar{x}, \bar{y})$ kann anhand der Gitterlinien bestimmt werden. Umgekehrt ist es möglich bei einer vorgegebenen Phasenfunktion die Gitterlinien des entsprechenden diffraktiven Gitters zu bestimmen.

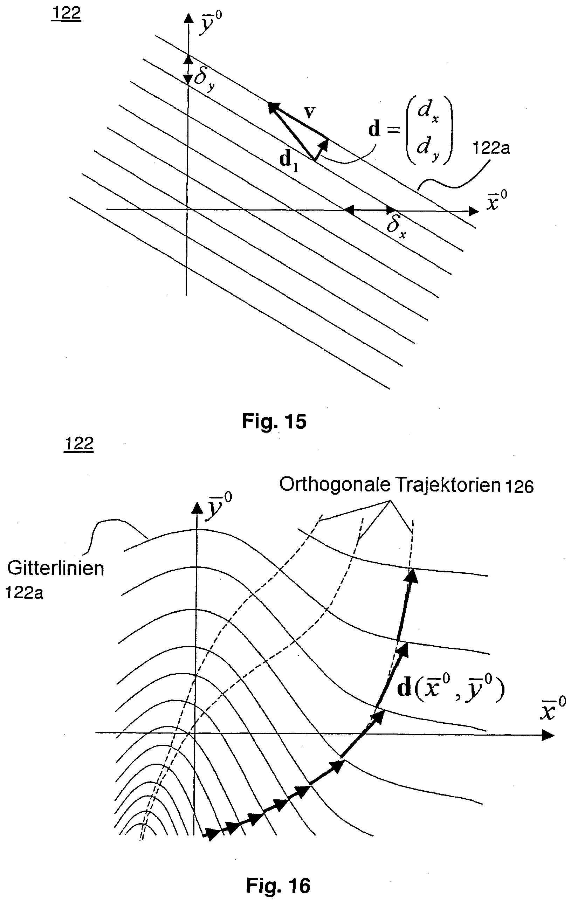

Im einfachsten Fall eines konstanten, äquidistanten diffraktiven Gitters 122 auf einer ebenen Fläche 120 (siehe z.B. **Fig. 14** und **Fig. 15**), die in globalen Koordinaten durch $\bar{z}^0(\bar{x}^0, \bar{y}^0) = a_x \bar{x}^0 + a_y \bar{y}^0 + t$ beschrieben wird, kann zwischen einem einfach-periodischen und einem doppelt-periodischen Gitter unterschieden werden.

Beim einfach-periodischen Gitter gibt es einen Periodenvektor $\mathbf{d}_1$, so dass für alle Punkte $\bar{r}^0 = (\bar{x}^0, \bar{y}^0)$ 1

$$h(\bar{\mathbf{r}}^0 + \mathbf{d}_1) = h(\bar{\mathbf{r}}^0) \qquad (106a)$$

gilt. Ferner gibt es eine Richtung mit Translationsinvarianz, d.h. einen Vektor $\mathbf{v}$ mit

$$h(\bar{\mathbf{r}}^0 + \alpha\mathbf{v}) = h(\bar{\mathbf{r}}^0) \qquad (106b)$$

für alle $\alpha$.

In einem solchen Fall zeigen die Gitterlinien 112a in die Richtung von **v**, dagegen muss $\mathbf{d}_1$ nicht unbedingt den Abstand zwischen den Gitterlinien 122a beschreiben, weil $\mathbf{d}_1$ nicht notwendigerweise senkrecht auf **v** stehen muss. In einem solchen Fall kann der Vektor $\mathbf{d}_1$ durch den Vektor mit den Komponenten $\mathbf{d} = \begin{pmatrix} d_x \\ d_y \end{pmatrix}$ ersetzt werden, welcher durch

$$\mathbf{d} = \mathbf{d}_1 - (\mathbf{d}_1 \cdot \mathbf{v})\mathbf{v} \tag{107}$$

definiert ist.

Dieser Vektor **d** steht senkrecht auf **v** und es gilt ferner

$$\begin{aligned} h(\overline{\mathbf{r}}^0 + \mathbf{d}) &= h\big(\overline{\mathbf{r}}^0 + \mathbf{d}_1 - (\mathbf{d}_1 \cdot \mathbf{v})\mathbf{v}\big) \\ &= h\big(\overline{\mathbf{r}}^0 + \mathbf{d}_1 - \alpha\mathbf{v}\big) \\ &= h\big(\overline{\mathbf{r}}^0 + \mathbf{d}_1\big) \\ &= h\big(\overline{\mathbf{r}}^0\big) \end{aligned} \tag{108}$$

so dass auch der Vektor **d** ein Periodenvektor ist. Der Vektor **d** gibt jedoch im Gegensatz zu $\mathbf{d}_1$ auch den Abstand zwischen zwei Gitterlinien an (siehe **Fig. 15**). Die Gitterperiode ist dann durch den Betrag $d = |\mathbf{d}|$ gegeben.

Bei einem einfach-periodischen Gitter 122, wie z.B. in Fig. 15 gezeigt, existieren ferner noch zwei weitere Periodenvektoren von praktischer Bedeutung. Diese hängen vom Koordinatensystem ab und sind durch die Vektoren

$$\boldsymbol{\delta}_x = \begin{pmatrix} \delta_x \\ 0 \end{pmatrix}, \quad \boldsymbol{\delta}_y = \begin{pmatrix} 0 \\ \delta_y \end{pmatrix}, \tag{109}$$

die in Richtung der Koordinatenachsen zeigen, gegeben (siehe Fig. 15). Der Zusammenhang zwischen **d** und den Vektoren $\delta_x, \delta_y$ ist durch:

$$\delta_x = \frac{|\mathbf{d}|^2}{d_x}, \quad \delta_y = \frac{|\mathbf{d}|^2}{d_y}, \tag{110a}$$

sowie

$$d_x = \frac{\delta_x \delta_y^2}{\delta_x^2 + \delta_y^2}, \quad d_y = \frac{\delta_y \delta_x^2}{\delta_x^2 + \delta_y^2} \tag{110b}$$

gegeben.

Bei einem doppelt-periodischen Gitter 122 - existieren zwei Periodenvektoren $\mathbf{d}_1, \mathbf{d}_2$ mit

$$h(\bar{\mathbf{r}}^0 + \mathbf{d}_1) = h(\bar{\mathbf{r}}_S)$$
$$h(\bar{\mathbf{r}}^0 + \mathbf{d}_2) = h(\bar{\mathbf{r}}_S).$$
$$(111)$$

Doppelt-periodisch in diesem Sinne bedeutet, dass es in keiner Richtung eine Translationsinvarianz gibt, d.h. es gibt keinen Vektor **v** mit $h(\bar{\mathbf{r}}^0 + \alpha\mathbf{v}) = h(\bar{\mathbf{r}}_S)$ für alle $\alpha$.

Aus Betrachtungen der Wellenoptik ergibt sich, dass eine ebene monochromatische Welle der Wellenlänge $\lambda$, die schräg auf ein einfach- oder doppelt-periodisches Gitter fällt, auf der ausfallenden Seite durch Interferenz zu einer richtungsabhängigen Intensitätsverteilung führt. Diese Verteilung lässt sich als Produkt aus zwei richtungsabhängigen Faktoren darstellen, wobei der eine Faktor (der Formfaktor) nur durch die Form des diffraktiven Gitters innerhalb einer Gitterperiode bestimmt wird, und der zweite Faktor (der Gitter- bzw. Beugungsfaktor) nur durch die Gitterperiodizität bestimmt wird. Der zweite Faktor nimmt ein Maximum in jeder einer solchen Richtung an, in der der Gangunterschied zwischen zwei Stellen des Wellenfeldes auf der Grenzfläche, die um eine Gitterperiode versetzt liegen, ein ganzzahliges Vielfaches der Wellenlänge des Lichts auf der ausfallenden Seite beträgt.

Wird im Bild der geometrischen Strahlenoptik dem einfallenden Wellenfeld der Richtungsvektor

$$\mathbf{N} = \begin{pmatrix} \sin\varphi_x \\ \sin\varphi_y \\ \sqrt{1 - \sin^2\varphi_x - \sin^2\varphi_y} \end{pmatrix}$$
$$(112a)$$

zugeordnet und auf der ausfallenden Seite einer jeder Richtung, in der ein Maximum des Gitterfaktors liegt, ein Richtungsvektor der Form

$$\mathbf{N}' = \begin{pmatrix} \sin\varphi'_x \\ \sin\varphi'_y \\ \sqrt{1 - \sin^2\varphi'_x - \sin^2\varphi'_y} \end{pmatrix}$$
$$(112b)$$

zugeordnet, dann werden die Strahlen durch die Gesetze

$$n'\sin\varphi'_x - n\sin\varphi_x = \frac{m_x\lambda}{\delta_x}$$
$$n'\sin\varphi'_y - n\sin\varphi_y = \frac{m_y\lambda}{\delta_y}$$
$$(113)$$

beschrieben, wobei $m_x = ..., -3, -2, -1, 0, 1, 2, 3, ...$ und $m_y = ..., -3, -2, -1, 0, 1, 2, 3, ...$ ganze Zahlen sind. Die Gesetze (113) können als die erweiterten Brechungsgesetze bei Anwesenheit eines diffraktiven Gitters betrachtet werden. Insbesondere beschreibt der Fall $m_x = 0$, $m_y = 0$, d.h. die nullte Beugungsordnung, die Situation ohne diffraktive Elemente.

Bei einem doppelt-periodischen diffraktiven Element kommen alle ganzen Zahlen $m_x, m_y$ unabhängig voneinander vor. Bei einem einfach-periodischen Gitter kommen nur beitragsgleiche Beugungsordnungen $m_x = \sigma m_y$ vor, wobei $\sigma = +1$ für den Fall gilt, dass die Gitterlinien für zunehmende Werte von $\bar{x}^0$ fallen (wie in **Fig. 15**, $\partial \bar{y}^0/\partial \bar{x}^0 < 0$) und $\sigma = -1$ für den Fall steigender Gitterlinien gilt ($\partial \bar{y}^0/\partial \bar{x}^0 > 0$)

Nachfolgend werden einfach-periodische, diffraktiven Gitter ($m := m_x = \sigma m_y$) betrachtet. Alle Berechnungen können jedoch ebenfalls für den Fall von doppelt-periodischen diffraktiven Gittern entsprechend modifiziert werden.

Die Gleichung (113) mit ($m:=m_x=\sigma \cdot m_y$) auf der rechten Seite lässt sich so interpretieren, dass zwei Strahlen, die an zwei benachbarten Gitterlinien gebrochen werden, einen nichtverschwindenden Gangunterschied besitzen, d.h. eine Phasendifferenz, die proportional zu $m$ und proportional zu $\lambda$ ist. Somit gibt es zwei Möglichkeiten, den Verlauf der Gitterlinien zu charakterisieren, nämlich zum einen durch die (z.B. mit einem Mikroskop) messbaren, auf dem Vektor **d** basierenden Gittereigenschaften und zum anderen durch die abstrakte Eigenschaft, in den Strahlengang einen zusätzlichen ortsabhängigen Gangunterschied einzuführen. Im zweiten Fall wird der Verlauf der Gitterlinien durch die Differenz zwischen den Werten einer Phasenfunktion $\Psi^0(\overline{x}^0,\overline{y}^0;\lambda,m)$ bestimmt, welche außer von den Koordinaten $\overline{x}^0,\overline{y}^0$ auch noch von der Wellenlänge $\lambda$ und der Beugungsordnung $m$ abhängt. Da diese Phasenfunktion in jedem Fall proportional zu $\lambda$ und $m$ ist, können diese Faktoren abgespalten werden. Statt der Phasenfunktion $\Psi^0(\overline{x}^0,\overline{y}^0;\lambda,m)$ kann die Phasenfunktion $\psi^0(\overline{x}^0,\overline{y}^0)$ verwendet werden, wobei

$$\Psi^0(\overline{x}^0,\overline{y}^0;\lambda,m) = m\lambda \cdot \psi^0(\overline{x}^0,\overline{y}^0). \qquad (114)$$

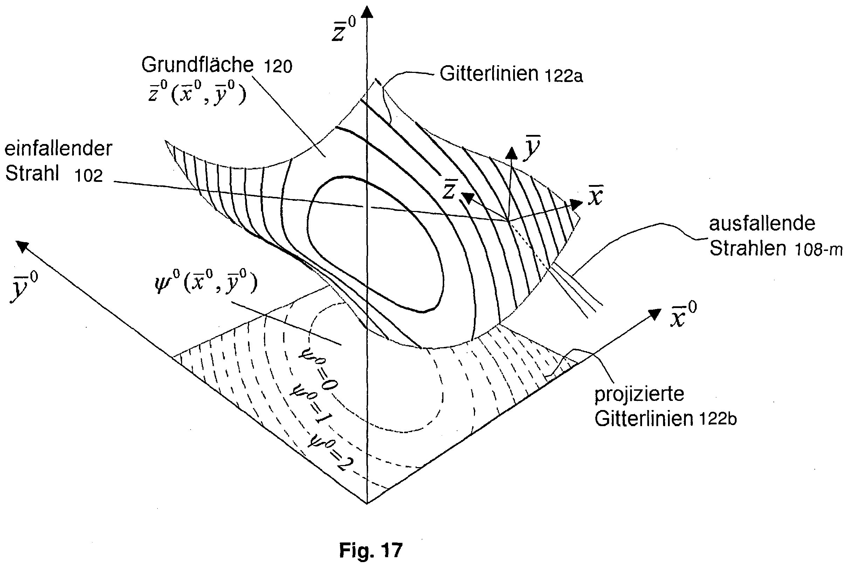

Fig. 16 zeigt Gitterlinien eines diffraktiven Gitters 122 auf einer ebenen Grenzfläche 120 und Fig. 17 zeigt Gitterlinien eines diffraktiven Gitters 122 auf einer gekrümmten Grenzfläche 122.

Außer im einfachsten Fall eines konstanten, äquidistanten Gittes auf einer ebenen Fläche verlaufen im allgemeinen Fall die Gitterlinien an jeder Stelle eines optischen Elements in einer anderen Richtung, wie z.B. in **Fig. 16** und **Fig. 17** gezeigt. Darüber hinaus ist im Allgemeinen ihr Abstand an jeder Stelle verschieden (siehe z.B. **Fig. 16**). Eine strenge Periodizität liegt dann im Grunde nicht mehr vor. Der Periodenvektor **d** kann folglich nicht mehr definiert werden. Es wird daher vorgeschlagen, den Periodenvektor **d** durch eine koordinatenabhängige Funktion $\mathbf{d}(\overline{x}^0,\overline{y}^0)$ oder, anders ausgedrückt, durch ein Vektorfeld $\mathbf{d}(\overline{x}^0,\overline{y}^0)$ zu ersetzen, welches als das Tangentialvektorfeld zu den Trajektorien 126, die orthogonal auf den Gitterlinien 122a stehen, definiert ist.

Zusätzlich muss im allgemeinen Fall einer gekrümmten Grundfläche 120, wie in **Fig. 17** gezeigt, berücksichtigt werden, dass das Gitter 122 zwar einerseits in globalen Koordinaten $\overline{x}^0$, $\overline{y}^0$ spezifiziert ist, andererseits jedoch für die Auswirkung auf den Strahldurchgang lokale Eigenschaften relevant sind, wie z.B. der lokale Gitterabstand, den das Gitter 122 entlang der verkippten Achsen eines lokalen Koordinatensystems $\overline{x},\overline{y}$ aufweist.

Anstelle von $\mathbf{d}(\overline{x}^0,\overline{y}^0)$ lässt sich die Auswirkung des Gitters 122 auch in diesem allgemeinen Fall durch die Phasenfunktion $\psi^0(\overline{x}^0,\overline{y}^0)$ beschreiben.

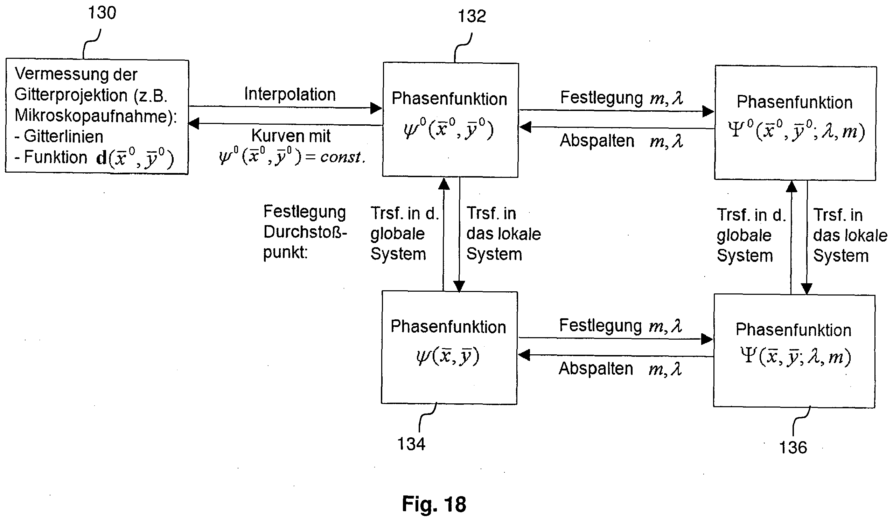

Die Phasenfunktion eines diffraktiven Gitters $\psi^0(\overline{x}^0,y^0)$ ist zur Wellenfrontdurchrechnung geeigneter als das Vektorfeld $\mathbf{d}(\overline{x}^0,\overline{y}^0)$, jedoch ist sie nicht unmittelbar messbar. Um eine auf der Phasenfunktion $\psi^0(\overline{x}^0,\overline{y}^0)$ basierende Wellenfrontrechnung durchzuführen, wird daher ein Verfahren zum Bestimmen des Übergangs zwischen den Funktionen $\mathbf{d}(\overline{x}^0,\overline{y}^0)$ und $\psi^0(\overline{x}^0,\overline{y}^0)$ in beiden Richtungen (d.h. $\mathbf{d}(\overline{x}^0,\overline{y}^0) \leftrightarrow \psi^0(\overline{x}^0,\overline{y}^0)$ vorgeschlagen. Das in **Fig. 18** gezeigte Ablaufschema illustriert den Übergang zwischen dem Vektorfeld $\mathbf{d}(\overline{x}^0,\overline{y}^0)$ und der Phasenfunktion $\psi^0(\overline{x}^0,\overline{y}^0)$

Insbesondere kann bei vorgegebenem Gitter, welches z.B. durch eine Vermessung (siehe Block 130 in Fig. 18) der Mikroskopaufnahme einer Gitterprojektion oder durch eine Projektion einer anderen messbaren Eigenschaft des Gitters (z.B. einer Transmissionseigenschaft) bekannt sein kann, die Phasenfunktion $\psi^0(\overline{x}^0,\overline{y}^0)$ im globalen Koordinatensystem dadurch erhalten werden (siehe Block 132 in Fig. 18), dass die Gitterlinien durchgezählt und als Kurven $\psi^0(\overline{x}^0,\overline{y}^0)$ = *const.* aufgefasst werden. Für die Kurven werden nacheinander die Werte $\psi^0(\overline{x}^0,\overline{y}^0)$ = 0, $\psi^0(\overline{x}^0,\overline{y}^0)$=1, $\psi^0(\overline{x}^0,\overline{y}^0)$=2, etc., angenommen (siehe **Fig. 18**). Für alle Punkte $(\overline{x}^0,\overline{y}^0)$, welche nicht auf sondern zwischen den Gitterlinien liegen, können die Werte der Phasenfunktion durch geeignete Interpolation ermittelt werden. Ist umgekehrt die Phasenfunktion $\psi^0(\overline{x}^0,\overline{y}^0)$ bekannt, so können die Gitterlinien durch Berechnung der Kurven $\psi^0(\overline{x}^0,\overline{y}^0)$ = *const.* mit $\psi^0(\overline{x}^0,\overline{y}^0)$ = 0, $\psi^0(\overline{x}^0,\overline{y}^0)$ = 1, $\psi^0(\overline{x}^0,\overline{y}^0)$ = 2, etc. ermittelt werden.

Diejenige Phasenfunktion, die für die lokale Strahldurchrechnung relevant ist, ist nach Festlegung eines lokalen Koordinatensystems $(\overline{x}, \overline{y}, \overline{z})$ die Funktion

$$\psi(\overline{x},\overline{y}) = \psi^0\left(\overline{x}^0(\overline{x},\overline{y}), \overline{y}^0(\overline{x},\overline{y})\right), \qquad (115)$$

(siehe Block 134 in Fig. 18), wobei sich die Zusammenhänge $\overline{x}^0(\overline{x}^0,\overline{y}^0)$, $\overline{y}^0(\overline{x}^0,\overline{y}^0)$ aus der Transformation vom globalen Koordinatensystem in das lokale Koordinatensystem (für dem jeweiligen Durchstoßpunkt) ergeben. Durch die Festlegung (siehe Block 136 in Fig. 18)

$$\Psi(\overline{x}, \overline{y}; \lambda, m) = m\lambda \cdot \psi(\overline{x}, \overline{y}) \tag{116}$$

analog zu der Gleichung (114) kann schließlich die lokale Phasenfunktion unter Einbeziehung der Beugungsordnung und der Wellenlänge erhalten werden.

**Wellenfrontdurchrechnung im Fall eines optischen Elements/Systems umfassend zumindest ein diffraktives Gitter**

Eigenschaften erster Ordnung (Strahlablenkung)

Eine Wellenfrontdurchrechnung ergibt für die Durchrechnung von Strahlen, die im lokalen System durch die Vektoren N,N' (vgl. Gleichungen (112a) und (112b)) beschrieben werden, die Gesetze für die Strahlablenkung

$$n'\sin\varphi'_x - n\sin\varphi_x = \frac{\partial}{\partial\overline{x}}\Psi(\overline{x}, \overline{y}; \lambda, m)$$

$$n'\sin\varphi'_y - n\sin\varphi_y = \frac{\partial}{\partial\overline{y}}\Psi(\overline{x}, \overline{y}; \lambda, m). \tag{117}$$

Beispiel 1:

Im einfachsten Fall eines konstanten äquidistanten Gitters auf einer ebenen Fläche, das z.B. Fig. 15 entspricht, ist im globalen System die Phasenfunktion durch

$$\psi^0(\overline{x}^0, \overline{y}^0) = \frac{\overline{x}^0}{\delta_x} + \frac{\overline{y}^0}{\delta_y} + \psi_0 \tag{118}$$

gegeben, wobei $\psi_0$ eine Konstante ist. Da die Grundfläche eben ist, kann das lokale System identisch mit dem globalen System gewählt werden, so dass $\psi(\overline{x},\overline{y}) = \psi(\overline{x},\overline{y})$ ist. Da in diesem Fall

$$\frac{\partial}{\partial\overline{x}}\Psi(\overline{x}, \overline{y}; \lambda, m) = \frac{m\lambda}{\delta_x}$$

$$\frac{\partial}{\partial\overline{y}}\Psi(\overline{x}, \overline{y}; \lambda, m) = \frac{m\lambda}{\delta_y} \tag{119}$$

gilt, führt Gleichung (117) genau zu dem Spezialfall der Gleichung (113).

Beispiel 2:

Ist bei einem beliebigen Gitter das lokale System $\overline{x},\overline{y},\overline{z}$ am Durchstoßpunkt so gewählt, dass der einfallende Strahl in der $\overline{y}$-$\overline{z}$-Ebene liegt, dann ist $\varphi_x = 0$. Wenn die Phasenfunktion in diesem lokalen System durch $\Psi(\overline{x},\overline{y};\lambda,m)$ gegeben ist, dann lauten die Gesetze für die Strahlablenkung nach Gleichung (117)

$$n'\sin \varphi'_x = \frac{\partial}{\partial \bar{x}} \Psi(\bar{x}, \bar{y}; \lambda, m)$$

$$n'\sin \varphi'_y - n\sin \varphi_y = \frac{\partial}{\partial \bar{y}} \Psi(\bar{x}, \bar{y}; \lambda, m). \tag{120}$$

Wenn $\partial\Psi(\bar{x},\bar{y};\lambda,m)/\partial\bar{x}\neq0$, ist auch $\varphi'_x\neq0$. Dies bedeutet, dass - falls die Gitterlinien nicht senkrecht auf der Einfallsebene stehen - eine seitliche Strahlablenkung stattfindet und dass die Ausfallsebene nicht mit der Einfallsebene zusammenfällt (anders als im Fall reiner Brechung). Ist umgekehrt $\partial\Psi(\bar{x},\bar{y};\lambda,m)/\partial\bar{x}=0$, dann ist $\varphi'_x = 0$ und die Strahlablenkung findet ausschließlich in der $\bar{y}$-$\bar{z}$-Ebene statt.

Eigenschaften zweiter Ordnung (Krümmungseigenschaften der Wellenfront)

Um Wellenfronteigenschaften zu beschreiben, wird vorgeschlagen, zuerst die Strahldurchrechnung ("ray tracing") eines Hauptstrahls, welcher durch eine Bewertungsstelle des optischen Element verläuft, durchzuführen. Der Hauptstrahl unterscheidet sich somit von etwaigen Nachbarstrahlen, welche abseits der Bewertungsstelle verlaufen. Ein Hauptstrahl ist im beispielhaften Fall eines Brillenglases insbesondere ein Lichtstahl, welcher ausgehend vom Objektpunkt durch die Mitte der Eintrittspupille verläuft. Die Eintrittspupille fällt bei Blickbewegungen mit dem Augendrehpunkt und nicht notwendigerweise mit der physikalischen Pupille des Auges zusammen. Die Winkel $\varphi_x$, $\varphi_y$, $\varphi'_x$, $\varphi'_y$ und damit die Vektoren **N, N'** in Gleichungen (112a) und (112b) sind nach diesem Schritt bekannt.

Zusätzlich wird vorgeschlagen, außer einem lokalen Koordinatensystem, das zur Beschreibung der Grundfläche dient und in dem auch der einfallende und der ausfallende Strahl beschrieben werden, noch weitere Koordinatensysteme einzuführen.

Das Koordinatensystem $(x,y,z)$ dient dazu, die einfallende Wellenfront zu beschreiben und ist so gerichtet, dass die $z$-Achse in Lichtrichtung entlang der einfallenden Strahlrichtung **N** gerichtet ist und der Ursprung $(x,y,z) = (0,0,0)$ mit dem Punkt $(\bar{x},\bar{y},\bar{z}) = (0,0,0)$ zusammenfällt.

Das Koordinatensystem $(x',y',z')$ dient dazu, die ausfallende Wellenfront zu beschreiben und ist so gerichtet, dass die $z'$-Achse in Lichtrichtung entlang der ausfallenden Strahlrichtung **N'** gerichtet ist und der Ursprung $(x',y',z') = (0,0,0)$ ebenfalls mit dem Punkt $(\bar{x}, \bar{y}, \bar{z}) = (0,0,0)$ zusammenfällt.

Die Koordinaten eines räumlichen Vektors können entweder durch die Größe $\mathbf{v} = (v_x,v_y,v_z)$ im Koordinatensystem $(x,y,z)$, durch die Größe $\mathbf{v'} = (v'_x,v'_y,v'_z)$ im Koordinatensystem $(x',y',z')$ oder durch die Größe $\bar{\mathbf{v}} = (\bar{v}_x,\bar{v}_y,\bar{v}_z)$ im Koordinatensystem $(\bar{x},\bar{y},\bar{z})$ beschrieben werden. Die gegenseitige Lage der Koordinatensysteme ist abhängig von den Strahlen und ist nur bis auf die Freiheitsgrade festgelegt, die einer Rotation des Systems $(x,y,z)$ um den einfallenden Strahl und einer zweiten unabhängigen Rotation des Systems $(x',y',z')$ um den ausfallenden Strahl entspricht.

Vorzugsweise wird die gegenseitige Lage der Koordinatensysteme durch

$$\mathbf{v} = \mathbf{R} \cdot \bar{\mathbf{v}} \qquad\qquad \mathbf{v'} = \mathbf{R'} \cdot \bar{\mathbf{v}}$$

$$\mathbf{R} = \mathbf{R}_z(\chi)\mathbf{R}_x(\varphi)\mathbf{R}_z(-\chi) \qquad \mathbf{R'} = \mathbf{R}_z(\chi')\mathbf{R}_x(\varphi')\mathbf{R}_z(-\chi') \tag{121}$$

festgelegt, wobei

$$\mathbf{R}_x(\varepsilon) = \begin{pmatrix} 1 & 0 & 0 \\ 0 & \cos\varepsilon & -\sin\varepsilon \\ 0 & \sin\varepsilon & \cos\varepsilon \end{pmatrix},$$

$$\mathbf{R}_y(\varepsilon) = \begin{pmatrix} \cos\varepsilon & 0 & \sin\varepsilon \\ 0 & 1 & 0 \\ -\sin\varepsilon & 0 & \cos\varepsilon \end{pmatrix}, \qquad (122)$$

$$\mathbf{R}_z(\varepsilon) = \begin{pmatrix} \cos\varepsilon & -\sin\varepsilon & 0 \\ \sin\varepsilon & \cos\varepsilon & 0 \\ 0 & 0 & 1 \end{pmatrix}.$$

Die Hilfswinkel $\varphi$, $\varphi'$, $\chi$, $\chi'$ in Gleichung (121) müssen durch die vor der Wellenfrontdurchrechnung bekannten Größen $\varphi_x$, $\varphi_y$, $\varphi'_x$, $\varphi'_y$ ausgedrückt werden. Die Matrizen $\mathbf{R}$, $\mathbf{R'}$ sind so konstruiert, dass $\varphi$, $\varphi'$ die Ein- und Ausfallswinkel gegen die Flächennormale sind und es gilt

$$\begin{aligned}\cos\varphi &= \sqrt{1-\sin^2\varphi_x - \sin^2\varphi_y} \\ \sin\varphi &= \sqrt{\sin^2\varphi_x + \sin^2\varphi_y}\end{aligned} \quad , \qquad \begin{aligned}\cos\varphi' &= \sqrt{1-\sin^2\varphi'_x - \sin^2\varphi'_y} \\ \sin\varphi' &= \sqrt{\sin^2\varphi'_x + \sin^2\varphi'_y}\end{aligned} \quad , \quad (123)$$

sowie

$$\begin{aligned}\sin\chi &= \frac{-\sin\varphi_x}{\sqrt{\sin^2\varphi_x + \sin^2\varphi_y}} \\ \cos\chi &= \frac{\sin\varphi_y}{\sqrt{\sin^2\varphi_x + \sin^2\varphi_y}}\end{aligned} \quad , \qquad \begin{aligned}\sin\chi' &= \frac{-\sin\varphi'_x}{\sqrt{\sin^2\varphi'_x + \sin^2\varphi'_y}} \\ \cos\chi' &= \frac{\sin\varphi'_y}{\sqrt{\sin^2\varphi'_x + \sin^2\varphi'_y}}\end{aligned} \quad . \quad (124)$$

Aus den obigen Gleichungen (123) und (124) folgt, dass

$$\tan\chi = -\frac{\sin\varphi_x}{\sin\varphi_y}, \qquad \tan\chi' = -\frac{\sin\varphi'_x}{\sin\varphi'_y}. \qquad (126)$$

Ist die einfallende Wellenfront im lokalen Koordinatensystem (x,y,z) durch $W_{In}(x, y)$, die brechende Grundfläche im System $(\bar{x}, \bar{y}, \bar{z})$ durch $\bar{S}(\bar{x},\bar{y})$ sowie die gesuchte ausfallende Wellenfront im System $(x',y',z')$ durch $W'_{out}(x',y')$ gegeben, dann beschreiben die nachfolgenden Formeln (127) und (128) die Abhängigkeit der zweiten lokalen Ableitungen der Wellenfronten (d.h. der einfallenden und der ausfallenden Wellenfront), der Grundfläche sowie der Phase $\Psi(\bar{x},\bar{y};\lambda,m)$.

$$n'\mathbf{R}_2(\chi')\mathbf{C'}_2\,\mathbf{R}_2(-\chi')\begin{pmatrix} W'^{(2,0)}_{\text{Out}}(0,0) \\ W'^{(1,1)}_{\text{Out}}(0,0) \\ W'^{(0,2)}_{\text{Out}}(0,0) \end{pmatrix} - n\mathbf{R}_2(\chi)\mathbf{C}_2\mathbf{R}_2(-\chi)\begin{pmatrix} W^{(2,0)}_{\text{In}}(0,0) \\ W^{(1,1)}_{\text{In}}(0,0) \\ W^{(0,2)}_{\text{In}}(0,0) \end{pmatrix} =$$

$$= v\begin{pmatrix} \overline{S}^{(2,0)}(0,0) \\ \overline{S}^{(1,1)}(0,0) \\ \overline{S}^{(0,2)}(0,0) \end{pmatrix} - \begin{pmatrix} \Psi^{(2,0)}(0,0) \\ \Psi^{(1,1)}(0,0) \\ \Psi^{(0,2)}(0,0) \end{pmatrix},$$

$$(127)$$

wobei

$$v = n'\cos\varphi' - n\cos\varphi$$

$$= n'\sqrt{1-\sin^2\varphi'_x - \sin^2\varphi'_y} - n\sqrt{1-\sin^2\varphi_x - \sin^2\varphi_y}$$

$$(128)$$

erfüllt ist. Die Phase $\Psi(\overline{x},\overline{y};\lambda,m)$ ist dabei die in der Gleichung (116) definierte Phase.

Die einzelnen Termen der Gleichung (127) entsprechend dabei den Termen der BAD Gleichung **B - A = D + PK$^{(2)}$**.

In Gleichung (127) stehen die hochgestellten Symbole für Ableitungen. Für eine beliebige Funktion $h(x, y)$ gilt:

$$h^{(k-m,m)}(0,0) := \partial^k / \partial x^{k-m} \partial y^m\, h(x,y)\big|_{x=0,\,y=0}.$$

$$(129)$$

Die Funktion $h(x,y)$ in der Formel (129) spielt dabei wahlweise die Rolle der Funktionen $W_{\text{In}}(x,y)$, $W_{\text{Out}}(x',y')$, $\overline{S}(\overline{x},\overline{y})$ und $\Psi(\overline{x},\overline{y};\lambda,m)$, wobei im Fall von $\Psi(\overline{x},\overline{y};\lambda,m)$ die Ableitungen auf $\overline{x},\overline{y}$ bezogen sind. Die Matrizen $\mathbf{C}_2$ und $\mathbf{C'}_2$ sind wie im rein refraktiven Fall definiert (siehe z.B. G. Esser, W. Becken, W. Müller, P. Baumbach, J. Arasa und D. Uttenweiler, "Derivation of the refraction equations for higher-order aberrations of local wavefronts at oblique incidence", J. Opt. Soc. Am. A/Vol. 27, No. 2/February 2010):

$$\mathbf{C}_2 = \begin{pmatrix} 1 & 0 & 0 \\ 0 & \cos\varphi & 0 \\ 0 & 0 & \cos^2\varphi \end{pmatrix}, \qquad \mathbf{C'}_2 = \begin{pmatrix} 1 & 0 & 0 \\ 0 & \cos\varphi' & 0 \\ 0 & 0 & \cos^2\varphi' \end{pmatrix}. \qquad (130)$$

Zusätzlich geht in die Gleichung (127) die Matrix $\mathbf{R}_2(\chi)$ ein, welche die Drehung der Wellenfront beschreibt. Ist allgemein eine Wellenfront durch die Funktion $w(x,y)$ gegeben, dann wird diese in gedrehten Koordinaten

$$\begin{pmatrix} \tilde{x} \\ \tilde{y} \end{pmatrix} = \mathbf{Rot}(\alpha)\begin{pmatrix} x \\ y \end{pmatrix} \qquad \text{mit} \qquad \mathbf{Rot}(\alpha) = \begin{pmatrix} \cos\alpha & -\sin\alpha \\ \sin\alpha & \cos\alpha \end{pmatrix} \qquad (132)$$

durch die transformierte Funktion

$$\tilde{w}(\tilde{x}, \tilde{y}) = w(x(\tilde{x}, \tilde{y}), y(\tilde{x}, \tilde{y})) \qquad (133)$$

beschrieben.

Die Ableitung k-ter Ordnung $\dfrac{\partial^k}{\partial \widetilde{x}^m \partial \widetilde{y}^{k-m}} \widetilde{w}(\widetilde{x}, \widetilde{y})$ bzgl. der gedrehten Koordinaten kann als Linearkombination der Ableitungen $\dfrac{\partial^k}{\partial x^l \partial y^{k-l}} w(x, y)$ nach den ursprünglichen Koordinaten ausgedrückt werden. Die

$(k+1) \times (k+1)$-Matrix $\mathbf{R}_k(\chi)$ beschreibt den Übergang zwischen der Ableitung der k-ten Ordnung in dem Koordinatensystem $(x,y)$ und der Ableitung der k-ten Ordnung in dem Koordinatensystem $(\widetilde{x}, \widetilde{y})$.

$$\frac{\partial^k}{\partial \widetilde{x}^m \partial \widetilde{y}^{k-m}} \widetilde{w}(\widetilde{x}, \widetilde{y}) = \sum_{l=0}^{k} \left( \mathbf{R}_k(\chi) \right)_{(m+1),(l+1)} \frac{\partial^k}{\partial x^l \partial y^{k-l}} w(x, y), \quad m = 0,...,k, \quad l = 0,...,k$$

$$(134)$$

Explizit gilt für die ersten drei Ordnungen

$$\mathbf{R}_1(\alpha) = \begin{pmatrix} \cos\alpha & -\sin\alpha \\ \sin\alpha & \cos\alpha \end{pmatrix} = \mathbf{Rot}(\alpha)$$

$$\mathbf{R}_2(\alpha) = \begin{pmatrix} \cos^2\alpha & -2\cos\alpha\sin\alpha & \sin^2\alpha \\ \cos\alpha\sin\alpha & \cos^2\alpha - \sin^2\alpha & -\cos\alpha\sin\alpha \\ \sin^2\alpha & 2\cos\alpha\sin\alpha & \cos^2\alpha \end{pmatrix}$$

$$\mathbf{R}_3(\alpha) = \begin{pmatrix} \cos^3\alpha & -3\cos^2\alpha\sin\alpha & 3\cos\alpha\sin^2\alpha & -\sin^3\alpha \\ \cos^2\alpha\sin\alpha & \cos^3\alpha - 2\cos\alpha\sin^2\alpha & \sin^3\alpha - 2\cos^2\alpha\sin\alpha & \cos\alpha\sin^2\alpha \\ \cos\alpha\sin^2\alpha & -(\sin^3\alpha - 2\cos^2\alpha\sin\alpha) & \cos^3\alpha - 2\cos\alpha\sin^2\alpha & -\cos^2\alpha\sin\alpha \\ \sin^3\alpha & 3\cos\alpha\sin^2\alpha & 3\cos^2\alpha\sin\alpha & \cos^3\alpha \end{pmatrix}$$

$$\mathbf{R}_4(\alpha) = ...$$

$$(135)$$

Nachfolgend werden einige spezielle Fälle von optischen Systemen, insbesondere von Brillengläsern mit POE, betrachtet. So gilt bei einem senkrechten Lichteinfall:

$$v = n'-n;$$

$$\mathbf{R}_2 = 1;$$

$$\mathbf{C}_2 = 1;$$

$$\mathbf{C}'_2 = 1.$$

Für die Gleichung (127) ergibt sich:

$$n'\begin{pmatrix} W'^{(2,0)}_{\text{Out}}(0,0) \\ W'^{(1,1)}_{\text{Out}}(0,0) \\ W'^{(0,2)}_{\text{Out}}(0,0) \end{pmatrix} - n\begin{pmatrix} W^{(2,0)}_{\text{In}}(0,0) \\ W^{(1,1)}_{\text{In}}(0,0) \\ W^{(0,2)}_{\text{In}}(0,0) \end{pmatrix} = (n'-n)\begin{pmatrix} \overline{S}^{(2,0)}(0,0) \\ \overline{S}^{(1,1)}(0,0) \\ \overline{S}^{(0,2)}(0,0) \end{pmatrix} - \begin{pmatrix} \Psi^{(2,0)}(0,0) \\ \Psi^{(1,1)}(0,0) \\ \Psi^{(0,2)}(0,0) \end{pmatrix}$$

$$(127a)$$

Bei einem eindimensionalen Problem (Meridionalebene) treten statt gemischter Ableitungen nach $\overline{x}$, $\overline{y}$ nur Ableitungen nach einer Koordinate auf (z.B. nach $\overline{y}$). Ferner gilt

$$\mathbf{R}_2 = R_2 = 1;$$

$$\mathbf{C}_2 = C_2 = \cos^2 \varphi;$$

$$\mathbf{C'}_2 = C'_2 = \cos^2 \varphi'.$$

Folglich kann Gleichung (127) als

$$n'\cos^2 \varphi' W'^{(2)}_{\text{Out}}(0) - n\cos^2 \varphi W^{(2)}_{\text{In}}(0) = v\overline{S}^{(2)}(0) - \Psi^{(2)}(0) \qquad (127b)$$

geschrieben werden.

Bei einem senkrechten Lichteinfall und einem eindimensionalen Problem treten statt gemischter Ableitungen nach $\overline{x},\overline{y}$ nur Ableitungen nach einer Koordinate auf (z.B. nach $\overline{y}$). Ferner gilt

$$v = n'-n$$

$$\mathbf{R}_2 = R_2 = 1$$

$$\mathbf{C}_2 = C_2 = 1$$

$$\mathbf{C'}_2 = C'_2 = 1$$

Folglich kann Gleichung (127) als

$$n'W'^{(2)}_{\text{Out}}(0) - n W^{(2)}_{\text{In}}(0) = (n'-n)\overline{S}^{(2)}(0) - \Psi^{(2)}(0) \qquad (127c)$$

geschrieben werden.

Eigenschaften höherer Ordnung der Wellenfront (Eigenschaften 3.,4.,... Ordnung)

Analog zu Gleichung (127) gilt für Ableitungen 3. Ordnung

$$n'\mathbf{R}_3(\chi')\mathbf{C'}_3\,\mathbf{R}_3(-\chi')\begin{pmatrix} W'^{(3,0)}_{\text{Out}}(0,0) \\ W'^{(2,1)}_{\text{Out}}(0,0) \\ W'^{(1,2)}_{\text{Out}}(0,0) \\ W'^{(0,3)}_{\text{Out}}(0,0) \end{pmatrix} - n\mathbf{R}_3(\chi)\mathbf{C}_3\mathbf{R}_3(-\chi)\begin{pmatrix} W^{(3,0)}_{\text{In}}(0,0) \\ W^{(2,1)}_{\text{In}}(0,0) \\ W^{(1,2)}_{\text{In}}(0,0) \\ W^{(0,3)}_{\text{In}}(0,0) \end{pmatrix} =$$

$$= v\begin{pmatrix} \overline{S}^{(3,0)}(0,0) \\ \overline{S}^{(2,1)}(0,0) \\ \overline{S}^{(1,2)}(0,0) \\ \overline{S}^{(0,3)}(0,0) \end{pmatrix} - \begin{pmatrix} \Psi^{(3,0)}(0,0) \\ \Psi^{(2,1)}(0,0) \\ \Psi^{(1,2)}(0,0) \\ \Psi^{(0,3)}(0,0) \end{pmatrix} + \mathbf{Q}_3(\mathbf{S}^{(2)},\mathbf{F}^{(2)}) \qquad (136)$$

wobei analog zu Gleichung (130) gilt:

$$\mathbf{C}_3 = \begin{pmatrix} 1 & 0 & 0 & 0 \\ 0 & \cos\varphi & 0 & 0 \\ 0 & 0 & \cos^2\varphi & 0 \\ 0 & 0 & 0 & \cos^3\varphi \end{pmatrix},\ \mathbf{C'}_3 = \begin{pmatrix} 1 & 0 & 0 & 0 \\ 0 & \cos\varphi' & 0 & 0 \\ 0 & 0 & \cos^2\varphi' & 0 \\ 0 & 0 & 0 & \cos^3\varphi' \end{pmatrix}. \qquad (137)$$

Gleichungen für die noch höheren Ordnungen k = 4,5,... können analog gebildet werden.

Mit der oben beschriebenen Vorgehensweise ist es möglich, ein optisches System (z.B. ein Brillenglas) mit zumindest einem diffraktiven Gitter exakt zu beschreiben. Insbesondere ist es möglich, die Eigenschaften zweiter oder höherer Ordnung der aus dem optischen System austretenden Wellenfront exakt zu bestimmen. Anhand der Eigenschaften der Wellenfront zweiter Ordnung oder höherer Ordnung können die Abbildungsfehler des optischen Elements (z.B. des Brillenglases) in an sich bekannter Weise ermittelt werden. Diesbezüglich wird insbesondere auf die Druckschrift WO 2008/089999 A1, auf den Artikel von W. Becken et al. "Brillengläser im Sport: Optimierung der Abbildungseigenschaften unter physiologischen Aspekten", Z. Med. Phys., 17 (2007), Seiten 56 - 66 oder auf den Artikel von G. Esser "Derivation of the refraction equations for higher-order aberrations of local wavefronts at oblique incidence", JOSA A, Vol. 27, Nr. 2, Februar 2010, Seiten 218-237 verwiesen. Auf diese Druckschriften wird hinsichtlich der verwendeten Fachterminologie und insbesondere der in Gleichungen (121) bis (137) verwendeten Symbole sowie bezüglich des Zusammenhangs der Sphäre, Zylinder, Achse (SZA-Werte) mit Wellenfronteigenschaften ausdrücklich Bezug genommen. Die entsprechenden Ausführungen stellen insoweit einen integralen Offenbarungsbestandteil der vorlegenden Anmeldung dar.

Das Basisgitter eines jeden Basisglases kann unter Berücksichtigung der Abbildungseigenschaften zweiter und/oder gegebenenfalls höherer Ordnung, berechnet bzw. optimiert werden. Wie oben beschrieben, können die Abbildungseigenschaften zweiter und/oder gegebenenfalls höherer Ordnung mittels der oben beschriebenen Wellenfrontdurchrechnung exakt berechnet werden. Alternativ kann statt einer Optimierung des Basisgitters und zumindest einer refraktiven Fläche das Gitter lediglich pauschal in Abhängigkeit von der Rezeptwirkung des Brillenglases oder einer in Abhängigkeit von der Rezeptwirkung ermittelten Sollwirkung berechnet werden. Wie oben dargelegt wurde, ist auch ein so berechnetes Basisgitter geeignet, den Farbsaum für einen Bereich von Wirkungen auch bei nicht rotationssymmetrischen Brillengläsern zumindest teilweise zu korrigieren.

**Bezugszeichenliste**

10      einfallende Wellenfront 10
12      Grenzfläche
14      periodische Struktur (diffraktives Gitter)

| | |
|---|---|
| 16 | ausfallende Wellenfront |
| 20 | Prisma |
| 30 | Korrekturbereiche |
| 32 | Trennungslinie der Korrekturbereiche |
| 100 | optisches Element/System (z.B. Brillenglas) |
| 102 | einfallender Strahl; |
| 104,106 | refraktive Grenzflächen |
| 108 | ausfallender Strahl |
| 108-m | ausfallender Strahl der m-ten Beugungsordnung |
| 110 | einfallende Wellenfront |
| 112 | ausfallende Wellenfront |
| 122 | diffraktives Gitter |
| 114 | optisches Material |
| 116 | Durchgang durch das optische Material |
| 122a | Gitterlinien |
| 112b | projezierte Gitterlinien |
| 124 | Einfallsebene |
| 126 | orthogonale Trajektorien |
| 130-134 | Schritte des Übergangs zwischen einer Periodenfunktion und einer Phasenfunktion |

**Patentansprüche**

1. Verfahren zum Herstellen einer Serie von Basisgläsern, welche einen vorgegebenen Wirkungsbereich abdecken, wobei

alle Basisgläser der Serie halbfertige Brillengläser sind;

jedes Basisglas der Serie für eine Basiswirkung ausgelegt ist, welche von den Basiswirkungen der anderen Basisgläser der Serie unterschiedlich ist; und

jedes Basisglas der Serie zumindest ein diffraktives Basisgitter (14) aufweist,

wobei das Verfahren die Schritte umfasst:

Zuordnen von jeweils einem Korrekturbereich (30) zu jedem der Basisgläser der Serie,

Festlegen der Basiswirkungen eines jeden Basisglases der Serie, wobei die Basiswirkungen derart festgelegt werden, dass die Korrekturbereiche (30) der einzelnen Basisgläser den vorgegebenen Wirkungsbereich abdecken;

Berechnen des Basisgitters (14) eines jeden Basisglases der Serie derart, dass der Farbsaum eines aus dem jeweiligen Basisglas hergestellten fertigen Brillenglases mit der festgelegten Basiswirkung in einem vorgegebenen Bereich des Brillenglases minimiert wird, wobei der Farbsaum durch die wellenlängenabhängige prismatische Wirkung der refraktiven Grenzflächen des Brillenglases verursacht wird,

wobei das Basisgitter (14) des Basisglases in dem jeweiligen Korrekturbereich (30) den Farbsaum eines Brillenglases mit einer Wirkung innerhalb dieses Korrekturbereichs derart korrigiert, dass der Farbsaum des Brillenglases innerhalb eines vorgegebenen Bereichs des Brillenglases kleiner oder gleich einem vorgegebenen Schwellwert ist;

wobei der vorgegebene Bereich des Brillenglases, innerhalb dessen der maximale Farbsaum kleiner oder gleich dem vorgegeben Schwellwert ist, einen Durchmesser von zumindest 40 mm aufweist; und wobei der vorgegebene Schwellwert 0,5 cm/m, vorzugsweise 0,4 cm/m, und besonders bevorzugt 0,12 cm/m beträgt;

wobei das Festlegen der Basiswirkungen derart erfolgt, dass für den maximalen Abstand $|\Delta M_{0G}|$ der sphärischen Äquivalente der Basisgläser der Serie die Bedingung $\left|\Delta M_{0G}\right| \leq 2v_d \dfrac{FS_T}{r_T} - Zyl_{\max}$ gilt, und wobei

$v_d$ die Abbezahl der Basisgläser;

$FS_T$ einen vorgegebenen Schwellwert;

$2 \cdot r_T$ den Durchmesser eines vorgegebenen Bereichs des jeweiligen Basisglases, in welchem der maximal zulässige Farbsaum kleiner oder gleich dem Schwellwert $FS_T$ ist; und

$Zyl_{\max}$ den maximal vorkommenden Astigmatismus in dem abzudeckenden Wirkungsbereich bezeichnen.

2. Verfahren nach Anspruch 1, wobei die Basisgläser sphärozylindrische oder sphärische Einstärkengläser sind.

3. Verfahren nach Anspruch 1 oder 2, wobei das Berechnen des Basisgitters eine simultane Optimierung zumindest einer der refraktiven Flächen des Basisglases und des Basisgitters (14) umfasst.

4. Verfahren nach einem der vorangegangenen Ansprüche, wobei die Gitterlinien des jeweiligen Basisgitters (14) elliptisch oder rotationssymmetrisch sind.

5. Verfahren nach Anspruch 4, wobei die Gitterlinien des jeweiligen Basisgitters (14) rotationssymmetrisch sind und wobei der Abstand der Gitterlinien jedes der Basisgitter (14) als Funktion des radialen Abstands $d(r)$ von der optischen oder geometrischen Mitte nach der Formel $$d(r) = \frac{m(\lambda_F - \lambda_C)v_d}{S_{\text{ref},0}(\lambda_d)} \cdot \frac{1}{r}$$ berechnet wird, wobei

$S_{\text{ref},0}(\lambda_d)$ den refraktiven Anteil der dioptrischen Wirkung des Basisglases bei einer Wellenlänge $\lambda_d$ ;
$v_d$ die Abbezahl der Basisgläser;
$\lambda_F$ die F-Fraunhofer Linie, welche in die Definition der Abbezahl eingeht;
$\lambda_C$ die C-Fraunhofer Linie, welche in die Definition der Abbezahl eingeht; und
$m$ eine vorgegebene Beugungsordnung

bezeichnen.

6. Verfahren nach einem der vorangegangenen Ansprüche, wobei der abzudeckende Wirkungsbereich sphärische Wirkungen von -12 dpt bis +12 dpt und zylindrische Wirkungen bis 4 dpt, vorzugsweise bis 6 dpt umfasst.

7. Vorrichtung zum Herstellen einer Serie von Basisgläsern, welche einen vorgegebenen Wirkungsbereich abdecken, wobei
alle Basisgläser der Serie halbfertige Brillengläser sind;
jedes Basisglas der Serie für eine Basiswirkung ausgelegt ist, welche von den Basiswirkungen der anderen Basisgläser der Serie unterschiedlich ist; und
jedes Basisglas zumindest ein diffraktives Basisgitter (14) aufweist, umfassend
Basisgitter-Berechnungsmittel, welche ausgelegt sind, ein Verfahren zum Berechnen des Basisgitters (14) jedes der Brillengläser der Serie durchzuführen, wobei das Verfahren umfasst:

Zuordnen von jeweils einem Korrekturbereich (30) zu jedem der Basisgläser der Serie;
Festlegen der Basiswirkungen eines jeden Basisglases der Serie, wobei die Basiswirkungen derart festgelegt werden, dass die Korrekturbereiche (30) der einzelnen Basisgläser den vorgegebenen Wirkungsbereich abdecken;
Berechnen des Basisgitters jedes der Basisgläser der Serie derart, , dass der Farbsaum eines aus dem jeweiligen Basisglas hergestellten fertigen Brillenglases mit der festgelegten Basiswirkung in einem vorgegebenen Bereich des Brillenglases zu minimieren, wobei der Farbsaum durch die wellenlängenabhängige prismatische Wirkung der refraktiven Grenzflächen des Brillenglases verursacht wird,
wobei das Basisgitter (14) des Basisglases in dem jeweiligen Korrekturbereich (30) den Farbsaum eines Brillenglases mit einer Wirkung innerhalb dieses Korrekturbereichs derart korrigiert, dass der Farbsaum des Brillenglases innerhalb eines vorgegebenen Bereichs des Brillenglases kleiner oder gleich einem vorgegebenen Schwellwert ist; und wobei
der vorgegebene Bereich des Brillenglases, innerhalb dessen der maximale Farbsaum kleiner oder gleich dem vorgegeben Schwellwert ist, einen Durchmesser von zumindest 40 mm aufweist; und wobei der vorgegebene Schwellwert 0,5 cm/m, vorzugsweise 0,4 cm/m, und besonders bevorzugt 0,12 cm/m beträgt,
wobei das Festlegen der Basiswirkungen derart erfolgt, dass für den maximalen Abstand $|\Delta M_{0G}|$ der sphärischen Äquivalente der Basisgläser der Serie die Bedingung $$\left|\Delta M_{0G}\right| \leq 2v_d \frac{FS_T}{r_T} - Zyl_{\max}$$ gilt, und wobei

$v_d$ die Abbezahl der Basisgläser;
$FS_T$ einen vorgegebenen Schwellwert;
$2 \cdot r_T$ den Durchmesser eines vorgegebenen Bereichs des jeweiligen Basisglases, in welchem der maximal zulässige Farbsaum kleiner oder gleich dem Schwellwert $FS_T$ ist; und
$Zyl_{\max}$ den maximal vorkommenden Astigmatismus in dem abzudeckenden Wirkungsbereich bezeichnen.

**8.** Serie von Basisgläsern umfassend zumindest zwei Basisgläser, wobei
alle Basisgläser der Serie halbfertige Brillengläser sind;
jedes Basisglas der Serie für eine Basiswirkung ausgelegt ist, welche von den Basiswirkungen der anderen Basisgläser der Serie unterschiedlich ist,
jedes Basisglas der Serie zumindest ein diffraktives Basisgitter (14) aufweist, welches derart ausgelegt ist, dass der maximale Farbsaum eines aus dem jeweiligen Basisglas hergestellten fertigen Brillenglas mit der Basiswirkung innerhalb eines vorgegebenen Bereichs des Basisglases mit einem Durchmesser von zumindest 40 mm kleiner oder gleich einem vorgegebenen Schwellwert von 0,5 cm/m ist; wobei der Farbsaum durch die wellenlängenabhängige prismatische Wirkung der refraktiven Grenzflächen des Brillenglases verursacht wird,
und wobei ferner
jedem der Basisgläser der Serie jeweils ein Korrekturbereich (30) derart zugeordnet ist, dass das Basisgitter des Basisglases in dem jeweiligen Korrekturbereich den Farbsaum eines Brillenglases mit einer Wirkung innerhalb dieses Korrekturbereichs derart korrigiert, dass der Farbsaum des Brillenglases innerhalb des vorgegebenen Bereichs des Brillenglases kleiner oder gleich dem vorgegebenen Schwellwert ist; und
der Wirkungsabstand der Basisgläser der Serie derart ausgelegt ist, dass die Korrekturbereiche der einzelnen Basisgläser einen vorgegebenen Wirkungsbereich abdecken;
wobei der maximal vorkommende Abstand $|\Delta M_{0G}|$ der sphärischen Äquivalente der Basisgläser der Serie die Be-

dingung $\left|\Delta M_{0G}\right| \leq 2v_d \dfrac{FS_T}{r_T} - Zyl_{\max}$ erfüllt, und wobei

$v_d$ die Abbezahl der Basisgläser;
$FS_T$ den vorgegebenen Schwellwert;
$2{\cdot}r_T$ den Durchmesser des vorgegebenen Bereichs;
$Zyl_{\max}$ den maximal vorkommenden Astigmatismus bezeichnen.

**9.** Serie von Basisgläsern nach Anspruch 8, wobei der maximale Farbsaum innerhalb des vorgegebenen Bereichs des Brillenglases kleiner oder gleich 0,4 cm/m ist, und besonders bevorzugt kleiner oder gleich 0,12 cm/m ist.

**10.** Serie von Basisgläsern nach einem der Ansprüche 8 oder 9, wobei der vorgegebene Wirkungsbereich sphärische Wirkungen von -12 dpt bis +12 dpt und zylindrische Wirkungen bis 4 dpt, vorzugsweise bis zu 6 dpt umfasst.

**11.** Serie von Basisgläsern nach einem der Ansprüche 8 bis 10, wobei die Anzahl der Basisgläser zwischen 5 und 20 ist; und/oder wobei die Basisgläser Einstärkengläser, Mehrstärkengläser oder Progressivgläser sind.

**12.** Serie von Basisgläsern nach einem der Ansprüche 8 bis 11, wobei das Basisgitter (14) auf der Vorderfläche und/oder auf der Rückfläche von jedem der Basisgläser aufgebracht ist, oder wobei das Basisgitter (14) auf zumindest einer Grenzfläche im Inneren eines Compound-Systems umfassend einen Grundglas und einen Deckglas aufgebracht ist.

**13.** Serie von Basisgläsern nach einem der Ansprüche 8 bis 11, wobei das zumindest ein diffraktives Basisgitter (14) ein diffraktives Gitter mit elliptisch oder rotationssymmetrisch verlaufenden Gitterlinien ist.

**14.** Serie von Basisgläsern nach Anspruch 13, wobei die Gitterlinien rotationssymmetrisch sind und für den Abstand der Gitterlinien jedes der Basisgitter (14) als Funktion des radialen Abstands d($r$) von der optischen oder geometrischen Mitte des jeweiligen Basisglases gilt:

$$d(r) = \frac{m(\lambda_F - \lambda_C)v_d}{S_{\mathrm{ref},0}(\lambda_d)} \cdot \frac{1}{r},$$

wobei

$S_{\mathrm{ref},0}(\lambda_d)$ den refraktiven Anteil der dioptrischen Wirkung des Basisglases bei einer Wellenlänge $\lambda_d$ ;
$v_d$ die Abbezahl der Basisgläser;
$\lambda_F$ die F-Fraunhofer Linie, welche in die Definition der Abbezahl eingeht;
$\lambda_C$ die C-Fraunhofer Linie, welche in die Definition der Abbezahl eingeht; und

$m$, $m=\pm 1, \pm 2,...$ die Beugungsordnung

bezeichnen.

15. Serie von Basisgläsern nach einem der Ansprüche 8 bis 14, wobei die Gitterstrukturen der einzelnen Basisgitter (14) durch schaltbare Strukturen verwirklicht werden.

16. Verfahren zum Herstellen eines Brillenglases, umfassend die Schritte
Erfassen von Rezeptdaten eines Brillenträgers, wobei die Rezeptdaten zumindest eine sphärische Rezeptwirkung umfassen;
Bestimmen der Sollwirkung des Brillenglases in zumindest einem vorgegebenen Bezugspunkt des Brillenglases in Abhängigkeit von den erfassten Rezeptdaten;
Auswahl eines Basisglases aus einer Serie von Basisgläsern mit den Merkmalen gemäß einem der Ansprüche 8 bis 15 in Abhängigkeit von den erfassten Rezeptdaten oder von der Sollwirkung des Brillenglases;
Bearbeiten des Basisglases derart, dass die Wirkung des fertig bearbeiteten Brillenglas in dem zumindest einen Bezugspunkt im Wesentlichen gleich der zuvor bestimmten Sollwirkung in diesem Bezugspunkt ist.

17. Vorrichtung zum Herstellen eines Brillenglases, umfassend
Erfassungsmittel zum Erfassen von Rezeptdaten eines Brillenträgers, wobei die Rezeptdaten zumindest eine sphärische Rezeptwirkung umfassen;
Sollwirkungs-Berechnungsmittel zum Bestimmen der Sollwirkung des Brillenglases in zumindest einem vorgegebenen Bezugspunkt des Brillenglases in Abhängigkeit von den erfassten Rezeptdaten;
Auswahlmittel zur Auswahl eines Basisglases aus einer Serie von Basisgläsern mit den Merkmalen gemäß einem der Ansprüche 8 bis 15 in Abhängigkeit von den erfassten Rezeptdaten oder von der Sollwirkung des Brillenglases;
Bearbeitungsmittel zum Bearbeiten des Basisglases derart, dass die Wirkung des fertig bearbeiteten Brillenglas in dem zumindest einen Bezugspunkt im Wesentlichen gleich der zuvor bestimmten Sollwirkung in diesem Bezugspunkt ist.

18. Serie von Brillengläsern mit unterschiedlichen Wirkungen, welche einen Wirkungsbereich von zumindest -12 dpt bis +12 dpt der sphärischen Wirkung abdecken, wobei jedes Brillenglas der Serie zumindest ein diffraktives Gitter (14) aufweist, und wobei die Anzahl der unterschiedlichen Gitter (14) aller Brillengläser der Serie kleiner als die Anzahl der Brillengläser ist, und
wobei der maximale Farbsaum jedes der Brillengläser der Serie innerhalb eines vorgegebenen Bereichs mit einem Durchmesser von zumindest 40 mm kleiner oder gleich einem vorgegebenen Schwellwert von 0,5 cm/m ist; und
wobei der maximal vorkommende Abstand $|\Delta M_{0G}|$ der sphärischen Äquivalente der Basisgläser der Serie die Be-

$$\text{dingung } \left|\Delta M_{0G}\right| \leq 2\nu_d\,\frac{FS_T}{r_T} - Zyl_{\max} \text{ erfüllt, und wobei}$$

$\nu_d$ die Abbezahl der Basisgläser;
$FS_T$ den vorgegebenen Schwellwert;
$2 \cdot r_T$ den Durchmesser des vorgegebenen Bereichs;
$Zyl_{\max}$ den maximal vorkommenden Astigmatismus bezeichnen.

19. Serie von Brillengläsern nach Anspruch 18, wobei der vorgegebene Wirkungsbereich ferner zylindrische Wirkungen bis 4 dpt, vorzugsweise bis zum 6 dpt umfasst; und/oder wobei die Anzahl der unterschiedlichen Gitter zwischen 5 und 20 ist.

20. Serie von Brillengläsern nach einem der Ansprüche 18 bis 19, wobei die Brillengläser Einstärkengläser, Mehrstärkengläser oder Progressivgläser sind.

21. Serie von Brillengläsern nach einem der Ansprüche 18 bis 20, wobei das zumindest eine, diffraktive Gitter (14) eines jeden Brillenglases der Serie ein diffraktives Gitter mit elliptisch oder rotationssymmetrisch verlaufenden Gitterlinien ist.

22. Serie von Brillengläsern nach einem der Ansprüche 18 bis 21, wobei die Gitterstrukturen der einzelnen Basisgitter durch schaltbare Strukturen verwirklicht werden.

**Claims**

1. Method for producing a series of base lenses which cover a specified power range, wherein
all base lenses in the series are semifinished spectacle lenses;
each base lens in the series has a base power different from the base powers of the other base lenses in the series; and
each base lens in the series has at least one base diffraction grating (14),
wherein the method comprises the steps of:

assigning, in each case, a correction range (30) to each of the base lenses in the series,
setting the base powers of each base lens in the series, wherein the base powers are set such that the correction ranges (30) of the individual base lenses cover the specified power range;
calculating the base grating (14) of each base lens in the series so as to minimise the colour fringe of a finished spectacle lens, which is produced from the particular base lens and has the set base power, in a specified region of the spectacle lens, wherein the colour fringe is caused by the wavelength-dependent prismatic effect of the refractive interface of the spectacle lens,
wherein the base grating (14) of the base lens in the particular correction range (30) corrects the colour fringe of a spectacle lens having a power within said correction range such that the colour fringe of the spectacle lens within a specified region of the spectacle lens is smaller than or equal to a specified threshold value;
wherein the specified region of the spectacle lens, within which the maximum colour fringe is smaller than or equal to the specified threshold value, has a diameter of at least 40 mm; and wherein the specified threshold value is 0.5 cm/m, preferably 0.4 cm/m and particularly preferably 0.12 cm/m;

wherein the base powers are set such that the condition $\left|\Delta M_{0G}\right| \leq 2\nu_d \dfrac{FS_T}{r_T} - Zyl_{\max}$ applies to the

maximum distance $\left|\Delta M_{0G}\right|$ between the spherical equivalents of the base lenses in the series, and wherein

$\nu_d$ is the Abbe number of the base lenses;
$FS_T$ is a specified threshold value;
$2 \cdot r_T$ is the diameter of a specified region of the particular base lens, in which the maximum permissible colour fringe is smaller than or equal to the threshold value $FS_T$; and
$Zyl_{\max}$ is the maximum occurring astigmatism in the power range to be covered.

2. Method according to claim 1, wherein the base lenses are spherocylindrical or spherical single-vision lenses.

3. Method according to either claim 1 or claim 2, wherein calculating the base grating comprises a simultaneous optimisation of at least one of the refractive surfaces of the base lens and of the base grating (14).

4. Method according to any of the preceding claims, wherein the grating lines of the particular base grating (14) are elliptical or rotationally symmetrical.

5. Method according to claim 4, wherein the grating lines of the particular base grating (14) are rotationally symmetrical, and wherein the distance between the grating lines of each of the base gratings (14) is calculated as a function of the radial distance $d(r)$ between the optical or geometric centre according to the formula

$$d(r) = \frac{m(\lambda_F - \lambda_C)\nu_d}{S_{\mathrm{ref},0}(\lambda_d)} \cdot \frac{1}{r},$$

wherein

$S_{\mathrm{ref},0}(\lambda_d)$ is the refractive portion of the dioptric power of the base lens at a wavelength $\lambda_d$;
$\nu_d$ is the Abbe number of the base lenses;
$\lambda_F$ is the F-Fraunhofer line, which is included in the definition of the Abbe number;
$\lambda_C$ is the C-Fraunhofer line, which is included in the definition of the Abbe number; and
$m$ is a specified order of diffraction.

6. Method according to any of the preceding claims, wherein the power range to be covered comprises spherical powers of -12 dpt to +12 dpt and cylindrical powers up to 4 dpt, preferably up to 6 dpt.

7. Device for producing a series of base lenses which cover a specified power range, wherein
all base lenses in the series are semifinished spectacle lenses;
each base lens in the series has a base power different from the base powers of the other base lenses in the series; and
each base lens comprises at least one base diffraction grating (14),
comprising
base grating-calculation means which are designed to carry out a method for calculating the base grating (14) of each of the spectacle lenses in the series, wherein the method comprises:

assigning, in each case, one correction range (30) to each of the base lenses in the series;
setting the base powers of each base lens in the series, wherein the base powers are set such that the correction ranges (30) of the individual base lenses cover the specified power range;
calculating the base grating of each base lens in the series so as to minimise the colour fringe of a finished spectacle lens which is produced from the particular base lens and has the set base power in a specified region of the spectacle lens, wherein the colour fringe is caused by the wavelength-dependent prismatic effect of the refractive interface of the spectacle lens,
wherein the base grating (14) of the base lens in the particular correction range (30) corrects the colour fringe of a spectacle lens having a power within said correction range such that the colour fringe of the spectacle lens within a specified region of the spectacle lens is smaller than or equal to a specified threshold value; and wherein the specified region of the spectacle lens, within which the maximum colour fringe is smaller than or equal to the specified threshold value, has a diameter of at least 40 mm;

and wherein the specified threshold value is 0.5 cm/m, preferably 0.4 cm/m and particularly preferably 0.12 cm/m,

wherein the base powers are set such that the condition $\left|\Delta M_{0G}\right| \leq 2v_d \dfrac{FS_T}{r_T} - Zyl_{max}$ applies to the maximum

distance $\left|\Delta M_{0G}\right|$ between the spherical equivalents of the base lenses of the series, and wherein

$v_d$ is the Abbe number of the base lenses;
$FS_T$ is a specified threshold value;
$2 \cdot r_T$ is the diameter of a specified region of the particular base lens, in which the maximum permissible colour fringe is smaller than or equal to the threshold value $FS_T$; and
$Zyl_{max}$ is the maximum occurring astigmatism in the power range to be covered.

8. Series of base lenses comprising at least two base lenses, wherein
all base lenses in the series are semifinished spectacle lenses;
each base lens in the series has a base power different from the base powers of the other base lenses in the series,
each base lens in the series has at least one base diffraction grating (14) which is designed such that the maximum colour fringe of a spectacle lens, which lens is produced from the particular base lens and has a base power within a specified region of the spectacle lens that has a diameter of at least 40 mm, is smaller than or equal to a specified threshold value of 0.5 cm/m; wherein the colour fringe is caused by the wavelength-dependent prismatic effect of the refractive interface of the spectacle lens,
and wherein, in addition,
each of the base lenses in the series is assigned one correction range (30) such that the base grating of the base lens in the respective correction range corrects the colour fringe of a spectacle lens having a power within this correction range such that the colour fringe of the spectacle lens within the specified region of the spectacle lens is smaller than or equal to the specified threshold value; and
the power distance between the base lenses in the series is designed such that the correction ranges of the individual base lenses cover a specified power range;
wherein the maximum occurring distance $\left|\Delta M_{0G}\right|$ between the spherical equivalent of the base lenses in the series meets the condition $\left|\Delta M_{0G}\right| \leq 2v_d \dfrac{FS_T}{r_T} - Zyl_{max}$

, and wherein

$v_d$ is the Abbe number of the base lenses;
$FS_T$ is the specified threshold value;
$2 \cdot r_T$ is the diameter of the specified region;
$Zyl_{max}$ is the maximum occurring astigmatism.

9. Series of base lenses according to claim 8, wherein the maximum colour fringe within the specified region of the spectacle lens is smaller than or equal to 0.4 cm/m and particularly preferably smaller than or equal to 0.12 cm/m.

10. Series of base lenses according to either claim 8 or claim 9, wherein the specified power range comprises spherical powers of from -12 dpt to +12 dpt and cylindrical powers up to 4 dpt, preferably up to 6 dpt.

11. Series of base lenses according to any of claims 8 to 10, wherein the number of base lenses is between 5 and 20; and/or wherein the base lenses are single-vision lenses, multifocal lenses or progressive lenses.

12. Series of base lenses according to any of claim 8 to 11, wherein the base grating (14) is applied to the front surface and/or to the back surface of each of the base lenses, or wherein the base grating (14) is applied to at least one interface within a compound system comprising a main lens and a cover lens.

13. Series of base lenses according to any of claims 8 to 11, wherein the at least one base diffraction grating (14) is a diffraction grating having elliptically or rotationally symmetrically extending grating lines.

14. Series of base lenses according to claim 13, wherein the grating lines are rotationally symmetrical and, for the distance between the grating lines of each of the base gratings (14) as a function of the radial distance $d(r)$ from the optical or geometric centre of the particular base lens, the following applies:

$$d(r) = \frac{m(\lambda_F - \lambda_C)\nu_d}{S_{\mathrm{ref},0}(\lambda_d)} \cdot \frac{1}{r},$$

wherein

$S_{\mathrm{ref},0}(\lambda_d)$ is the refractive portion .of the dioptric power of the base lens at a wavelength $\lambda_d$;
$\nu_d$ is the Abbe number of the base lenses;
$\lambda_F$ is the F-Fraunhofer line, which is included in the definition of the Abbe number;
$\lambda_C$ is the C-Fraunhofer line, which is included in the definition of the Abbe number; and
$m$, $m=\pm 1, \pm 2,...$ is the order of diffraction.

15. Series of base lenses according to any of claims 8 to 14, wherein the grating structures of the individual base grating (14) are achieved by switchable structures.

16. Method for producing a spectacle lens, comprising the steps of:

acquiring prescription data for a spectacle wearer, wherein the prescription data comprise at least one spherical prescription power;
determining the target power of the spectacle lens in at least one specified reference point of the spectacle lens depending on the acquired prescription data;
selecting a base lens from a series of base lenses having the features according to any of claims 8 to 15 depending on the acquired prescription data or on the target power of the spectacle lens;
machining the base lens such that the power of the finished spectacle lens in the at least one reference point is substantially equal to the previously determined target power in said reference point.

17. Device for producing a spectacle lens, comprising
acquisition means for acquiring prescription data for a spectacle wearer, wherein the prescription data comprise at least one spherical prescription power;
target power calculation means for determining the target power of the spectacle lens in at least one specified reference point of the spectacle lens depending on the acquired prescription data;
selection means for selecting a base lens from a series of base lenses having the features according to any of claims 8 to 15 depending on the acquired prescription data or on the target power of the spectacle lens;
machining means for machining the base lens such that the power of the finished spectacle lens in the at least one reference point is substantially equal to the previously determined target power in said reference point.

18. Series of spectacle lenses having different powers which cover a power range of from at least -12 dpt to +12 dpt of the spherical power, wherein each spectacle lens in the series has at least one diffraction grating (14) and wherein the number of different gratings (14) of all spectacle lenses in the series is smaller than the number of spectacle lenses, and
wherein the maximum colour fringe of each of the spectacle lenses in the series within a specified region having a diameter of at least 40 mm is smaller than or equal to a specified threshold value of 0.5 cm/m; and
wherein the maximum occurring distance $|\Delta M_{0G}|$ between the spherical equivalents of the base lenses in the series meets the condition $\left|\Delta M_{0G}\right| \leq 2 v_d \dfrac{FS_T}{r_T} - Zyl_{\max}$ ,' and wherein

$v_d$ is the Abbe number of the base lenses;
$FS_T$ is the specified threshold value;
$2 \cdot r_T$ is the diameter of the specified region;
$Zyl_{\max}$ is the maximum occurring astigmatism.

19. Series of spectacle lenses according to claim 18, wherein the specified power range further comprises cylindrical powers of up to 4 dpt, preferably of up to 6 dpt; and/or wherein the number of different gratings is between 5 and 20.

20. Series of spectacle lenses according to any of claims 18 to 19, wherein the spectacle lenses are single-vision lenses, multifocal lenses or progressive lenses.

21. Series of spectacle lenses according to any of claims 18 to 20, wherein the at least one diffraction grating (14) of each spectacle lens in the series is a diffraction grating having elliptically or rotationally symmetrically extending grating lines.

22. Series of spectacle lenses according to any of claims 18 to 21, wherein the grating structures of the individual base gratings are achieved by switchable structures.

## Revendications

1. Procédé de fabrication d'une série de verres de base, lesquels couvrent une zone d'effet prédéfinie, dans lequel tous les verres de base de la série sont des verres de lunette semi-finis ;
chaque verre de base de la série est mis au point pour un effet de base différent des effets de base des autres verres de base de la série ; et
chaque verre de base de la série comprend au moins un réseau de diffraction de base (14),
dans lequel le procédé comprend les étapes :

d'association d'une zone de correction (30) respective à chacun des verres de base de la série,
de détermination des effets de base de chaque verre de base de la série, dans lequel les effets de base sont déterminés de telle manière que les zones de correction (30) des verres de base individuels couvrent la zone d'effet prédéfinie ;
de calcul du réseau de diffraction de base (14) de chaque verre de base de la série, de manière à réduire au minimum la frange colorée d'un verre de lunette fini fabriqué à partir du verre de base respectif et présentant l'effet de base déterminé dans une zone prédéfinie du verre de lunette, dans lequel la frange colorée est provoquée par l'effet prismatique dépendant des longueurs d'onde des surfaces limites réfringentes du verre de lunette,
dans lequel le réseau de diffraction de base (14) du verre de base dans la zone de correction (30) respective corrige la frange colorée d'un verre de lunette avec un effet à l'intérieur de cette zone de correction de telle manière que la frange colorée du verre de lunette à l'intérieur d'une zone prédéfinie du verre de lunette est inférieure ou égale à une valeur seuil prédéfinie ;
dans lequel la zone prédéfinie du verre de lunette, à l'intérieur de laquelle la frange colorée maximale est inférieure ou égale à la valeur seuil prédéfinie, présente un diamètre d'au moins 40 mm ; et dans lequel la valeur seuil prédéfinie atteint 0,5 cm/m, de préférence 0,4 cm/m, et de manière particulièrement préférée 0,12 cm/m ; dans lequel la détermination des effets de base est réalisée de telle manière que pour l'écart maximal $|\Delta M_{0G}|$ de l'équivalent sphérique des verres de base de la série, la condition

$$|\Delta M_{0G}| \leq 2v_d \frac{FS_T}{r_T} - Zyl_{max}$$

s'applique, et dans lequel $v_d$ désigne le nombre d'Abbe des verres de base ;
$FS_T$ une valeur seuil prédéfinie ;

$2 \cdot r_T$ le diamètre d'une zone prédéfinie du verre de base respectif, dans laquelle la frange colorée maximale admissible est inférieure ou égale à la valeur seuil $FS_T$ ; et
$Zyl_{max}$ l'astigmatisme maximal dans la zone d'effet destinée à être couverte.

2. Procédé selon la revendication 1, dans lequel les verres de base sont des verres unifocaux sphéro-cylindriques ou sphériques.

3. Procédé selon la revendication 1 ou 2, dans lequel le calcul du réseau de diffraction de base comporte une optimisation simultanée d'au moins une des surfaces réfringentes du verre de base et du réseau de diffraction de base (14).

4. Procédé selon l'une des revendications précédentes, dans lequel les lignes du réseau de diffraction de base (14) respectif sont elliptiques ou à symétrie de rotation.

5. Procédé selon la revendication 4, dans lequel les lignes du réseau de diffraction de base (14) respectif sont à symétrie de rotation et dans lequel l'écart entre les lignes de chacun des réseaux de diffraction de base (14) en fonction de l'écart radial $d(r)$ et le centre optique ou géométrique est calculé selon la formule

$$d(r) = \frac{m(\lambda_F - \lambda_C)v_d}{S_{ref,0}(\lambda_d)} \cdot \frac{1}{r} \,,$$

dans lequel

$S_{ref,0}(\lambda_d)$ désigne la part réfringente de l'effet dioptrique du verre de base pour une longueur d'onde $\lambda_d$ ;
$v_d$ le nombre d'Abbe des verres de base ;
$\lambda_F$ la raie F de Fraunhofer, laquelle intervient dans la définition du nombre d'Abbe ;
$\lambda_C$ la raie C de Fraunhofer, laquelle intervient dans la définition du nombre d'Abbe ; et
$m$ un ordre de diffraction prédéfini.

6. Procédé selon l'une des revendications précédentes, dans lequel la zone d'effet à couvrir comporte des effets sphériques allant de -12 dpt à +12 dpt et des effets cylindriques allant jusqu'à 4 dpt, de préférence jusqu'à 6 dpt.

7. Dispositif de fabrication d'une série de verres de base, lesquels couvrent une zone d'effet prédéfinie, dans lequel tous les verres de base de la série sont des verres de lunette semi-finis ;
chaque verre de base de la série est mis au point pour un effet de base différent des effets de base des autres verres de base de la série ; et
chaque verre de base comprend au moins un réseau de diffraction de base (14),
comportant
des moyens de calcul de réseau de diffraction de base, lesquels sont mis au point pour mettre en oeuvre un procédé de calcul du réseau de diffraction de base (14) de chacun des verres de base de la série, dans lequel le procédé comprend :

l'association d'une zone de correction (30) respective à chacun des verres de base de la série ;
la détermination des effets de base de chaque verre de base de la série, dans lequel les effets de base sont déterminés de telle manière que les zones de correction (30) des verres de base individuels couvrent la zone d'effet prédéfinie ;
le calcul du réseau de diffraction de base de chaque verre de base de la série, de manière à réduire au minimum la frange colorée d'un verre de lunette fini fabriqué à partir du verre de base respectif et présentant l'effet de base déterminé dans une zone prédéfinie du verre de lunette, dans lequel la frange colorée est provoquée par l'effet prismatique dépendant des longueurs d'onde des surfaces limites réfringentes du verre de lunette,

dans lequel le réseau de diffraction de base (14) du verre de base dans la zone de correction (30) respective corrige la frange colorée d'un verre de lunette avec un effet à l'intérieur de cette zone de correction de telle manière que la frange colorée du verre de lunette à l'intérieur d'une zone prédéfinie du verre de lunette est inférieure ou égale à une valeur seuil prédéfinie ; et dans lequel

la zone prédéfinie du verre de lunette, à l'intérieur de laquelle la frange colorée maximale est inférieure ou égale à la valeur seuil prédéfinie, présente un diamètre d'au moins 40 mm ; et dans lequel la valeur seuil prédéfinie atteint 0,5 cm/m, de préférence 0,4 cm/m, et de manière particulièrement préférée 0,12 cm/m,

dans lequel la détermination des effets de base est réalisée de telle manière que pour l'écart maximal $|\Delta M_{0\mathrm{G}}|$ de l'équivalent sphérique des verres de base de la série, la condition

$$|\Delta M_{0G}| \leq 2v_d \frac{FS_T}{r_T} - \dot{Z}yl_{max}$$

s'applique, et dans lequel $v_d$ désigne le nombre d'Abbe des verres de base ;
$FS_T$ une valeur seuil prédéfinie ;

$2 \cdot r_T$ *le diamètre d'une zone prédéfinie du verre de base respectif*, dans laquelle la frange colorée maximale admissible est inférieure ou égale à la valeur seuil $FS_T$ ; et
$Zyl_{\max}$ l'astigmatisme maximal dans la zone d'effet destinée à être couverte.

8. Série de verres de base comportant au moins deux verres de base, dans laquelle
tous les verres de base de la série sont des verres de lunette semi-finis ;
chaque verre de base de la série est mis au point pour un effet de base différent des effets de base des autres verres de base de la série,
chaque verre de base de la série comprend au moins un réseau de diffraction de base (14), lequel est conçu de telle manière que la frange colorée maximale d'un verre de lunette fini fabriqué à partir du verre de base respectif et présentant l'effet de base à l'intérieur d'une zone prédéfinie du verre de base présentant un diamètre d'au moins 40 mm est inférieure ou égale à une valeur seuil prédéfinie de 0,5 cm/m ; dans laquelle la frange colorée est provoquée par l'effet prismatique dépendant des longueurs d'onde des surfaces limites réfringentes du verre de lunette,

et dans laquelle en outre
une zone de correction (30) respective à chacun des verres de base est associée, de telle manière que le réseau de diffraction de base du verre de base dans la zone de correction respective corrige la frange colorée d'un verre de lunette avec un effet à l'intérieur de cette zone de correction de telle manière que la frange colorée du verre de lunette à l'intérieur de la zone prédéfinie du verre de lunette est inférieure ou égale à une valeur seuil prédéfinie ; et l'écart d'effet des verres de base de la série est mis au point de telle manière que les zones de correction des verres de base individuels couvrent une zone d'effet prédéfinie ;
dans laquelle l'écart maximal $|\Delta M_{0\mathrm{G}}|$ de l'équivalent sphérique des verres de base de la série satisfait à la condition

$$|\Delta M_{0G}| \leq 2v_d \frac{FS_T}{r_T} - Zyl_{max},$$

et dans laquelle

$v_d$ désigne le nombre d'Abbe des verres de base ;
$FS_T$ la valeur seuil prédéfinie ;
$2 \cdot r_T$ le diamètre de la zone prédéfinie ;
$Zylmax$ l'astigmatisme maximal.

9. Série de verres de base selon la revendication 8, dans laquelle la frange colorée maximale à l'intérieur de la zone prédéfinie du verre de lunette est inférieure ou égale à 0,4 cm/m, et de manière particulièrement préférée inférieure ou égale à 0,12 cm/m.

**10.** Série de verres de base selon l'une des revendications 8 ou 9, dans laquelle la zone d'effet prédéfinie comporte des effets sphériques allant de -12 dpt à +12 dpt et des effets cylindriques allant jusqu'à 4 dpt, de préférence jusqu'à 6 dpt.

**11.** Série de verres de base selon l'une des revendications 8 à 10, dans laquelle le nombre de verres de base est compris entre 5 et 20 ; et/ou dans laquelle les verres de base sont des verres unifocaux, des verres multifocaux ou des verres progressifs.

**12.** Série de verres de base selon l'une des revendications 8 à 11, dans laquelle le réseau de diffraction de base (14) est appliqué sur la surface avant et/ou sur la surface arrière de chacun des verres de base, ou dans laquelle le réseau de diffraction de base (14) est appliqué sur au moins une surface limite à l'intérieur d'un système composé comprenant un verre de fond et un verre de recouvrement.

**13.** Série de verres de base selon l'une des revendications 8 à 11, dans laquelle le ou les réseaux de diffraction de base (14) est un réseau de diffraction présentant des lignes de réseau de diffraction s'étendant de manière elliptique ou à symétrie de rotation.

**14.** Série de verres de base selon la revendication 13, dans laquelle les lignes de réseau de diffraction sont à symétrie de rotation et pour l'écart des lignes de chacun des réseaux de diffraction de base (14) en fonction de l'écart radial *d(r)* du centre optique ou géométrique du verre de base respectif,

$$d(r) = \frac{m(\lambda_F - \lambda_C)v_d}{S_{ref,0}(\lambda_d)} \cdot \frac{1}{r}$$

s'applique, dans laquelle

$S_{ref,0}(\lambda_d)$ désigne la part réfringente de l'effet dioptrique du verre de base pour une longueur d'onde $\lambda_d$ ;
$v_d$ le nombre d'Abbe des verres de base ;
$\lambda_F$ la raie F de Fraunhofer, laquelle intervient dans la définition du nombre d'Abbe ;
$\lambda_C$ la raie C de Fraunhofer, laquelle intervient dans la définition du nombre d'Abbe ; et
$m, m = \pm 1, \pm 2, ...$ l'ordre de diffraction.

**15.** Série de verres de base selon l'une des revendications 8 à 14, dans laquelle les structures de réseau de diffraction des réseaux de diffraction de base (14) individuels sont réalisées par des structures commutables.

**16.** Procédé de fabrication d'un verre de lunette, comprenant les étapes de
collecte des données d'ordonnance d'une personne portant les lunettes, dans lequel les données d'ordonnance comprennent au moins un effet d'ordonnance sphérique ;
détermination de l'effet théorique du verre de lunette dans au moins un point de référence prédéfini du verre de lunette en fonction des données d'ordonnance collectées ;
sélection d'un verre de base à partir d'une série de verres de base comprenant les caractéristiques selon l'une des revendications 8 à 15 en fonction des données d'ordonnance collectées ou de l'effet théorique du verre de lunette ;
traitement du verre de base, de telle manière que l'effet du verre de lunette, une fois celui-ci entièrement traité, dans le ou les points de référence soit sensiblement identique à l'effet théorique préalablement déterminé dans ce point de référence.

**17.** Dispositif de fabrication d'un verre de lunette, comprenant
des moyens de collecte servant à collecter des données d'ordonnance d'une personne portant les lunettes, dans lequel les données d'ordonnance comprennent au moins un effet d'ordonnance sphérique ;
des moyens de calcul d'effet théorique servant à déterminer l'effet théorique du verre de lunette dans au moins un point de référence prédéfini du verre de lunette en fonction des données d'ordonnance collectées ;
des moyens de sélection servant à sélectionner un verre de base à partir d'une série de verres de base comprenant les caractéristiques selon l'une des revendications 8 à 15 en fonction des données d'ordonnance collectées ou de l'effet théorique du verre de lunette ;
des moyens de traitement servant à traiter le verre de base, de telle manière que l'effet du verre de lunette, une fois celui-ci entièrement traité, dans le ou les points de référence soit sensiblement identique à l'effet théorique préalablement défini dans ce point de référence.

**18.** Série de verres de lunette présentant des effets différents, lesquels couvrent une zone d'effet allant d'au moins -12 dpt à +12 dpt de l'effet sphérique, dans laquelle chaque verre de lunette de la série comprend au moins un réseau de diffraction (14), et dans laquelle le nombre des réseaux de diffraction (14) différents de tous les verres de lunette de la série est inférieur au nombre des verres de lunette, et

dans laquelle la frange colorée maximale de chacun des verres de lunette de la série à l'intérieur d'une zone prédéfinie présentant un diamètre d'au moins 40 mm est inférieure ou égale à une valeur seuil prédéfinie de 0,5 cm/m ; et

dans laquelle l'écart maximal $|\Delta M_{0G}|$ de l'équivalent sphérique des verres de base de la série satisfait à la condition

$$|\Delta M_{0G}| \leq 2v_d \frac{FS_T}{r_T} - Zyl_{max},$$

et dans laquelle

$v_d$ désigne le nombre d'Abbe des verres de base ;
$FS_T$ la valeur seuil prédéfinie ;
$2 \cdot r_T$ le diamètre de la zone prédéfinie ;
$Zylmax$ l'astigmatisme maximal.

**19.** Série de verres de lunette selon la revendication 18, dans laquelle la zone d'effet prédéfinie comporte en outre des effets cylindriques allant jusqu'à 4 dpt, de préférence jusqu'à 6 dpt ; et/ou dans laquelle le nombre de réseaux de diffraction différents est compris entre 5 et 20.

**20.** Série de verres de lunette selon l'une des revendications 18 à 19, dans laquelle les verres de lunette sont des verres unifocaux, des verres multifocaux ou des verres progressifs.

**21.** Série de verres de lunette selon l'une des revendications 18 à 20, dans laquelle le ou les réseaux de diffraction (14) de chaque verre de lunette de la série est un réseau de diffraction présentant des lignes de réseau de diffraction s'étendant de manière elliptique ou à symétrie de rotation.

**22.** Série de verres de lunette selon l'une des revendications 18 à 21, dans laquelle les structures de réseau de diffraction des différents réseaux de diffraction sont réalisées par des structures commutables.

**Fig. 1**

**Fig. 2**

Fig. 3A          +          Fig. 3B          =          Fig. 3C

$Pr_{ref}$

20

$n(\lambda)$

$Pr_{diff}$

$m = +1$

$m = 0$

$m = -1$

$d$

14

Pr

$m = +1$

$m = 0$

$m = -1$

14

20

$n(\lambda)$

**Fig. 3A**          **Fig. 3B**          **Fig. 3C**

**Fig. 4**

Fig. 5A

Fig. 5B

Fig. 5C

Fig. 5D

EP 2 641 122 B1

Korrekturbereich zu $S_0 = -10dpt$ 30

Korrekturbereich zu $S_0 = -5dpt$ 30

Korrekturbereich zu $S_0 = 0dpt$ 30

Korrekturbereich zu $S_0 = +5dpt$ 30

Korrekturbereich zu $S_0 = +10dpt$ 30

$\dfrac{S}{dpt}$

$-12 \quad -10 \quad -8 \quad -6 \quad -4 \quad -2 \quad 0 \quad +2 \quad +4 \quad +6 \quad +8 \quad +10 \quad +12$

$\Delta S_{0G}$

$v_d \dfrac{FS_T}{r_T}$

**Fig. 6**

Fig. 7

**Fig. 8A**

**Fig. 8B**

Fig. 9

Fig. 10

**Fig. 11**

100

110

112

einfallende
Wellenfront

ausfallende
Wellenfront

102

Optisches
System

106

einfallender
Strahl

ausfallender
Strahl

**Fig. 12**

104 refraktive
Grenzfläche

100

refraktive
Grenzfläche

106

110

Brillenglas

112

einfallende
Wellenfront

ausfallende
Wellenfront

einfallender
Strahl

116

ausfallender
Strahl

102

106

**Fig. 13**

EP 2 641 122 B1

102 einfallender Strahl

Einfallsebene 124

120

brechende Fläche

$n$

$\varphi$

diffraktives Gitter

$d$

122

108-m

ausfallende Strahlen

$\varphi$

$m = +1$

$m = -1$

$m = 0$

$n'$

**Fig. 14**

$\bar{z}$

$-\varphi$

$z$

$\varphi_y$ $\varphi_x$

$\bar{x}$

$\chi$ $-\chi$

$x$

$-\chi$

$-\varphi$

$\chi$

$y$

$\bar{y}$

**Fig. 14A**

**Fig. 15**

**Fig. 16**

$\bar{z}^0$

Grundfläche 120
$\bar{z}^0(\bar{x}^0, \bar{y}^0)$

Gitterlinien 122a

einfallender
Strahl 102

$\bar{y}$

$\bar{z}$

$\bar{x}$

ausfallende
Strahlen 108-m

$\bar{y}^0$

$\psi^0(\bar{x}^0, \bar{y}^0)$

$\psi^0 = 0$

$\psi^0 = 1$

$\psi^0 = 2$

$\bar{x}^0$

projizierte
Gitterlinien 122b

Fig. 17

130

132

| Vermessung der Gitterprojektion (z.B. Mikroskopaufnahme):<br>- Gitterlinien<br>- Funktion $\mathbf{d}(\overline{x}^0, \overline{y}^0)$ |
|---|

Interpolation →

← Kurven mit $\psi^0(\overline{x}^0, \overline{y}^0) = const.$

| Phasenfunktion<br>$\psi^0(\overline{x}^0, \overline{y}^0)$ |
|---|

Festlegung $m, \lambda$ →

← Abspalten $m, \lambda$

| Phasenfunktion<br>$\Psi^0(\overline{x}^0, \overline{y}^0; \lambda, m)$ |
|---|

Festlegung Durchstoß-punkt:

Trsf. in d. globale System

Trsf. in das lokale System

Trsf. in d. globale System

Trsf. in das lokale System

| Phasenfunktion<br>$\psi(\overline{x}, \overline{y})$ |
|---|

Festlegung $m, \lambda$ →

← Abspalten $m, \lambda$

| Phasenfunktion<br>$\Psi(\overline{x}, \overline{y}; \lambda, m)$ |
|---|

134

136

**Fig. 18**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6070980 A
- EP 2108993 A1
- US 20040080710 A
- EP 1424049 A1
- WO 2005098518 A1
- DE 19701313 A1
- WO 2008089999 A1

**In der Beschreibung aufgeführte Nicht-Patentliteratur**

- **VON H. DIEPES ; R. BLENDOWSKE.** Optik und Technik der Brille. Optische Fachveröffentlichung GmbH, 2002, 485 ff
- **G. ESSER ; W. BECKEN ; W. MÜLLER ; P. BAUMBACH ; J. ARASA ; D. UTTENWEILER.** Derivation of the refraction equations for higher-order aberrations of local wavefronts at oblique incidence. *JOSA. A,* Februar 2010, vol. 27 (2), 218-237
- **G. ESSER ; W. BECKEN ; W. MÜLLER ; P. BAUMBACH ; J. ARASA ; D. UTTENWEILER.** Derivation of the refraction equations for higher-order aberrations of local wavefronts at oblique incidence. *J. Opt. Soc. Am. A,* Februar 2010, vol. 27 (2
- **W. BECKEN et al.** Brillengläser im Sport: Optimierung der Abbildungseigenschaften unter physiologischen Aspekten. *Z. Med. Phys.,* 2007, vol. 17, 56-66
- **G. ESSER.** Derivation of the refraction equations for higher-order aberrations of local wavefronts at oblique incidence. *JOSA A,* Februar 2010, vol. 27 (2), 218-237